# EUROPEAN PATENT APPLICATION

(11) **EP 1 139 156 A2**
(43) Date of publication of application: **04.10.2001**
(21) Application number: 01107729.4
(22) Date of filing: 30.03.2001
(51) Int. Cl.: G02F 1/1347, G02F 1/13

(54) **Multi-layer display panel**

(30) Priority: 31.03.2000 JP 2000099599; 31.03.2000 JP 2000099699
(71) Applicant: MINOLTA CO., LTD., Chuo-Ku, Osaka-Shi, Osaka 541-8556 (JP)
(72) Inventor: Ueda, Masahilde, Minolta Co., Ltd., Chuo-ku, Osaka-shi, Osaka 541-8556 (JP); Furukawa, Keiichi, Minolta Co., Ltd., Chuo-ku, Osaka-shi, Osaka 541-8556 (JP); Okada, Masakazu, Minolta Co., Ltd., Chuo-ku, Osaka-shi, Osaka 541-8556 (JP); Hotomi, Hideo, Minolta Co., Ltd., Chuo-ku, Osaka-shi, Osaka 541-8556 (JP)
(74) Representative: HOFFMANN - EITLE

(57) **Abstract**

A multi-layer display panel having first, second and third panel elements layered together. Each of the panel elements has first and second substrates opposed to each other. The first, second and third panel elements are overlaid together to locate the first substrate of the first panel element, the second substrate of the first panel element, the second substrate of the second panel element, the first substrate of the second panel element, the first substrate of the third panel element and the second substrate of the third panel element in this order. With respect to the center defined by the lap-over portion where the first, second and third panel elements are overlapping to each other,
an extending direction of the connection portion of the first substrate of the first panel element,
an extending direction of the connection portion of the second substrate of the first panel element
(= an extending direction of the connection portion of the second substrate of the second panel element),
an extending direction of the connection portion of the first substrate of the second panel element
(= an extending direction of the connection portion of the first substrate of the third panel element), and
an extending direction of the connection portion of the second substrate of the third panel element are angularly shifted in this order by 90 degrees.

## Description

This application is based on patent applications Nos. 2000-99599 Pat. and 2000-99699 pat. both filed in Japan, the contents of which are hereby incorporated by reference.

### BACKGROUND OF THE INVENTION

### Field of the Invention

The present invention relates to a multi-layer display panel (layered type display panel) including a plurality of panel elements layered together.

Also, the invention relates to a method of manufacturing a multi-layer display panel.

Further, the invention relates to a holding device for holding a multi-layer display panel, which can be used in the method of manufacturing the multi-layer display panel.

Further, the invention relates to a pressure-bonding jig to be used for mounting a driver element to a substrate, which can be used in the method of manufacturing the multi-layer display panel.

Further, the invention relates to a method of mounting a driver element, which can be used in the method of manufacturing the multi-layer display panel.

### Description of the Background Art

Display panels such as a liquid crystal display panel, an electro-luminescence (EL) display panel and a plasma display panel (PDP) have been known. In recent years, the liquid crystal display panels, EL display panels, and PDPs have been used in many cases instead of CRTs.

A multi-layer display panel including a plurality of display panels (panel elements) layered together has been proposed for color display. In the multi-layer display panel, neighboring panel elements are usually adhered together by an adhesive.

In either the single-layer display panel formed of only one panel element or the multi-layer display panel including the plurality of panel elements layered together, each panel element is connected to a driver device for driving the panel element.

For driving the panel element by the driver device, each of a substrate of the panel element is provided with an electrode. The electrode on the panel element substrate is usually connected to a driver element (e.g., driver IC) of the driver device. For example, a control portion (control unit) of the driver device applies a voltage to the electrode of the panel element via the driver element for driving the panel element to perform display.

The driver element is, for example, mounted directly on the substrate of the panel element, and is directly connected to the electrode on the panel element substrate. When directly mounting the driver element on the panel element substrate, a junction substrate for connecting the driver element to the control portion of the driver device is usually connected to the panel element substrate.

In some cases, a driver element carrier substrate, which carries the driver element, such as a TCP (Tape Carrier package) is connected to the panel element substrate for connecting the electrode on the panel element substrate to the driver element on the driver element carrier substrate.

When producing the display panel having only one panel element, producing steps are usually performed such that, after performing a step for forming the panel element, steps for mounting the driver element onto the panel element substrate and connecting the junction substrate are performed, or a step for connecting the driver element carrier substrate to the panel element substrate is performed.

However, a manner of mounting the driver element and others has not been proposed in connection with the manufacturing of the multi-layer display panel including the plurality of panel elements layered together.

For manufacturing the multi-layer display panel, it may be envisaged that the operation such as driver element mounting is performed after overlaying the panel elements together.

However, this manner may result in such a situation that the mounting surface, onto which the driver element is to be mounted, of the panel element substrate is hidden by the other panel element because the plurality of panel elements are layered in the multi-layer display panel. Further, the connection surface, to which the junction substrate is to be connected, of the panel element substrate may be hidden by the other panel element. If hidden, it is extremely difficult to perform mounting of the driver elements and connection of the junction substrate.

For producing the multi-layer display panel, it may be envisaged to employ such a manner that the driver element is mounted onto each panel element before overlaying the panel elements, and the junction substrate is connected to each panel element before overlaying the panel elements.

However, according to the above manner, bubbles may remain between the neighboring panel elements when overlaying and adhering the neighboring panel elements. This is because that the driver IC and junction substrate, which are already mounted and connected to the panel element, impede employment of a manner of preventing remaining of bubbles between the panel elements.

The above disadvantage occurs not only when directly mounting the driver IC onto the panel element substrate in the multi-layer display panel but also when connecting the driver element carrier substrate carrying the driver element to the panel element substrate.

### SUMMARY OF THE INVENTION

An object of the invention is to provide a multi-layer display panel, in which an operation such as driver element mounting (e.g., mounting of a driver element onto a panel element substrate, connection of a junction substrate to the panel element substrate and/or connection of a driver element carrier substrate carrying the driver element to the panel element substrate) can be performed easily.

Another object of the invention is to provide a multi-layer display panel, in which the operation such as driver element mounting can be easily performed after overlaying panel elements.

Still another object of the invention is to provide a method of manufacturing a multi-layer display panel, in which the operation such as driver element mounting can be performed easily.

Further another object of the invention is to provide a method of manufacturing a multi-layer display panel, in which the operation such as driver element mounting can be easily performed after overlaying panel elements.

A further object of the invention is to provide a holding device, which can be used for holding a multi-layer display panel when performing the operation such as driver element mounting in a process of manufacturing the multi-layer display panel.

A further object of the invention is to provide a holding device, which can hold a multi-layer display panel for facilitating the operation such as driver element mounting in a process of manufacturing the multi-layer display panel.

A further object of the invention is to provide a pressure-bonding jig, which can be utilized for mounting a driver element in a process of manufacturing a multi-layer display panel.

A further object of the invention is to provide a pressure-bonding jig (compressing bonding jig), which allows mounting of a driver element to a panel element substrate while suppressing breakage of an electrode of the panel element substrate in a process of manufacturing a multi-layer display panel.

A further object of the invention is to provide a pressure-bonding jig, which allows mounting of a driver element to a substrate while suppressing breakage of an electrode on the substrate.

A further object of the invention is to provide a driver element mounting method, in which mounting of a driver element can be performed easily and reliably when manufacturing a multi-layer display panel.

### (1) MULTI-LAYER DISPLAY PANEL

The invention provides a multi-layer display panel having a plurality of panel elements layered together. Each of the panel elements has first and second substrates opposed to each other. A column electrode is formed on an electrode formation surface of the first substrate of each of the panel elements. The electrode formation surface of the first substrate of the panel element is opposed to the second substrate of the same panel element. A row electrode is formed on an electrode formation surface of the second substrate of each of the panel elements. The electrode formation surface of the second substrate of the panel element is opposed to the first substrate of the same panel element. The first substrate of each of the panel elements has an overlap portion overlapping with the other substrates, and a connection portion extending from the overlap portion and used for connecting the column electrode on the first substrate to a driver element. The second substrate of each of the panel elements has an overlap portion overlapping with the other substrates, and a connection portion extending from the overlap portion and used for connecting the row electrode on the second substrate to a driver element.
(1-1) In an aspect of the invention, the multi-layer display panel has three, i.e., first, second and third panel elements layered together. The first, second and third panel elements are overlaid together to locate:
   the first substrate of the first panel element,
   the second substrate of the first panel element,
   the second substrate of the second panel element,
   the first substrate of the second panel element,
   the first substrate of the third panel element and
   the second substrate of the third panel element in this order. With respect to the center defined by the lap-over portion where the first, second and third panel elements are overlapping to each other,
   an extending direction of the connection portion of the first substrate of the first panel element,
   an extending direction of the connection portion of the second substrate of the first panel element
      (= an extending direction of the connection portion of the second substrate of the second panel element),
   an extending direction of the connection portion of the first substrate of the second panel element
      (= an extending direction of the connection portion of the first substrate of the third panel element), and
   an extending direction of the connection portion of the second substrate of the third panel element are angularly shifted in this order by 90 degrees.
(1-2) In another aspect of the invention, the multi-layer display panel has two, i.e., first and second panel elements layered together. With respect to the center defined by the lap-over portion where the first and second panel elements are overlapping to each other,
   an extending direction of the connection portion of the substrate, arranged at outer side, of the first panel element,
   an extending direction of the connection portion of the substrate, arranged at inner side, of the first panel element
      (= an extending direction of the connection portion of the substrate, arranged at inner side, of the second panel element), and
   an extending direction of the connection portion of the substrate, arranged at outer side, of the second panel element are angularly shifted in this order by 90 degrees.
(1-3) In still another aspect of the invention, the multi-layer display panel has two, i.e., first and second panel elements layered together. With respect to the center defined by the lap-over portion where the first and second panel elements are overlapping to each other,
   an extending direction of the connection portion of the first substrate of the first panel element,
   an extending direction of the connection portion of the second substrate of the first panel element,
   an extending direction of the connection portion of the first substrate of the second panel element and
   an extending direction of the connection portion of the second substrate of the second panel element are angularly shifted by 90 degrees in a predetermined order.

### (2) METHOD OF MANUFACTURING A MULTI-LAYER DISPLAY

The invention also provides a method of manufacturing a multi-layer display panel.
(2-1) In an aspect of the invention, the manufacturing method includes a preparing step and a connecting step.
   In the preparing step, a layered body including a plurality of panel elements layered together is prepared. Each of the panel elements of the layered body prepared in the preparing step includes a display region portion, and at least one connection portion extending from the display region portion and having an external connection electrode formation surface provided with an external connection electrode. The display region portions of the respective panel elements overlap with each other in the layered body prepared in the preparing step. The external connection electrode formation surface of the connection portion of each panel element is not hidden by any the other connection portion in the layered body prepared in the preparing step.
   In the connecting step, a wiring substrate provided with an electrode is connected to the connection portion of each of the panel elements, respectively, for connecting the electrode of the wiring substrate to the external connection electrode of the connection portion of the panel element. The connecting step is performed after the preparing step.
(2-2) In another aspect of the invention, the manufacturing method comprises a panel element forming step, an overlaying step and an after cut step.
   In the panel element forming step, each of the panel elements are formed using a first substrate provided with a column electrode at an electrode formation surface and a second substrate provided with a row electrode at an electrode formation surface.

In the overlaying step, the panel elements formed in the panel element forming step are overlaid together.

In the after cut step, at least one unnecessary portion is removed from each of the first and second substrates of each of the overlaid panel elements.

In the panel element forming step, as each of the first substrates, a substrate having an overlap portion finally overlapping with the other substrates, and four extending portions extending from the overlap portion in four directions angularly shifted by 90 degrees is used for forming the panel element.

In the panel element forming step, as each of the second substrates, a substrate having an overlap portion finally overlapping with the other substrates, and four extending portions extending from the overlap portion in four directions angularly shifted by 90 degrees is used for forming the panel element.

The after cut step is executed to remove at least one extending portion, as the unnecessary portion, among the four extending portions of the first substrate except for the extending portion to be used as a connection portion used for connecting the column electrode on the first substrate to a driver element.

The after cut step is also executed to remove at least one extending portion, as the unnecessary portion, among the four extending portions of the second substrate except for the extending portion to be used as a connection portion used for connecting the row electrode on the second substrate to a driver element.

### (3) HOLDING DEVICE

The invention also provides a holding device for holding a multi-layer display panel including a plurality of panel elements layered together.

In the multi-layer display panel held by the holding device, each of the panel elements has a pair of substrates. The multi-layer display panel has a lap-over portion where the panel elements are overlapping to each other, and a projected portion, projected from the lap-over portion, of the substrate of the panel element.

The holding device is used when mounting a driver element onto the projected portion of the substrate of the panel element or when connecting a third substrate to the projected portion of the substrate of the panel element.

The holding device comprises a holding jig having a first surface for laying the projected portion of the substrate of the panel element thereon, a second surface for laying the lap-over portion of the multi-layer display panel thereon, and a stepped portion formed between the first and second surfaces.

In the holding device, the stepped portion has a height equal to or larger than a maximum height, including a manufacturing error of the multi-layer display panel, between a surface, directly laid on the first surface of the holding jig, of the multi-layer display panel and a surface, directly laid on the second surface of the holding jig, of the multi-layer display panel.

### (4) PRESSURE-BONDING JIG (COMPRESSION BONDING JIG)

The invention also provides a pressure-bonding jig to be used for mounting a driver element having a bump onto a substrate.

The pressure-bonding jig comprises a pressure-bonding base member to be disposed at a back side of the substrate. The back side is opposite to a side, onto which the driver element is to be mounted, of the substrate.

In the pressure-bonding jig, the pressure-bonding base member has a raised portion in a position to be opposed to the bump of the driver element.

### (5) METHOD OF MOUNTING DRIVER ELEMENTS

The invention also provides a method for mounting driver elements in overlapping positions on two substrate surfaces, respectively.

The method comprises:
a provisional adhering step of provisionally adhering at least one of the driver elements to the substrate surface; and
a complete adhering step of simultaneously and completely adhering the two driver elements to the substrate surfaces.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1(A) is a schematic perspective view of an example of a multi-layer liquid crystal display panel (multi-layer LCD panel) according to the invention, in which three panel elements are layered, viewed from a front side, and Fig. 1(B) is a schematic perspective view of the LCD panel viewed from a back side;
Fig. 2(A) is a schematic plan showing the front side of the multi-layer LCD panel shown in Fig. 1(A), and Fig. 2(B) is a schematic plan showing the back side of the LCD panel;
Fig. 3(A) is a schematic cross section of the multi-layer LCD panel taken along line 3A-3A in Fig. 2(A), and Fig. 3(B) is a schematic cross section of the LCD panel taken along line 3B-3B;
Fig. 4 is a plan of the multi-layer LCD panel in Fig. 1(A), and shows a display region (display region portion);
Fig. 5 is a schematic block diagram showing an example of a driver device;
Fig. 6 is a schematic perspective view of the multi-layer LCD panel shown in Fig. 1(A) in a state that driver ICs are carried thereon;
Fig. 7 is an exploded view of the multi-layer LCD panel shown in Fig. 1(A);
Fig. 8 is a side view of the multi-layer LCD panel shown in Fig. 6 having a junction substrate in a folded form;
Fig. 9 is a schematic perspective view of another example of the multi-layer LCD panel according to the invention, in which three panel elements are layered;
Fig. 10 is a schematic cross section of still another example of the multi-layer LCD panel according to the invention, in which three panel elements are layered;
Fig. 11 is a schematic perspective view of yet another example of the multi-layer LCD panel according to the invention, in which three panel elements are layered;
Fig. 12(A) is a schematic perspective view showing, from a front side, an example of a multi-layer LCD panel according to the invention, in which two panel elements are layered, and Fig. 12(B) is a schematic perspective view showing a back side of the LCD panel;
Fig. 13(A) is a schematic perspective view showing, from a front side, another example of the multi-layer LCD panel according to the invention, in which two panel elements are layered, and Fig. 13(B) is a schematic perspective view showing a back side of the LCD panel;
Fig. 14(A) is a schematic perspective view showing, from a front side, still another example of the multi-layer LCD panel according to the invention, in which two panel elements are layered, and Fig. 14(B) is a schematic perspective view showing a back side of the LCD panel;
Fig. 15 is a schematic block diagram of an example of a driver device;
Fig. 16 is a flowchart schematically showing an example of a method of manufacturing the multi-layer LCD panel according to the invention;
Fig. 17 schematically shows an example of a process of forming a panel element;
Fig. 18 schematically shows an example of a process of overlaying panel elements;
Fig. 19 shows an layering order of the substrates in the step of overlaying the panel elements;
Fig. 20 shows portions to be removed in an after cut step;
Fig. 21 shows substrates subjected to half-cut;
Fig. 22 shows another example of a substrate configuration used in the panel element forming step;
Fig. 23 shows alignment marks provided on a connection portion of the substrate;
Figs. 24(A) - 24(C) show a manner of mounting a driver IC using an ACF;
Fig. 25 is a schematic cross section showing an example of a holding device and a holding jig according to the invention;
Fig. 26 shows a state of an multi-layer LCD panel held by the holding jig in Fig. 25 with a relationship of Ds≥Dp;
Fig. 27 shows a state of an multi-layer LCD panel held by the holding jig in Fig. 25 with a relationship of Ds<Dp;
Fig. 28(A) shows a state, in which a panel element substrate is curved due to its own curling property, Fig. 28(B) shows a state, in which a pushing member of the holding device pushes and holds the substrate, and Fig. 28(C) is a schematic plan of the pushing member;
Fig. 29 shows a multi-layer LCD panel, which has connection portions extending in the same extending direction and adhered to each other by an adhesive, set on the holding jig shown in Fig. 25;
Fig. 30 is a schematic cross section of other examples of the holding device and holding jig according to the invention;
Figs. 31(A) and 31(B) show a state, in which a bump of a driver IC breaks an electrode on a substrate;
Fig. 32(A) shows rounded bumps of the driver IC, and Fig. 32(B) shows a mounted state of the driver IC in Fig. 32(A);
Figs. 33(A) and 33(B) show a state, in which a driver IC is mounted using a pressure-bonding base member according to the invention;
Fig. 34 shows a state, in which an electrode is formed on a convex surface side of a substrate curved due to its own curling property;
Figs. 35(A) - 35(C) show a state, in which driver ICs are mounted on two substrate connection portions extending in the same direction, and the driver ICs are located in positions overlapping to each other; and
Fig. 36 shows a state, in which driver ICs are mounted on two substrate connection portions extending in the same direction, and the driver ICs are located in positions not overlapping to each other.

### DESCRIPTION OF THE PREFERRED EMBODIMENTS

### [1] MULTI-LAYER DISPLAY PANEL

In the following description, three types of multi-layer display panels, i.e., first, second and third types of multi-layer display panels are presented.

First of all, description will be given on matters common to the first, second and third types of multi-layer display panels. Thereafter, description will be given on features of each type of multi-layer display panel.

The multi-layer display panel of any type has a plurality of panel elements (panel cells), which are layered together. The multi-layer display panel of the first type has three panel elements layered together. The multi-layer display panel of the second or third type has two panel elements layered together.

For preventing shifting of positions, the neighboring panel elements may be adhered together by an adhesive such as a adhesive film, double-sided adhesive tape or liquid adhesive. If the neighboring panel elements are adhered to eliminate an air layer therebetween, an amount of transmitted light increases and the display quality is improved. The plurality of panel elements layered together may be held, e.g., by a holding member for preventing shifting of positions thereof.

The panel element may be, e.g., an liquid crystal display panel (LCD panel) of light transmission type, an LCD panel of light reflection type, an organic electro-luminescence display panel (organic EL display panel), an inorganic electro-luminescence display panel (inorganic EL display panel) or a plasma display panel (PDP).

In any types of multi-layer display panels, all the panel elements may be of the same kind, or may be of different kinds. In any one of the foregoing types, the multi-layer display panel may have a plurality of, e.g., the LCD panels of the light reflection type layered together. In the first type of multi-layer display panel having three panel elements layered together, these three panel elements may be panel elements for display in red, green and blue. This enables full-color or multi-color display.

In any types of multi-layer display panels, each of the panel elements has a pair of substrates, i.e., first and second substrates. In the panel elements, the first and second substrates are opposed to each other with a predetermined space therebetween. The substrate may be a resin substrate, a glass substrate or others. The resin substrate may take a film form or a sheet form. Employment of the resin film substrate(s) as the first and/or second substrate can reduce a whole thickness and a weight of the multi-layer display panel. The material for the resin substrate may be, e.g., polyether sulfone (PES), polycarbonate (PC), polyethylene terephthalate (PET), polyarylate (PA), polyether ether ketone (PEEK), acrylics(PMMA) or ABS.

In each of the panel element, a column electrode is formed on the first substrate, and a row electrode is formed on the second substrate. These column and row electrodes are provided for driving the panel element to perform display. In the following description, the first substrate carrying the column electrode may be referred to as a "column substrate". The second substrate carrying the row electrode may be referred to as a "row substrate".

The column substrate (first substrate) may be provided with an insulating layer, an orientation film and/or other layer(s) in addition to the column electrode, if necessary. Likewise, the row substrate (second substrate) may be provided with an insulating layer, an orientation film and/or other layer(s) in addition to the row electrode, if necessary.

The column electrode may include, e.g., a plurality of belt-like electrodes (belt-like electrode portions), which are parallel to each other, and are arranged at least in a display region with predetermined pitches. Likewise, the row electrode may include, e.g., a plurality of belt-like electrodes, which are parallel to each other, and are arranged at least in the display region with predetermined pitches. For example, the belt-like electrodes forming the column electrode and the belt-like electrodes forming the row electrode may be perpendicular to each other to form a so-called matrix structure.

The column and row electrodes (X-electrode and Y-electrode) may be provided, e.g., for performing simple matrix drive of the panel element.

The column and row electrodes may be provided for performing active matrix drive using, e.g., MIM (Metal Insulator Metal) elements. In this case, one of the column and row electrodes (belt-like electrodes forming the column or row electrode) may be connected to a plurality of MIM elements, and the belt-like electrodes of the other electrode may be arranged in the positions opposed to the respective MIM elements. The MIM elements may be formed on the substrate, which carries the electrode connected to the MIM elements.

The column and row electrodes may be provided for performing, e.g., 7-segment display or character display.

One of the column and row electrodes may be utilized as a so-called data electrode (signal electrode), and the other may be utilized as a so-called scanning electrode.

In any cases, the column electrode is formed on one of two surfaces of the column substrate (first substrate) of the panel element, and particularly on the surface opposed to the row substrate (second substrate) of the same panel element. Likewise, the row electrode is formed on one of two surfaces of the row substrate (second substrate) of the panel element, and particularly on the surface opposed to the column substrate (first substrate) of the same panel element.

The column electrode is to be connected to one or more driver element(s) for driving the panel element. Likewise, the row electrode is to be connected to one or more driver element(s) for driving the panel element. The driver element may be, e.g., a driver IC.

Each of the driver elements to be connected to the column electrode and the row electrode is a part of a driver device for driving the panel element. In addition to the driver element, the driver device may have, e.g., a control portion (control unit) for controlling driving of the driver element. The driver device having driver elements, which are to be connected to the column electrode and the row electrode, respectively, may be configured to drive the whole multi-layer display panel or to drive the panel element independently of the other panel element(s).

The column electrode may be connected, e.g., directly to the driver element on the column substrate carrying this column electrode. More specifically, the driver element may be directly mounted on the column substrate, and may be directly connected to the column electrode on the column substrate. Similarly, the row electrode may be directly connected to the driver element on the row substrate. In the case where the driver element is directly mounted on the column or row substrate of the panel element, a junction substrate or the like may be additionally connected to the panel element substrate for connecting the driver element mounted on the panel element substrate to the control portion of the driver device.

The column electrode may be indirectly connected to the driver element by connecting a driver element carrier substrate, which carries the driver element(s), such as a TCP (Tape Carrier Package) to the column substrate. Similarly, the row electrode may be indirectly connected to the driver element by connecting the driver element carrier substrate to the row substrate. In the case where the driver element carrier substrate is connected to the substrate of the panel element, a junction substrate may be connected to the driver element carrier substrate for connecting the driver element on the driver element carrier substrate to the control portion of the driver device. Alternatively, the driver element carrier substrate may be directly connected to the control portion of the driver device without interposing the junction substrate therebetween.

In any types of multi-layer display panels, the plurality of layered panel elements (three panel elements in the first type, two panel elements in the second and third types) are overlaid partially (not entirely) with each other. In the multi-layer display panel, at least a portion (typically, a majority) of a lap-over portion, where all the panel elements are overlapping to each other, of the multi-layer display panel may be utilized as a display region (display region portion). The lap-over portion where the panel elements are overlapping to each other may be typically rectangular. The display region may be typically rectangular.

More specifically, in any types of multi-layer display panels, each column substrate (first substrate) provided with the column electrode has an overlap portion overlapping with all the other substrate, and each row substrate (second substrate) provided with the row electrode has an overlap portion overlapping with all the other substrate.

In the first type of multi-layer display panel having three layered panel elements, the overlap portion of the column substrate overlaps with other five substrates (other two column substrates and three row substrates). The overlap portion of the row substrate overlaps with other five substrates (other three column substrates and two row substrates).

In the second and third types of multi-layer display panels each having the two layered panel elements, the overlap portion of the column substrate overlaps with other three substrates (other one column substrates and two row substrates). The overlap portion of the row substrate overlaps with other three substrates (other two column substrates and one row substrates).

In any types of multi-layer display panels, each of the column substrates has, in addition to the overlap portion, a connection portion extending in a predetermined extending direction from its overlap portion for connecting the column electrode to the driver element.

The connection portion of the column substrate may be utilized as follows. In the case where the driver element is to be directly mounted on the column substrate, this driver element is to be mounted on the connection portion of the column substrate for connecting the column electrode to the driver element on the column substrate. In the case where the driver element is not to be directly mounted on the column substrate, and the driver element carrier substrate, carrying the driver element, is to be connected to the column substrate, this driver element carrier substrate is to be connected to the connection portion of the column substrate for connecting the column electrode on the column substrate to the driver element on the driver element carrier substrate. In the case where the driver element is not to be directly mounted on the column substrate, and a junction substrate not carrying the driver element is to be connected to the column substrate, this junction substrate is to be connected to the connection portion of the column substrate for connecting the column electrode on the column substrate to the driver element in the position other than the column substrate via the junction substrate.

Likewise, in any types of multi-layer display panels, each of the row substrates has, in addition to the overlap portion, a connection portion extending in a predetermined extending direction from its overlap portion for connecting the row electrode to the driver element.

The extending direction in which the connection portion of the column substrate extends from the overlap portion may be parallel, e.g., to the direction in which the column electrode extends in the display region. Likewise, the extending direction in which the connection portion of the row substrate extends from the overlap portion may be parallel, e.g., to the direction in which the row electrode extends in the display region.

The connection portion of the column substrate is provided at its column electrode formation surface with an electrode pattern for connecting the column electrode to the driver element. In the case where the driver element is to be mounted directly on the column substrate, this electrode pattern may be configured, e.g., for transforming the column electrode pitch in the display region to an output lead pitch of the driver element. Likewise, the connection portion of the row substrate is provided at its row electrode formation surface with an electrode pattern for connecting the row electrode to the driver element.

The connection portion of the column electrode does not overlap with all the other substrates. Likewise, the connection portion of the row electrode does not overlap with all the other substrates. Each of the connection portions of the column and row substrates may overlap with one or more other substrate(s) but not all of them.

The column substrate and the row substrate of the same panel element overlap only partially with each other. The overlap portion of the column substrate of the panel element (i.e., the column substrate portion overlapping with all the other substrates including the substrates of the other panel element(s)) is at least a portion (typically, a whole or major portion) of the portion overlapping with the row substrate of the same panel element. Likewise, the overlap portion of the row substrate of the panel element (i.e., the row substrate portion overlapping with all the other substrates including the substrates of the other panel element(s)) is at least a portion (typically, a whole or major portion) of the portion overlapping with the column substrate of the same panel element.

The column substrate and the row substrate of the same panel element may be rectangular, and may be overlaid to form an L-shaped form. In this case, a portion, not overlapping with the row substrate, of the column substrate may be utilized as the connection portion for connection to the driver element, and a portion, not overlapping with the column substrate, of the row substrate may be utilized as the connection portion for connection to the driver element.

The column and row substrates of the same panel element may be, e.g., rectangular, and may be overlaid to form a cross ("+" form). In this case, one of the two spaced portions, not overlapping with the row substrate, of the column substrate may be utilized as the connection portion, and one of the two spaced portions, not overlapping with the column substrate, of the row substrate may be utilized as the connection portion. In this case, however, the other portion between the two portions, not overlapping with the row substrate, of the column substrate, and thus the portion not utilized as the connection portion may have a width, which is restricted as will be described later. Likewise, the other portion between the two portions, not overlapping with the column substrate, of the row substrate, and thus the portion not utilized as the connection portion may have a width, which is restricted as will be described later.

In any types of multi-layer display panels, the connection portions of the column and row substrates of the same panel element extend in the directions forming an angle of 90 degrees therebetween with respect to a center defined by the lap-over portion where all the panel elements are overlapping to each other.

In the following description, the extending direction in which the connection portion of the column or row substrate extends with respect to the center defined by the lap-over portion, where all the panel elements are overlapping to each other (i.e., where all the panel element substrates are overlapping to each other), of the multi-layer display panel may be merely referred to as extending direction of the connection portion of the column or row substrate. In other words, the extending direction of the connection portion of the column substrate is the direction in which this connection portion extends from the overlap portion of this column substrate. Likewise, the extending direction of the connection portion of the row substrate is the direction in which this connection portion extends from the overlap portion of this row substrate.

In any types of multi-layer display panels, features reside in a layering order of the column and row substrates of each panel element, and the extending direction of the connection portion of each substrate of each panel element.

Description is now given below, type by type basis, on the first, second and third types of multi-layer display panels.

### [1-1] FIRST TYPE OF MULTI-LAYER DISPLAY PANEL

The first type of multi-layer display panel has three, i.e., first, second and third panel elements layered together in this order.

Either the first or third panel element may be disposed on an observation side. Thus, the first panel element among the three panel elements may be disposed nearest to the observation side, or may be disposed remotest from the observation side. In either case, the second panel element among the three panel elements is disposed in the middle position.

In the first type of multi-layer display panel, the first, second and third panel elements are overlaid to locate the column substrates (first substrates) and the row substrates (second substrates) of these panel elements in the following order.

These substrates are aligned in the order of:
the column substrate of the first panel element,
the row substrate of the first panel element,
the row substrate of the second panel element,
the column substrate of the second panel element,
the column substrate of the third panel element and
the row substrate of the third panel element.

That is, these substrates are aligned in the order of the column substrate, row substrate, row substrate, column substrate, column substrate and row substrate. When viewed from the opposite side, these substrates are aligned in the order of the row substrate, column substrate, column substrate, row substrate, row substrate and column substrate.

Thus, the neighboring two substrates of the neighboring two panel elements are both the row substrates or the column substrates.

In the first type of multi-layer display panel, the neighboring two substrates of the neighboring two panel elements have the connection portions of the same extending direction.

More specifically, the extending direction of the connection portion of the row substrate of the first panel element is the same as that of the connection portion of the row substrate of the second panel element. Also, the extending direction of the connection portion of the column substrate of the second panel element is the same as that of the connection portion of the column substrate of the third panel element.

In the first type of multi-layer display panel,
(1) the extending direction of the connection portion of the column substrate of the first panel element,
(2) the extending direction of the connection portion of the row substrate of the first panel element
   (= the extending direction of the connection portion of the row substrate of the second panel element),
(3) the extending direction of the connection portion of the column substrate of the second panel element
   (= the extending direction of the connection portion of the column substrate of the third panel element), and
(4) the extending direction of the connection portion of the row substrate of the third panel element,
   are different to each other, and are angularly shifted by 90 degrees in this order.

Thus, the extending direction of the connection portion of the column substrate of the first panel element is different from those of all the other connection portions of the substrates. Thereby, the connection portion of the column substrate of the first panel element can be exposed without overlapping with the other substrate. More specifically, the column electrode formation surface of the connection portion of the column substrate of the first panel element can be exposed.

Likewise, the extending direction of the connection portion of the row substrate of the third panel element is different from those of all the other connection portions of the substrates. Thereby, the connection portion of the row substrate of the third panel element can be exposed. More specifically, the row electrode formation surface of the connection portion of the row substrate of the third panel element can be exposed.

The connection portions, neighboring to each other, of the row substrates of the first and second panel elements extend in the same direction, but it is possible to expose the row electrode formation surfaces of the connection portions of the row substrates of the first and second panel elements because of the following reasons. Even if these connection portions extending in the same direction have the same width in their extending direction, the electrode formation surfaces of these connection portions can be exposed.

This is owing to such a structure that the row substrate of the first panel element is formed on the row substrate surface opposed to the column substrate of the first panel element, and the row electrode of the second panel element is formed on the row substrate surface opposed to the column substrate of the second panel element. In other words, these row electrodes are not disposed between the row substrates of the first and second panel elements.

For the similar reasons, the column electrode formation surfaces of the connection portions of the column substrates of the second and third panel elements can be exposed although these connection portions extend in the same direction. Even if these connection portions extending in the same extending direction have the same width in their extending direction, the electrode formation surfaces of these connection portions can be exposed.

Thus, in the first type of multi-layer display panel, it is possible to expose all the electrode formation surfaces of the six connection portions of the first, second and third panel elements.

In the first type of multi-layer display panel, the electrode formation surface of the connection portion of each substrate of each panel element may be not fully hidden by the substrates of the other panel elements, and at least a portion (typically, a major or whole portion) of the electrode formation surface of the connection portion of each substrate of each panel element may be exposed.

Thereby, in the case where the driver element is to be directly mounted on the electrode formation surface of the connection portion, the driver element can be easily mounted onto any one of the connection portions in a state that the first, second and third panel elements are already layered together. Repairing of the mounting of the driver element can be also performed easily. In this case, the junction substrate for connecting the driver element to the control portion of the driver device can be also easily connected to the connection portion. Repairing of the connection of the junction substrate can be also performed easily.

In the case where the driver element carrier substrate carrying the driver element such as a TCP is to be connected to the connection portion of the panel element substrate, this connection can be easily performed in the state that the three panel elements are already layered together. In any one of the connection portions, the connection of the driver element carrier substrate can be easily performed. Repairing of this connection can be also easily performed.

In the first type of multi-layer display panel, the width of each connection portion in its extending direction is merely required to be of a minimum value required, e.g., for mounting the driver element in spite of the fact that the electrode formation surfaces of all the connection portions of the substrates can be exposed. Consequently, a frame width can be small.

One or more among the five substrates other than, e.g., the column substrate of the first panel element may be provided with one or more extending portion(s) extending from its overlap portion in the same direction as the extending direction of the connection portion of the column substrate of the first panel element, if the extending portion has such a width that the extending portion does not overlap with the whole connection portion of the column substrate of the first panel element, and more particularly, if the extending portion does not impede, e.g., the direct mounting of the driver element onto the connection portion of the column substrate of the first panel element. This is also true with respect to the extending directions of the connection portions of the other substrates. The above is also true with respect to the second and third types of multi-layer display panels.

### [1-2] SECOND TYPE OF MULTI-LAYER DISPLAY PANEL

The second type of multi-layer display panel has two, i.e., first and second panel elements layered together.

As described below, the second type of multi-layer display panel has the same structure as the first type of multi-layer display panel except that the first or third panel element is eliminated.

In the second type of multi-layer display panel, both inner substrates, arranged at inner side and neighboring to each other, of the first and second panel elements are the first substrates (column substrates) carrying the column electrodes, or the second substrates (row substrates) carrying the row electrodes.

More specifically, in the second type of multi-layer display panel, the four substrates of the first and second panel elements are layered in the following order.

These four substrates may be layered in the order of
the column substrate of the first panel element,
the row substrate of the first panel element,
the row substrate of the second panel element and
the column substrate of the second panel element. In this case, the row substrate of the first panel element and the row substrate of the second panel element are the inner substrates arranged at inner side, the column substrate of the first panel element and the column substrate of the second panel element are outer substrates arranged at outer side.

Alternatively, these four substrates may be layered in the order of
the row substrate of the first panel element,
the column substrate of the first panel element,
the column substrate of the second panel element and
the row substrate of the second panel element.

In the second type of multi-layer display panel, the extending direction of the connection portion of the inner substrate of the first panel element is the same as that of the connection portion of the inner substrate of the second panel element, similarly to the first type of multi-layer display panel.

In the second type of multi-layer display panel, similarly to the first type of multi-layer display panel,
(1) the extending direction of the connection portion of the outer substrate of the first panel element,
(2) the extending direction of the connection portion of the inner substrate of the first panel element
   (= the extending direction of the connection portion of the inner substrate of the second panel element), and
(3) the extending direction of the connection portion of the outer substrate of the second panel element,
   are different to each other, and are angularly shifted by 90 degrees in this order.

Thereby, the electrode formation surface of the connection portion of each substrate can be exposed, similarly to the first type of multi-layer display panel.

In the second type of multi-layer display panel, similarly to the first type of multi-layer display panel, the electrode formation surface of the connection portion of each substrate of each panel element may be not fully hidden by the substrates of the other panel element, and at least a portion thereof (typically, a major or whole portion thereof) may be exposed.

Thereby, in the case where the driver element is to be directly mounted on the electrode formation surface of the connection portion, the driver element can be easily mounted onto any one of the connection portions in a state that the first and second panel elements are layered together. The junction substrate can be also easily connected to the connection portion in the state that the first and second panel elements are layered together. The driver element carrier substrate can be also easily connected to the connection portion in the state that the first and second panel elements are layered together. Repairing of the operation such as the driver element mounting can be also performed easily.

In the second type of multi-layer display panel, similarly to the first type of multi-layer display panel, the width of each connection portion in its extending direction is merely required to be of a minimum value required, e.g., for mounting the driver element in spite of the fact that the electrode formation surfaces of all the connection portions of the substrates can be exposed. Consequently, a frame width can be small.

In the second type of multi-layer display panel, the connection portions of each substrate extend only in three directions so that the frame width and size can be further reduced.

### [1-3] THIRD TYPE OF MULTI-LAYER DISPLAY PANEL

The third type of multi-layer display panel has two, i.e., first and second panel elements layered together.

In the third type of multi-layer display panel,
(1) the extending direction of the connection portion of the column substrate of the first panel element,
(2) the extending direction of the connection portion of the row substrate of the first panel element
(3) the extending direction of the connection portion of the column substrate of the second panel element, and
(4) the extending direction of the connection portion of the row substrate of the second panel element,
   are different to each other, and are angularly shifted by 90 degrees in a predetermined order.

Thereby, in the third type of multi-layer display panel, the electrode formation surface of the connection portion of each substrate can be exposed, similarly to the first type of multi-layer display panel.

In the third type of multi-layer display panel, similarly to the first type of multi-layer display panel, the electrode formation surface of the connection portion of each substrate of each panel element may be not fully hidden by the other substrates of the panel elements, and at least a portion thereof (typically, a major or whole portion thereof) may be exposed.

Thereby, in the case where the driver element is to be directly mounted on the electrode formation surface of the connection portion, the driver element can be easily mounted onto any one of the connection portions in a state that the first and second panel elements are layered together. The junction substrate can be also easily connected to the connection portion in the state that the first and second panel elements are layered together. The driver element carrier substrate such as TCP can be also easily connected to the connection portion in the state that the first and second panel elements are layered together. Repairing of the operation such as the driver element mounting can be also performed easily.

In the third type of multi-layer display panel, similarly to the first type of multi-layer display panel, the width of each connection portion in its extending direction is merely required to be of a minimum value required, e.g., for mounting the driver element in spite of the fact that the electrode formation surfaces of all the connection portions of the substrates can be exposed. Consequently, a frame width can be small.

In the third type of multi-layer display panel, both the inner substrates, neighboring to each other, of the first and second panel elements may be the column substrates, or may be the row substrates. Alternatively, one of these inner substrates may be the column substrate, and the other may be the row substrate.

More specifically, in the third type of multi-layer display panel, the four substrates may be selectively layered in the following orders (a) - (d).
(a) For example, the column substrate of the first panel element, the row substrate of the first panel element, the row substrate of the second panel element and the column substrate of the second panel element are layered in this order.
(b) The row substrate of the first panel element, the column substrate of the first panel element, the column substrate of the second panel element and the row substrate of the second panel element are layered in this order.
(c) The column substrate of the first panel element, the row substrate of the first panel element, the column substrate of the second panel element and the row substrate of the second panel element are layered in this order.
(d) The row substrate of the first panel element, the column substrate of the first panel element, the row substrate of the second panel element and the column substrate of the second panel element are layered in this order.

### [1-4] FIRST, SECOND AND THIRD TYPES OF MULTI-LAYER DISPLAY PANEL

(a) In any one of the first, second and third types of multi-layer display panels, the width of each connection portion in its extending direction may be equal to a minimum value required, e.g., for mounting the driver element so that the frame width can be reduced.

In the first or second type of multi-layer display panel having the connection portions extending in the same direction, these connection portions extending in the same direction may have the equal width in its extending direction. Even if the connection portions extending in the same direction have the same width, the electrode formation surfaces of these connection portions can be exposed as already described so that the operation such as driver element mounting can be easily performed.

(b) In any one of the first, second and third types of multi-layer display panels, at least the overlap portions of the neighboring two substrates may be adhered together, e.g., by an adhesive.

In the first or second type of multi-layer display panel having the connection portions extending in the same direction, not only the overlap portions but also the connection portions of the neighboring two substrates may be adhered together.

The adhesive may be adhesive film, double-sided tape, liquid adhesive or other.

(c) In any one of the first, second and third types of multi-layer display panels, the first and second substrates (column and row substrates) may be formed of resin film substrates for reducing the width and weight, as already described.

The resin film to be used as the substrate is usually wound around a reel or roll when stored, and is cut into a predetermined configurations for use as the substrate. Therefore, the resin film substrate may have curling property or habit due to the previous winding around the reel.

If the resin film substrate used as the column substrate has the curling property, the column electrode may be formed, e.g., on a convex surface side of the resin film column substrate. The convex surface side of the resin film column substrate is formed when the resin film column substrate is curved due to its curling property. Likewise, if the resin film substrate used as the row substrate has the curling property, the row electrode may be formed, e.g., on the convex surface side of the resin film row substrate. The convex surface side of the resin film row substrate is formed when the resin film row substrate is curved by its curling property. The advantages achieved by such formation of the electrode on the convex surface side of the substrate will be described later in connection with a method of manufacturing the multi-layer display panel.

(d) In any one of the first, second and third types of multi-layer display panels, the driver element may be directly mounted on the connection portion of the substrate, as already described.

This driver element (e.g., driver IC) may be mounted using an anisotropic conductive adhesive such as an ACF (Anisotropic Conductive Film) or anisotropic conductive paste.

In the first or second type of multi-layer display panel having the connection portions of the same extending direction, the driver elements may be mounted on the two connection portions extending in the same direction such that the driver element mounted on one of these connection portions is located in the position not overlapping with the driver element mounted on the other connection portion. Alternatively, the driver element mounted on one of the two connection portions extending in the same direction may be located in the position overlapping with the driver element mounted on the other connection portion.

(e) In any one of the first, second and third types of multi-layer display panels, if the driver element is mounted directly on the connection portion of the substrate as described above, a junction substrate may be additionally connected to the connection portion of the panel element substrate for connecting the driver element mounted on the connection portion of the panel element substrate to the control portion of the driver device.

For connection of this junction substrate, an anisotropic conductive adhesive such as ACF may be used.

The junction substrate may be a flexible substrate. The flexible junction substrate may be folded toward a back side, opposite to the observation side, of the multi-layer display panel. More specifically, the flexible junction substrate may be folded such that an end portion, opposite to an end portion which is connected to the connection portion of the panel element substrate, of the junction substrate is located at the back side of the multi-layer display panel. This can reduce the frame width of the multi-layer display panel.

(f) In any one of the first, second and third types of multi-layer display panels, a driver element carrier substrate (e.g., TCP) carrying the driver element may be connected to the connection portion of the panel element substrate, as already described.

The anisotropic conductive adhesive such as ACF may be used for connection of the driver element carrier substrate.

The driver element carrier substrate may be a flexible substrate. The flexible driver element carrier substrate may be folded toward the back side, opposite to the observation side, of the multi-layer display panel. More specifically, the flexible driver element carrier substrate may be folded such that an end portion, opposite to an end portion which is connected to the connection portion of the panel element substrate, of the driver element carrier substrate is located at the back side of the multi-layer display panel. This can reduce the frame width of the multi-layer display panel.

(g) The first type of multi-layer display panel may additionally have one or more panel elements, which are layered with the three layered panel elements of the foregoing structure.

Either of the second and third types of multi-layer display panels may additionally have one or more panel elements, which are layered with the two layered panel elements of the foregoing structure.

(h) In any one of the first, second and third types of multi-layer display panels, each panel element may be a liquid crystal panel element, in which a liquid crystal is disposed between the column substrate provided with the column electrode and the row substrate provided with the row electrode.

The liquid crystal (liquid crystal composition) to be arranged between the substrates may be a liquid crystal composition including a liquid crystal exhibiting a cholesteric phase, e.g., in a room temperature. The liquid crystal exhibiting the cholesteric phase selectively reflects the light of the wavelength depending on the helical pitch of liquid crystal. Therefore, the liquid crystal panel element including the liquid crystal exhibiting the cholesteric phase can be used as the liquid crystal display element of the reflection type.

The liquid crystal exhibiting the cholesteric phase may be a cholesteric liquid crystal which exhibits the cholesteric phase by itself, or a chiral nematic liquid crystal composition including a nematic liquid crystal composition and a chiral agent added thereto. The chiral nematic liquid crystal composition has such an advantage that the helical pitch can be adjusted by controlling an amount of the added chiral agent, and thereby the selective reflection wavelength can be easily adjusted.

### [2] METHOD OF MANUFACTURING MULTI-LAYER DISPLAY PANEL

In the following description, first, second and third types of methods for manufacturing multi-layer display panels are presented.

The first, second and third types of manufacturing methods are methods of manufacturing above mentioned first, second and third types of multi-layer display panels, respectively.

The first, second and third types of the methods of manufacturing multi-layer display panel are as follows.

### [2-1] FIRST TYPE OF METHOD OF MANUFACTURING MULTI-LAYER DISPLAY PANEL

The first type of the method is a method for manufacturing a multi-layer display panel including first, second and third panel elements layered together, the method comprising:
a panel element forming step of forming each of the first, second and third panel elements, using a first substrate provided with a column electrode and a second substrate provided with a row electrode; and
an overlaying step of overlaying the first, second and third panel elements, each formed in the panel element forming step, in accordance with a predetermined order, wherein
the first substrate of each of the first, second and third panel elements finally has an overlap portion overlapping with the other five substrates, and a connection portion extending from the overlap portion and used for connecting the column electrode on the first substrate to a driver element;
the second substrate of each of the first, second and third panel elements finally has an overlap portion overlapping with the other five substrates, and a connection portion extending from the overlap portion and used for connecting the row electrode on the second substrate to a driver element;
the first and second substrates are overlaid together to form the panel element, and to locate each of the column and row electrodes on the first and second substrates, respectively, at inner side of the overlaid first and second substrates in the panel element forming step,
the first, second and third panel elements are overlaid together in the overlaying step to locate
   the first substrate of the first panel element,
   the second substrate of the first panel element,
   the second substrate of the second panel element,
   the first substrate of the second panel element,
   the first substrate of the third panel element and
   the second substrate of the third panel element in this order;
the first, second and third panel elements are overlaid together in the overlaying step such that an extending direction of the connection portion of the second substrate of the first panel element is same as an extending direction of the connection portion of the second substrate of the second panel element, with respect to a center defined by a lap-over portion where the first, second and third panel elements are overlapping to each other;
the first, second and third panel elements are overlaid together in the overlaying step such that an extending direction of the connection portion of the first substrate of the second panel element is same as an extending direction of the connection portion of the first substrate of the third panel element, with respect to the center defined by the lap-over portion; and
the first, second and third panel elements are overlaid together in the overlaying step such that, with respect to the center defined by the lap-over portion,
   an extending direction of the connection portion of the first substrate of the first panel element,
   the extending direction of the connection portion of the second substrate of the first panel element,
   the extending direction of the connection portion of the first substrate of the second panel element and
   an extending direction of the connection portion of the second substrate of the third panel element are angularly shifted in this order by 90 degrees.

### [2-2] SECOND TYPE OF METHOD OF MANUFACTURING MULTI-LAYER DISPLAY PANEL

The second type of the method is a method for manufacturing a multi-layer display panel including first and second panel elements layered together, the method comprising:
a panel element forming step of forming each of the first and second panel elements, using a first substrate provided with a column electrode and a second substrate provided with a row electrode; and
an overlaying step of overlaying the first and second panel elements, each formed in the panel element forming step, in accordance with a predetermined order, wherein
the first substrate of each of the first and second panel elements finally has an overlap portion overlapping with the other three substrates, and a connection portion extending from the overlap portion and used for connecting the column electrode on the first substrate to a driver element;
the second substrate of each of the first and second panel elements finally has an overlap portion overlapping with the other three substrates, and a connection portion extending from the overlap portion and used for connecting the row electrode on the second substrate to a driver element;
the first and second substrates are overlaid together to form the panel element, and to locate each of the column and row electrodes on the first and second substrates, respectively, at inner side of the overlaid first and second substrates in the panel element forming step,
the first and second panel elements are overlaid together in the overlaying step such that each of the substrate, arranged at inner side, of the first panel element and the substrate, arranged at inner side, of the second panel element is the first substrate provided with the column electrode, or is the second substrate provided with the row electrode;
the first and second panel elements are overlaid together in the overlaying step such that an extending direction of the connection portion of the substrate, arranged at inner side, of the first panel element is same as an extending direction of the connection portion of the substrate, arranged at inner side, of the second panel element, with respect to a center defined by a lap-over portion where the first and second panel elements are overlapping to each other; and
the first and second panel elements are overlaid together in the overlaying step such that with respect to the center defined by the lap-over portion,
   an extending direction of the connection portion of the substrate, arranged at outer side, of the first panel element,
   the extending direction of the connection portion of the substrate, arranged at inner side, of the first panel element, and
   an extending direction of the connection portion of the substrate, arranged at outer side, of the second panel element are angularly shifted in this order by 90 degrees.

### [2-3] THIRD TYPE OF METHOD OF MANUFACTURING MULTI-LAYER DISPLAY PANEL

The third type of the method is a method for manufacturing a multi-layer display panel including first and second panel elements layered together, the method comprising:
a panel element forming step of forming each of the first and second panel elements, using a first substrate provided with a column electrode and a second substrate provided with a row electrode; and
an overlaying step of overlaying the first and second panel elements, each formed in the panel element forming step, in accordance with a predetermined order, wherein
the first substrate of each of the first and second panel elements finally has an overlap portion overlapping with the other three substrates, and a connection portion extending from the overlap portion and used for connecting the column electrode on the first substrate to a driver element;
the second substrate of each of the first and second panel elements finally has an overlap portion overlapping with the other three substrates, and a connection portion extending from the overlap portion and used for connecting the row electrode on the second substrate to a driver element;
the first and second substrates are overlaid together to form the panel element, and to locate each of the column and row electrodes on the first and second substrates, respectively, at inner side of the overlaid first and second substrates in the panel element forming step,
the first and second panel elements are overlaid together in the overlaying step such that, with respect to a center defined by a lap-over portion where the first and second panel elements are overlapping to each other,
   an extending direction of the connection portion of the first substrate of the first panel element,
   an extending direction of the connection portion of the second substrate of the first panel element,
   an extending direction of the connection portion of the first substrate of the second panel element and
   an extending direction of the connection portion of the second substrate of the second panel element are angularly shifted by 90 degrees in a predetermined order.

[2-4] According to the first, second and third types of manufacturing method, the first, second and third types of multi-layer display panels already described can be manufactured, respectively.

The matters already described with respect to the first, second and third types of multi-layer display panels are also true with respect to the first, second and third types of manufacturing methods, respectively.

Any one of the first, second and third types of manufacturing methods includes a panel element forming step of forming each panel element using the column substrate (first substrate) and the row substrate (second substrate), and an overlaying step (panel element overlaying step) of overlaying the panel elements thus formed.

The column substrate (or row substrate) used in the panel element forming step may have a configuration different from the final configuration of the substrate, as will be described in greater detail later. Likewise, the configuration of the column substrate (or row substrate) in the overlaying step may be different from the final configuration of the substrate.

In any one of the first, second and third types of manufacturing methods, the multi-layer display panel is produced such that as follows. The column substrate of each panel element is, finally, provided with the overlap portion overlapping with all the other substrates, and the connection portion extending from the overlap portion for connecting the column electrode to the driver element. Also, the row substrate of each panel element is, finally, provided with the overlap portion overlapping with all the other substrates, and the connection portion extending from the overlap portion for connecting the row electrode to the driver element.

Further, the direction of the electrode formation surface of the substrate in the panel element forming step, the layering order of the respective substrates of the respective panel elements in the overlaying step and/or the extending directions of the connection portions in the overlaying step are determined as described above, whereby all the electrode formation surfaces of all the substrate connection portions can be exposed in the final product of the multi-layer display panel.

In any one of the first, second and third types of manufacturing methods, the panel element forming step and the overlaying step may be performed such that the electrode formation surface of the connection portion of each of the substrates of each panel element is not fully hidden by the substrates of the other panel element, and at least a portion (typically, a major or whole portion) thereof is exposed.

(a) Thereby, in the case where the driver element is to be mounted directly on the connection portion of the panel element substrate, the mounting of the driver element can be performed after overlaying the panel elements (after the overlaying step). In the case of connecting the junction substrate to the connection portion, this connection can be also performed after the overlaying step. Repairing of the operation such as driver element mounting can be also performed after the overlaying step.

In any one of the first, second and third types of manufacturing methods, a mounting step of mounting the driver element onto the connection portion of the substrate, and connecting the electrode of the substrate to the driver element may be performed after the overlaying step. A junction substrate connecting step of connecting the junction substrate to the connection portion of the panel element substrate may be performed after the overlaying step. By performing the driver element mounting step and the junction substrate connecting step after the panel element overlaying step, the driver element and the junction substrate does not impede the panel element overlaying step so that the overlaying of the panel elements can be performed easily.

(b) In the case of connecting the driver element carrier substrate carrying the driver element to the connection portion of the panel element substrate, this connection can be performed after the panel element overlaying step.

In any one of the first, second and third types of manufacturing methods, the step of connecting the driver element carrier substrate such as TCP to the connection portion of the panel element substrate may be performed, e.g., after the overlaying step. By performing this connecting step of connecting the driver element carrier substrate, the overlaying of the panel element and others can be performed easily without being impeded by the driver element carrier substrate.

[2-5] In any one of the first, second and third types of manufacturing methods, the liquid crystal may be disposed between the column substrate provided with the column electrode and the row substrate provided with the row electrode in the panel element forming step, whereby the liquid crystal panel element can be formed.

The liquid crystal held between the substrates may be chiral nematic liquid crystal as described above, whereby the liquid crystal panel element of the reflection type can be produced.

[2-6] In any one of the first, second and third types of manufacturing methods, at least the overlap portions of the neighboring two substrates may be adhered together by an adhesive such as adhesive film, double-faced adhesive tape or liquid adhesive in the overlapping step.

In the first and second types of manufacturing methods each executed for forming the multi-layer display panel having the connection portions of the same extending direction, the overlap portions and the connection portions of the neighboring two substrates of the neighboring two panel elements may be adhered by the adhesive.

In any one of the first, second and third types of manufacturing methods, the panel elements may be overlaid together after positioning the panel elements to provide a predetermined positional relationship therebetween. For this positioning, the column substrate and/or row substrate of each panel element may be provided with one or more alignment mark(s) (registration mark(s)), which can be used for the positioning. For the positioning, a known manner such as image processing manner may be employed. The alignment mark may be made of an electrode material. The alignment mark may be formed outside the display region of the substrate. The alignment mark may be formed in a substrate portion, which will be finally removed. Display may be performed on one or more predetermined dots (pixels) of the panel element for use as the alignment mark.

[2-7] In any one of the first, second and third types of manufacturing methods, the multi-layer display panel is produced such that each substrate of each panel element is, finally, provided with the overlap portion overlapping with all the other substrates, and the connection portion extending from the overlap portion for connecting the electrode on the substrate to the driver element. Also, the connection portion of each substrate does not finally overlap with all the other substrates, as already described in connection with the multi-layer display panel.

It is important that the overlap portion overlapping with all the other substrates and the connection portion not overlapping with all the other substrates are merely required to be formed finally in each substrate.

Therefore, a portion of the panel element substrate finally serving as the connection portion (extending portion extending from the overlap portion) may overlap with all the other substrates during the process of producing the multi-layer display panel. In this case, the substrate portion covering the electrode formation surface of the other substrate (the portion overlapping with the electrode formation surface of the connection portion of the other substrate) may be typically cut away for exposing at least a portion (typically, a major or whole portion) of the electrode formation surface of the connection portion at a predetermined timing (e.g., before the panel element forming step, after the panel element forming step, and/or the panel element overlaying step). More specifically, the substrate portion covering the electrode formation surface of the connection portion of the other substrate may be cut off at the predetermined timing so that operation such as mounting of the drive element on this connection portion may not be impeded.

In any one of the first, second and third types of manufacturing methods, the multi-layer display panel may be produced by employing a cutting step of cutting an unnecessary portion of the substrate, e.g., as described in the following item [2-7-1], [2-7-2] or [2-7-3].

[2-7-1] For example, an after cut step of removing an unnecessary portion (portion to be cut away) from each of the first and second substrates of each of the overlaid panel elements may be executed after the panel element overlaying step.

In this case, the substrate of the following configuration may be used as each of the first and second substrates in the panel element forming step, and the following portion of the substrate may be removed as the unnecessary portion in the after cut step performed after the panel element overlaying step.

In the panel element forming step, each first substrate may have the overlap portion finally overlapping with the other substrate, and four extending portions extending from the overlap portion in the four directions angularly spaced by 90 degrees. Likewise, each second substrate may have the overlap portion finally overlapping with the other substrate, and four extending portions extending from the overlap portion in the four directions angularly spaced by 90 degrees.

In the after cut step, at least one extending portion among the four extending portions of the first substrate except for the extending portion to be used as the connection portion may be removed, and at least one extending portion among the four extending portions of the second substrate except for the extending portion to be used as the connection portion may be removed.

Thereby, the extending portion to be used as the connection portion and the extending portions to be removed in the after cut step can be utilized for holding the panel element in the panel element overlaying step and/or other step(s). Therefore, the overlaying step can be performed easily.

[2-7-2] Alternatively, the substrate of the following configuration may be used as each of the first and second substrates in the panel element forming step, and the following portion of the substrate may be removed as the unnecessary portion in the after cut step performed after the panel element overlaying step.

In the panel element forming step, each first substrate may have the overlap portion finally overlapping with the other substrate, an extending portion extending from the overlap portion for use as the connection portion, and an extending portion extending from the overlap portion for use as a holding portion for holding the panel element in the panel element overlaying step. Likewise, each second substrate may have the overlap portion finally overlapping with the other substrate, an extending portion extending from the overlap portion for use as the connection portion, and an extending portion extending from the overlap portion for use as a holding portion for holding the panel element in the panel element overlaying step.

In the after cut step, the extending portion(s) of the first substrate except for the extending portion to be used as the connection portion may be removed, and the extending portion(s) of the second substrate except for the extending portion to be used as the connection portion may be removed.

The extending portion to be used as the connection portion may be the same as the extending portion to be used as the holding portion. The after cut step may be performed to remove the extending portion, which is not to be used as the connection portion, and was used as the holding portion in the overlaying step.

According to the above manner and configuration, the extending portion used as the connection portion and the extending portion to be removed in the after cut step can be utilized as the holding portion in the panel element overlaying step and/or other step(s) so that the overlaying step can be performed easily, similarly to the manner and configuration in the item [2-7-1].

[2-7-3] A precut step of removing an unnecessary portion of each of the first and second substrates may be performed before the panel element overlaying step, and an after cut step of removing an unnecessary portion from each of the first and second substrates of each of the overlaid panel elements may be performed after the panel element overlaying step.

In this case, the substrate of the following configuration may be used as each of the first and second substrates in the panel element forming step, the following portion of the substrate may be removed as the unnecessary portion in the precut step performed before the panel element overlaying step, and the following portion of the substrate may be further removed as the unnecessary portion in the after cut step performed after the panel element overlaying step.

Each first substrate in the panel element forming step may have the overlap portion finally overlapping with the other substrate, and four extending portions extending from the overlap portion in the four directions angularly spaced by 90 degrees. Likewise, each second substrate in the panel element forming step may have the overlap portion finally overlapping with the other substrate, and four extending portions extending from the overlap portion in the four directions angularly spaced by 90 degrees.

In the precut step, the extending portion(s) among the four extending portions of the first substrate, except for the extending portion to be used as a holding portion for holding the panel element in the panel element overlaying step, also except for the extending portion to be used as the connection portion, are removed. Further, the extending portion(s) among the four extending portions of the second substrate, except for the extending portion to be used as a holding portion for holding the panel element in the panel element overlaying step, also except for the extending portion to be used as the connection portion, are removed.

In the after cut step, the extending portion(s) except for the extending portion to be used as the connection portion of the first substrate, and the extending portion(s) except for the extending portion to be used as the connection portion of the second substrate are removed.

In this case, the extending portion to be used as the connection portion may be the same as the extending portion to be used as the holding portion, similarly to the configuration already described in the item [2-7-2]. In this case, the after cut step may be performed to remove the extending portion, which is not utilized as the connection portion, and was utilized as the holding portion in the overlaying step.

According to the above, the extending portion used as the connection portion and the extending portion removed in the after cut step can be used as the holding portion in the panel element overlaying step and/or other step(s) so that the overlaying step can be performed easily.

[2-7-4] In any one of the manners described in the foregoing items [2-7-1], [2-7-2] and [2-7-3], half cut may be effected in advance on a boundary line between the substrate portion to be removed in the after cut step and the portion to be left. By performing the half cut, the unnecessary substrate portion can be easily removed in the after cut step (master cut step). This half cut step may be performed at such a timing, before the after cut step, that the half cut can be easily performed. This half cut step may be performed, e.g., before the panel element overlaying step, before the panel element forming step, or during the panel element forming step (e.g., after formation of the electrode on the substrate and before overlaying the substrates to form the panel element).

In the foregoing process [2-7-3] employing the precut step, the half cut may likewise be effected on the boundary line between the substrate portion to be removed in the precut step and the substrate portion to be left. By effecting the half cut, it becomes easy to remove the unnecessary substrate portion in the precut step. This half cut for the precut step may be effected on the substrate at such a timing, before the precut step, that the half cut can be easily performed. This half cut step may be performed, e.g., before the panel element overlaying step, before the panel element forming step, or during the panel element forming step.

The half cut for the precut step and the half cut for the after cut step may be performed simultaneously (at the same timing in the process of producing the multi-layer display panel).

In any one of the foregoing cases, the half cut may be effected on an exposure surface, to be exposed, of the substrate. In the case where the two or more portions, to be removed, of the substrates overlap with each other, the exposure surface of the substrate is a surface to be exposed after removing the substrate portion which is already exposed.

[2-7-5] In any one of the foregoing processes [2-7-1] and [2-7-3] each using the substrate provided with the four extending portions in the panel forming step, the following substrates may be employed.

Each first substrate used in the panel element forming step may be configured such that the extending portion located opposite, with respect to a center defined by the overlap portion of the first substrate, to the extending portion used as the connection portion can be also used as the connection portion for connection to the driver element. Likewise, each second substrate used in the panel element forming step may be configured such that the extending portion located opposite, with respect to a center defined by the overlap portion of the second substrate, to the extending portion used as the connection portion can be also used as the connection portion for connection to the driver element.

By employing the foregoing substrate as each first substrate (column substrate), each column substrate can be the same regardless of the extending direction of the extending portion to be used as the connection portion of the substrate. Likewise, each second substrate (row substrate) of each panel element can be the same regardless of the extending direction of the extending portion to be used as the connection portion of the substrate. Thereby, commonality of parts can be achieved.

All the first and second substrates used in the panel element forming step may have the same rectangular form and the same sizes. If the first and second substrates have the same sizes and form, the panel element can be produced easily.

The column electrodes of the same pattern may be formed on the respective first substrates used in the panel element forming step. This allows use of, e.g., the same mask to form the column electrodes of the predetermined configurations on the respective first substrates. Likewise, the row electrodes of the same pattern may be formed on the respective second substrates used in the panel element forming step. This allows use of, e.g., the same mask to form the row electrodes of the predetermined configurations on the respective second substrates.

[2-7-6] In any one of the foregoing processes [2-7-1], [2-7-2] and [2-7-3], at least a portion of the unnecessary extending portion may be removed in the after cut or precut step.

In other words, the extending portion, which is not finally used as the connection portion, may be partially left.

More specifically, the extending portion, which is not used as the connection portion, of the substrate may be partially left to an extent which does not impede the mounting of the driver element, the connection of the junction substrate and the connection of the driver element carrier substrate to the connection portion of the other substrate.

[2-8] Naturally, the multi-layer display panel may be produced without performing the cut step already described in the item [2-7], in which case the column and row substrates of the final configurations may be used in the stage of the panel element forming step, and the respective panel elements thus formed may be overlaid to form the multi-layer display panel.

### [2-9] FOURTH TYPE OF METHOD OF MANUFACTURING MULTI-LAYER DISPLAY PANEL

In the following description, fourth type of method of manufacturing the multi-layer display panel is presented.

The fourth type of manufacturing method is a method of manufacturing a multi-layer display panel including a plurality of panel elements layered together, comprising:
a panel element forming step of forming each of the panel elements using a first substrate provided with a column electrode at an electrode formation surface and a second substrate provided with a row electrode at an electrode formation surface;
an overlaying step of overlaying the panel elements formed in the panel element forming step; and
an after cut step of removing at least one unnecessary portion from each of the first and second substrates of each of the overlaid panel elements, wherein
in the panel element forming step, as each of the first substrates, a substrate having an overlap portion finally overlapping with the other substrates, and four extending portions extending from the overlap portion in four directions angularly shifted by 90 degrees is used for forming the panel element,
in the panel element forming step, as each of the second substrates, a substrate having an overlap portion finally overlapping with the other substrates, and four extending portions extending from the overlap portion in four directions angularly shifted by 90 degrees is used for forming the panel element,
the after cut step is executed to remove at least one extending portion, as the unnecessary portion, among the four extending portions of the first substrate except for the extending portion to be used as a connection portion used for connecting the column electrode on the first substrate to a driver element, and
the after cut step is also executed to remove at least one extending portion, as the unnecessary portion, among the four extending portions of the second substrate except for the extending portion to be used as a connection portion used for connecting the row electrode on the second substrate to a driver element.

According to the fourth type of manufacturing method, it is possible to produce any one of the first, second and third types of multi-layer display panels. Further, it can be utilized in any one of the first, second and third types of manufacturing methods.

The matters already described in connection with the first, second and third types of multi-layer display panels can also be true with respect to the multi-layer display panel produced in the fourth type of manufacturing method. The matters already described in connection with the first, second and third types of manufacturing methods can also be true with respect to the fourth type of manufacturing method.

The fourth type of method of manufacturing the multi-layer display panel will now be described below in greater detail.

The fourth type of manufacturing method is executed to manufacture the multi-layer display panel including a plurality of panel elements layered together.

The fourth type of manufacturing method includes a panel element forming step, an overlaying step (panel element overlaying step) and an after cut step.

In the panel element forming step, each panel element is formed by using a first substrate (column substrate) provided with a column electrode and a second substrate (row substrate) provided with a row electrode.

In the overlapping step, the formed panel elements are overlaid together in a predetermined order. The neighboring panel elements may be adhered by the adhesive.

The after cut step is performed after the overlapping step. In the after cut step, the following unnecessary portion is removed from each of the first and second substrates of the overlaid panel elements.

In the fourth type of manufacturing method, the following substrates are used as the first and second substrates of each panel element in the panel element forming step, similarly to the case of the foregoing item [2-7-1]. In the after cut step, the following portion is removed from the substrate.

Each first substrate used in the panel element forming step has an overlap portion finally overlapping with the other substrate, and four extending portions extending from the overlap portion in the four directions angularly spaced by 90 degrees.

Each second substrate in the panel element forming step has an overlap portion finally overlapping with the other substrate, and four extending portions extending from the overlap portion in the four directions angularly spaced by 90 degrees.

In the after cut step, the extending portion(s) among the four extending portions of each first substrate, except for the extending portion to be used as the connection portion for connecting the column electrode on the first substrate to the driver element, are removed .

Also, in the after cut step, the extending portion(s) among the four extending portions of each second substrate, except for the extending portion to be used as the connection portion for connecting the row electrode on the second substrate to the driver element, are removed.

Manufacturing of the multi-layer display panel in the above manner can achieve the following advantages.

In any one of the substrates, since the extending portions (including the extending portion to be used as the connection portion) are arranged on the opposite sides of the overlap portion, the extending portions can be utilized for holding the substrate during formation of the panel element, resulting in easy production of the panel element. Thereby, the multi-layer display panel can be produced efficiently.

Since each substrate is provided with the extending portions located on the opposite sides of the overlap portion, the extending portions can be utilized for holding the panel element when overlaying the panel elements so that the overlaying of the panel elements can be easily performed. Thereby, the multi-layer display panel can be manufactured efficiently.

If the neighboring panel elements are adhered by an adhesive in the step of overlaying the panel elements, the panel element portion (substrate extending portion) other than the overlap portion can be held with, e.g., a holding member, and in other words, the panel element portion other than an adhered portion to be adhered to the other panel element, can be held so that the adhesion can be performed easily. Also, the portions to be adhered can be reliably adhered. For preventing remaining of bubbles between the neighboring panel elements, the neighboring panel elements can be adhered, for example, from one end toward the other end.

Each first substrate used in the panel element forming step may be configured such that the extending portion located opposite, with respect to the center defined by the overlap portion of the first substrate, to the extending portion used as the connection portion can be also used as the connection portion. Likewise, each second substrate used in the panel element forming step may be configured such that the extending portion located opposite, with respect to the center defined by the overlap portion of the second substrate, to the extending portion used as the connection portion can be also used as the connection portion. By employing such substrates, the first substrates having the common structure can be used in the respective panel elements independently of the extending portion selected as the connection portion between the extending portions on the opposite sides of the overlap portion. Also, the second substrates of the common structures can be used in the respective panel elements. Thereby, commonality of parts can be achieved, and the multi-layer display panels can be produced efficiently.

All the first and second substrates used in the panel element forming step may be rectangular and may have the same sizes. For example, each substrate may have a rectangular overlap portion and an annular portion surrounding the overlap portion, and may have a rectangular form as a whole. This annular portion includes the four extending portions extending in the four directions from the overlap portion. By employing the substrates of the same size in all the panel elements, commonality of parts can be achieved. Thereby, the multi-layer display panel can be manufactured efficiently.

The column electrodes of the same pattern may be formed on the respective first substrates used in the panel element forming step. Likewise, the row electrodes of the same pattern may be formed on the respective second substrates used in the panel element forming step. By forming the column electrodes of the same pattern on the first substrates of the respective panel elements, the column electrodes can be formed efficiently. Likewise, by forming the row electrodes of the same pattern on the second substrates of the respective panel elements, the row electrodes can be formed efficiently. Thereby, the multi-layer display panel can be manufactured efficiently.

Similarly to the foregoing case [2-7-4], half cut may be effected in advance on a boundary line between the substrate portion to be removed in the after cut step and the portion to be left. By performing the half cut, the after cut step can be performed efficiently and easily. The half cut step may be performed, e.g., before the overlaying step or during the panel element forming step. The half cut step may be effected on the exposure surface, to be exposed, of the substrate.

In the fourth type of manufacturing method, two or three panel elements may be overlaid in the overlaying step, and the after cut step may be performed to expose each of the electrode formation surfaces of the connection portions of each substrate of each panel element.

As already described in connection with the first, second and third types of multi-layer display panels, the electrode formation surface of the connection portion of every substrate can be exposed in the structure where two or three panel elements are layered together. For exposing every electrode formation surface of the connection portion, the multi-layer display panel may be produced in the structure as already described with respect to the first, second and third types of multi-layer display panels (or first, second and third types of manufacturing methods). The directions of the electrode formation surfaces of the substrates, the layering order of the substrates of the respective panel elements and the extending directions of the connection portions may be determined as already described in connection with the first, second and third multi-layer display panels. Whereby, the extending portions can be removed in the after cut step to expose the electrode formation surfaces of all the connection portions.

Thereby, the mounting step of mounting the driver element onto the connection portion of the substrate, and connecting the electrode on the substrate to the driver element can be performed after the panel element overlaying step.

Also, the connecting step of connecting the junction substrate, which is employed for connecting the driver element to the control portion of the driver device, to the connection portion of the panel element substrate can be performed after the panel element overlaying step.

Also, the connecting step of connecting the driver element carrier substrate carrying the driver element to the connection portion of the panel element substrate can be performed after the overlaying step.

According to the above, the mounting of the driver element, the connection of the junction substrate and the connection of the driver element carrier substrate can be easily performed. If performing the operation such as driver element mounting after the panel element overlaying step, the driver element, junction substrate and others are not connected to each panel element in the overlaying step so that the driver element and others do not impede the overlaying step, and therefore the overlaying step can be performed easily. Also, a manner of preventing remaining of bubbles between the panel elements can be employed when the neighboring panel elements are adhered by an adhesive in the overlaying step.

### [2-10] STEP OF MOUNTING DRIVER ELEMENT

If the driver element (e.g., driver IC) is directly mounted on the connection portion of the substrate of the panel element, this mounting step may be performed as follows.
(a) This mounting step may be performed, e.g., after the panel element overlaying step.
(b) The mounting of the driver element may be performed using an anisotropic conductive adhesive such as anisotropic conductive film (ACF) or anisotropic paste. This anisotropic conductive adhesive may be disposed between the driver element and the substrate connection portion, and may be subjected to heat and pressure so that the driver element can be mounted.
(c) If manufacturing the multi-layer display panel having the connection portions of the same extending direction, the driver elements may be mounted on these two connection portions as follows.

The driver element mounted on one of the neighboring two connection portions of the same extending direction may be located on the position not overlapping the driver element mounted on the other connection portion. For example, these driver elements may be mounted in staggered positions, respectively. Thereby, when mounting the driver element with ACF or the like, the heat and pressure can be easily applied to the ACF and the driver element to be mounted.

The driver element mounted on one of the neighboring two connection portions of the same extending direction may be located in the position overlapping with the driver element mounted on the other connection portion.

In the case where the two driver elements are mounted in the positions overlapping with each other, these driver elements may be mounted, e.g., in the following manner.

For example, at least one of the two driver elements, which are to be mounted on the two connection portions of the same extending direction, respectively, may be provisionally adhered to the connection portion, and thereafter both the driver elements may be completely or fully adhered to the connection portions. In the case of mounting the driver element using, e.g., ACF, the provisional adhesion of the driver element can be performed by applying the heat and pressure smaller than those applied for the complete adhesion.

The two driver elements, which are to be mounted on the connection portions to locate the positions overlapping to each other, respectively, may be completely adhered one by one. More specifically, one of the driver elements may be completely adhered, and thereafter the other driver element may be completely adhered.

Regardless of whether the driver elements are mounted in the positions overlapping with each other or the positions not overlapping with each other, the electrode pattern may be formed in each connection portion for allowing mounting of the driver elements in such positions.

(d) If the driver element to be mounted has a bump, a peripheral portion of a connection surface of the bump of the driver element, which is to be connected to the electrode of the panel element substrate, may be rounded prior to the mounting step. In the case of mounting the driver element with ACF, the connection surface of the bump of the driver element is a surface to be connected to the electrode on the panel element substrate via conductive particles of ACF. By rounding the bump, breakage such as cracking of the electrode can be suppressed in the mounting operation, compared with the case where the peripheral portion of the connection surface of the bump of the driver element is not rounded.

For example, etching or mechanical polishing may be performed for rounding the peripheral portion of the bump.

Naturally, the mounting may be performed using the driver element having the bump, of which peripheral portion is rounded in advance to remove a sharp edge. The bump may be formed by plating, whereby the peripheral portion of the bump can be rounded when forming the bump. Similar effects can be achieved.

(e) In the case where the driver element to be mounted has the bump, the following pressure-bonding jig (compression bonding jig) may be used for mounting the driver element.

For example, a pressure-bonding (compression bonding) may be performed with a pressure-bonding jig including a pressure-bonding base member, which is to be arranged at a side opposite to the mounting surface of the connection portion of the substrate.

A raised portion may be formed in the position, to be opposed to the bump, of the pressure-bonding base member, whereby a balance can be kept in deformation (convexity) of the substrate (e.g., resin film substrate), onto which the driver element is to be mounted, between the mounting surface and the opposite surface, and thereby breakage of the electrode on the substrate can be suppressed. The outer periphery of the raised portion of the pressure-bonding base member may be smaller than the outer periphery of the bump of the driver element, whereby breakage of the electrode on the substrate can be further suppressed.

(f) If the resin film substrate is employed as the column substrate, and if the resin film has the curling property due to winding as described before, the column electrode may be formed on the convex surface side of the column substrate. The convex surface of the column substrate is formed when the column substrate is curved by its curling property. Likewise, if the resin film substrate is employed as the row substrate, and if the resin film has the curling property due to winding, the row electrode may be formed on the convex surface side of the row substrate. The convex surface of the row substrate is formed when the row substrate is curved by its curing property.

By forming the electrode on the convex surface side of the resin film substrate, the electrode (e.g., an ITO electrode) is subjected to a compression stress when the substrate is flat. When mounting the driver element onto the connection portion of this substrate, the bump of the driver element may push the electrode to deform the electrode, but this deformation occurs to release the compression stress so that breakage of the electrode such as cracking can be suppressed.

### [2-11] STEP OF CONNECTING JUNCTION SUBSTRATE

In the case where the driver element (e.g., driver IC) is directly mounted on the connection portion of the panel element substrate as already described, the junction substrate may be further connected to the connection portion for connecting the driver element, mounted on the panel element substrate, to the control portion of the driver device. The connection of the junction substrate may be performed as follows.
(a) This connection step may be performed after the panel element overlaying step.
(b) The connection of the junction substrate may be performed using an anisotropic conductive adhesive such as anisotropic conductive film (ACF) or anisotropic paste.
(c) The junction substrate may be a flexible substrate.

The flexible junction substrate may be folded toward a back side, opposite to the observation side, of the multi-layer display panel. This folding can reduce the frame width of the multi-layer display panel.

### [2-12] STEP OF CONNECTING DRIVER ELEMENT CARRIER SUBSTRATE

In the case where the driver element carrier substrate, which carries the driver element (e.g., driver IC), such as TCP is connected to the connection portion of the panel element substrate for connecting the electrode formed on the panel element substrate to the drive element on the driver element carrier substrate, the step for this connection of the driver element carrier substrate may be performed as follows.
(a) This connection step may be performed after the panel element overlaying step.
(b) The connection of the driver element carrier substrate may be performed using an anisotropic conductive adhesive such as anisotropic conductive film (ACF) or anisotropic paste.
(c) The driver element carrier substrate may be a flexible substrate.

The flexible driver element carrier substrate may be folded toward a back side, opposite to the observation side, of the multi-layer display panel. This folding can reduce the frame width of the multi-layer display panel.

[2-13] In any one of the cases where the driver element is directly mounted on the connection portion of the panel element substrate, the junction substrate is connected to the connection portion, and the driver element carrier substrate is connected to the connection portion, the operation such as driver element mounting may be performed as follows.

(a) In the mounting step, one or more alignment mark(s) (registration mark(s) or target mark(s)) provided on the connection portion of the panel element substrate as well as one or more alignment mark(s) provided at the driver element may be utilized so that the driver element may be mounted in the predetermined position of the connection portion by aligning these alignment marks.

Likewise, in the step of connecting the junction substrate, alignment mark(s) provided on the connection portion of the panel element substrate and alignment mark(s) provided on the junction substrate may be utilized so that the junction substrate may be connected in the predetermined position of the connection portion by aligning these alignment marks.

Likewise, in the step of connecting the driver element carrier substrate, alignment mark(s) provided on the connection portion of the panel element substrate and alignment mark(s) provided on the driver element carrier substrate may be utilized so that the driver element carrier substrate may be connected in the predetermined position of the connection portion by aligning these alignment marks.

For these positioning, know manner such as image processing manner may be employed. The alignment mark may be read by a reading device such as a CCD or a microscope.

The alignment mark provided on the connection portion of the panel element substrate may be formed, e.g., by an electrode material (e.g., ITO).

In the case where the multi-layer display panel has the connection portions of the same extending directions, such as the first or second type of the multi-layer display panel, if the mounting step is performed after the panel element overlaying step, the alignment marks provided on the two connection portions of the same extending directions are sometimes simultaneously viewed in near positions.

In this case, the alignment mark provided on the connection portion, onto which the driver element is to be mounted, should be read out for mounting the driver element in the correct position. The correct alignment mark can be read, e.g., in the following manner. For example, the correct alignment mark can be read out by a reading device (e.g., CCD or microscope) having a reduced depth of field. By reducing the depth of field, only the alignment mark to be read out can be put into focus, and the correct alignment mark can be read out. The depth of field can be reduced by increasing the magnification, and/or increasing lens stops (diaphragm or iris).

In the step of connecting the junction substrate or the step of connecting the substrate carrying the driver element, a reading device having a reduced depth of field may likewise be used to read out the alignment mark for connection. A similar effect can be achieved.

(b) The multi-layer display panel may be held by the following holding device when performing the mounting of the driver element, connection of the junction substrate, connection of the driver element carrier substrate, after the panel element overlaying step.

The holding device may have the following holding jig.

The holding jig may have a first surface for carrying the connection portion of the panel element substrate, on which the operation such as driver element mounting is to be effected, and a second surface for carrying overlap portions of the panel elements, in other words, for carrying the lap-over portion, where the panel elements are overlapping to each other, of the multi-layer display panel.

In the case where the driver element is to be mounted directly on the connection portion of the panel element substrate, the connecting portion of the substrate, on which the operation such as driver element mounting is to be effected, is the connection portion onto which the driver element is to be mounted. In the case where the junction substrate is connected to the connection portion, the connection portion of the substrate, on which the operation such as driver element mounting is to be effected, is the connection portion to which the junction substrate is to be connected. In the case where the driver element carrier substrate is connected to the connection portion, the connection portion, on which the operation such as driver element mounting is to be effected, is the connection portion to which the driver element carrier substrate is to be connected.

In the case where the operation such as driver element mounting is to be effected on one of the two connection portions having the same extending direction, the first surface of the holding jig is a surface on which the connection portion, to which the operation such as driver element mounting is to be effected, is laid via the other connection portion.

The first surface of the holding jig may be a plane. Likewise, the second surface of the holding jig may be a plane.

The holding jig may be provided with a stepped portion located between the first and second surfaces.

The height of this stepped portion may be equal to or larger than a maximum height, which includes a manufacturing error and is determined between the multi-layer display panel surface directly laid on the first surface of the holding jig and the multi-layer display panel surface directly laid on the second surface.

In the case where the operation such as driver element mounting is effected on one (first connection portion) of the two connection portions of the same extending direction, the first connection portion is laid on the first surface of the holding jig via the other connection portion (second connection portion) so that the multi-layer display panel surface, which is directly laid on the holding jig first surface, is the second connection portion surface.

By using the holding jig having the stepped portion of the above height, it is possible to suppress breakage of the substrate connection portion, a portion near the connection portion and the electrode on these portions due to buckling when, e.g., the connection portion is pressed toward the first surface of the holding jig for performing, e.g., the mounting of the driver element on the connection portion.

The holding device may be further provided with a suction device for sucking the multi-layer display panel surface, which is to be directly laid on the first surface of the holding jig, to the first surface of the holding jig. The holding device may be further provided with a suction device for sucking the multi-layer display panel surface, which is to be directly laid on the second surface of the holding jig, to the second surface of the holding jig. The suction device may be configured to perform air-suction.

The operation such as driver element mounting may be performed while sucking the multi-layer display panel surface toward the first and/or second surface(s). Thereby, shifting of the position of the multi-layer display panel can be prevented so that the operation such as driver element mounting can be performed more precisely.

The holding device may be further provided with a pushing member for pushing the connection portion of the substrate of the panel element, which is to be laid on the first surface of the holding jig and is to be subjected to the operation such as driver element mounting, toward the first surface of the holding jig.

By performing, e.g., the mounting of the driver element while pushing the connection portion of the panel element substrate toward the first surface of the holding jig with the pushing member, positioning of the driver element and others can be easily performed, and the operation such as driver element mounting can be performed precisely.

This pushing member may be provided with a window or recess for exposing a region, on which the driver element is to be mounted, of the connection portion to be subjected to operation such as driver element mounting, or a window or recess for pushing the connection portion toward the first surface while avoiding the mounted driver element already mounted thereon.

This pushing member may be provided with a window or recess for exposing a region, to which the junction substrate is to be connected, of the connection portion to be subjected to the operation such as driver element mounting, or a window or recess for pushing the connection portion toward the first surface while avoiding the junction substrate already connected thereto.

This pushing member may be provided with a window or recess for exposing a region, to which the driver element carrier substrate is to be connected, of the connection portion to be subjected to the operation such as driver element mounting, or a window or recess for pushing the connection portion toward the first surface while avoiding the driver element carrier substrate already connected thereto.

The operation such as driver element mounting may be performed while performing the suction by the suction device and pushing the connection portion toward the first surface by the pushing member.

In the case where the operation such as driver element mounting is to be performed on one of the two connection portions of the same extending direction, the connection portion to be subjected to the operation such as driver element mounting cannot be sufficiently sucked toward the first surface even if the connection portion to be subjected to the operation is sucked toward the first surface by the suction device via the other connection portion, the operation such as driver element mounting can be precisely performed by employing the pushing member.

By adhering the two connection portions of the same extending direction by the adhesive as described above, the connection portion to be subjected to the operation such as driver element mounting can be reliably sucked to the holding jig first surface without employing the pushing member. Thereby, the operation such as driver element mounting can be reliably and easily performed.

The operation such as driver element mounting may be performed after mounting the driver element on one of the two connection portions of the same extending direction, in which case the holding jig may be provided with a concavity at first surface for fitting the mounted driver element thereto so that the mounted driver element may not impede the operation such as driver element mounting to the other connection portion.

Likewise, in the case where the operation such as driver element mounting is performed after connecting the junction substrate or the driver element carrier substrate to one of the two connection portions of the same extending direction, the holding jig first surface may be provided with a concavity for fitting the connected substrate thereto so that the connected substrate may not impede the operation such as driver element mounting to the other connection portion.

### [2-14] FIFTH TYPE OF METHOD OF MANUFACTURING MULTI-LAYER DISPLAY PANEL

In the following description, fifth type of method of manufacturing a multi-layer display panel is presented.

The fifth type of manufacturing method is for producing a multi-layer display panel having a plurality of panel elements layered together.

The fifth type of manufacturing method includes a preparing step and a connecting step.

In the preparing step, a layered or multi-layer body formed of a plurality of panel elements layered together is prepared.

Each panel element of the layered body prepared in the preparing step has a display region portion and at least one connection portion. The connection portion extends from the display region portion, and has a surface (external connection electrode formation surface) provided with an external connection electrode. The external connection electrode may be connected or linked to an electrode formed on the display region portion. In the case where a driver element (e.g., driver IC) is directly mounted on the connection portion, the external connection electrode may be connected to a lead of the driver element.

In the layered body, the plurality of panel elements are layered as follows. The plurality of panel elements are layered such that the display region portions of the respective panel elements overlap with each other. Further, these plurality of panel elements are layered such that at least a portion (typically, a major or whole portion) of the external connection electrode formation surface of the connection portion of each panel element is not hidden by any the other connection portion of the panel element. For example, the panel elements may be layered in the manners already described in connection with the first, second and third types of multi-layer display panels (or the first, second and third types of manufacturing methods), whereby the plurality of panel elements can be layered as described above.

In the connection step of the fifth type of manufacturing method, a wiring substrate provided with an electrode is connected to the connection portion of the panel element, and the electrode on the wiring substrate is connected to the external connection electrode of the connection portion of the panel element. For example, anisotropic conductive film may be used for connecting the electrode on the wiring substrate to the external connection electrode of the connection portion of the panel element.

The wiring substrate, to be connected to the connection portion of the panel element in the connecting step, may be, e.g., a printed board. The electrode on the wiring substrate may be provided for connecting the external connection electrode on the connection portion of the panel element to the lead of the driver element. The driver element may be mounted on the wiring substrate. In the case where the driver element is directly mounted on the connection portion of the panel element, the electrode on the wiring substrate may be provided for connecting the external connection electrode, which is connected to the driver element, on the connection portion of the panel element to the control portion of the driver device.

In the connecting step, the connecting operation of the wiring substrate may be performed while holding at least one of the connection portions from a back side, opposite to the external connection electrode formation surface, and while pushing the wiring substrate to the connection portion thus held. Holding of the connection portion may be performed by sucking the back side, opposite to the external connection electrode formation surface, of the connection portion toward the holding member (e.g., said holding jig of the holding device).

In the connecting step, the positioning between the external connection electrode of the connection portion and the electrode of the wiring substrate may be performed by adjusting the positional relationship between one or more mark(s) formed on the connection portion and one or more mark(s) formed on the wiring substrate. By performing the positioning in this manner, the external connection electrode on the connection portion of the panel element and the electrode on the wiring substrate can be accurately connected with a predetermined positional relationship.

In the fifth type of manufacturing method, the following attaching step may be additionally performed.

In the attaching step, a driver IC (e.g. a lead for the driver IC) is attached to or mounted onto the external connection electrode of the connection portion of the panel element. The attaching step is performed after the preparing step. The driver IC may be attached to the external connection electrode, e.g., by anisotropic conductive film. Either of the wiring substrate connection step and the driver IC attaching step may be performed prior to the other.

The attaching step may be performed while holding at least one connection portion from a back side, which is the opposite side of the external connection electrode formation surface, and while pushing the driver IC to the connection portion thus held. The holding of the connection portion may be performed, e.g., by sucking the back side of the connection portion, opposite to the external connection electrode formation surface, of the connection portion of the panel element to a holding member such as said holding jig of the holding device.

In the attaching step, the positioning or alignment between the external connection electrode on the connection portion of the panel element and the driver IC (e.g. lead for the driver IC) may be performed by adjusting the positional relationship between one or more mark(s) formed on the connection portion and one or more mark(s) formed on the driver IC. This positioning enables accurate connection between the external connection electrode and the driver IC with a predetermined positional relationship.

Unless a particular disadvantage occurs, the matters already described with respect to the first, second and third types of multi-layer display panels can be true also with respect to the multi-layer display panel manufactured by the fifth type of manufacturing method. Unless a particular disadvantage arises, the matters already described with respect to the first, second and third types of manufacturing methods can be true also with respect to the fifth type of manufacturing method.

### [3-1] HOLDING DEVICE

In the foregoing description, the holding device for holding the multi-layer display panel is already described, which is summarized in that as follows.

The holding device is used for holding a multi-layer display panel including a plurality of panel elements layered together.

In the multi-layer display panel to be held by the holding device, each of the panel elements has a pair of substrates. The multi-layer display panel has a lap-over portion where the panel elements are overlapping to each other, and a projected portion, projected from the lap-over portion, of the substrate of the panel element. That is, the substrate is provided with the projected portion projected from the lap-over portion.

The holding device is used when mounting a driver element onto the projected portion of the substrate of the panel element or when connecting a third substrate to the projected portion of the substrate of the panel element.

The holding device has a holding jig having a first surface for laying the projected portion of the substrate of the panel element thereon, a second surface for laying the lap-over portion of the multi-layer display panel thereon, and a stepped portion formed between the first and second surfaces.

In the holding device, the stepped portion has a height equal to or larger than a maximum height, including a manufacturing error of the multi-layer display panel, between a surface, directly laid on the first surface of the holding jig, of the multi-layer display panel and a surface, directly laid on the second surface of the holding jig, of the multi-layer display panel.

This holding device can be used not only for holding the first to third types of multi-layer display panels but also for holding another multi-layer display panel.

The holding device can be utilized when mounting the driver element and/or when connecting the third substrate such as the junction substrate, the driver element carrier substrate or the wiring substrate.

In the first, second and third types of multi-layer display panels described above, the substrate projected portion may be the connection portion for connection of the driver element.

As already described, the holding device may be further provided with a suction device for sucking the multi-layer display panel surface, which is to be directly laid on the first surface of the holding jig, toward the first surface.

The holding device may be further provided with a pushing member for pushing the substrate projected portion, which is to be laid on the first surface of the holding jig, toward the first surface. The pushing member may be provided with a window or recess for exposing a driver element mounting region, onto which the driver element is to be mounted, of the substrate projected portion to be laid on the first surface of the holding jig. The pushing member may be provided with a window or recess for exposing a connection region, to which the third substrate such as the junction substrate is to be connected, of the substrate projected portion to be laid on the first surface of the holding jig.

### [3-2] PRESSURE-BONDING JIG (COMPRESSION BONDING JIG)

In the foregoing description, the pressure-bonding jig (compression bonding jig) is already described in detail, which is summarized in that as follows.

The pressure-bonding jig is used for mounting a driver element having a bump onto a substrate.

The pressure-bonding jig has a pressure-bonding base member to be disposed at a back side of the substrate. The back side is opposite to a side, onto which the driver element is to be mounted, of the substrate.

In the pressure-bonding jig, the pressure-bonding base member has a raised portion in a position to be opposed to the bump of the driver element.

This pressure-bonding jig can be utilized not only for the mounting of the driver element in the first to third types of multi-layer display panel but also for the mounting of the driver element in another multi-layer display panel.

As already described, the outer periphery of the raised portion of the pressure-bonding base member may be smaller than the outer periphery of the bump of the driver element.

### [3-3] DRIVER ELEMENT MOUNTING METHOD

In the foregoing description, the driver element mounting method for mounting driver elements in overlapping positions on two substrate surfaces is already described, which is summarized in that as follows.

The driver element mounting method is for mounting two driver elements in overlapping positions on two substrate surfaces, respectively. In other words, The driver element mounting method is for mounting the two driver elements onto two substrate surfaces to locate the driver element mounted on one of the two substrate surfaces in a position overlapping to the driver element mounted on the other substrate surface. The two substrate surfaces may be of the same substrate, or of different substrates.

The driver element mounting method includes:
a provisional adhering step of provisionally adhering at least one of the driver elements to the substrate surface; and
a complete adhering step of simultaneously and completely adhering the two driver elements to the substrate surfaces.

The provisional adhering step and complete adhering step may be performed such that one (first driver element) of the two driver elements (first and second driver elements) is provisionally adhered to the one (first substrate surface) of the two substrate surfaces (first and second substrate surfaces), and thereafter the first and second driver elements are completely and simultaneously adhered to the respective first and second substrates.

Alternatively, the provisional adhering step and complete adhering step may be performed such that the first and second driver elements are provisionally adhered to the respective first and second substrate surfaces, and thereafter the first and second driver elements are completely and simultaneously adhered to the respective first and second substrate surfaces.

This driver element mounting method can be used for mounting driver elements onto the connection portions of the same extending direction to locate the driver element mounted one of the connection portions in the position overlapping to the driver element mounted on the other connection portion, in the first, second and third types of multi-layer display panels.

This driver element mounting method can be utilized not only for mounting the driver element in the first, second and third types of multi-layer display panels but also for mounting the driver element in another multi-layer display panel.

As already described, the provisional adhering step and the complete adhering step may be performed by disposing an anisotropic conductive adhesive between the driver element and the substrate surface, and applying a heat and a pressure to the anisotropic conductive adhesive. The heat and the pressure applied in the provisional adhering step may be smaller than the heat and the pressure applied in the complete adhering step.

[4] Preferred embodiments will now be described with reference to the drawings.

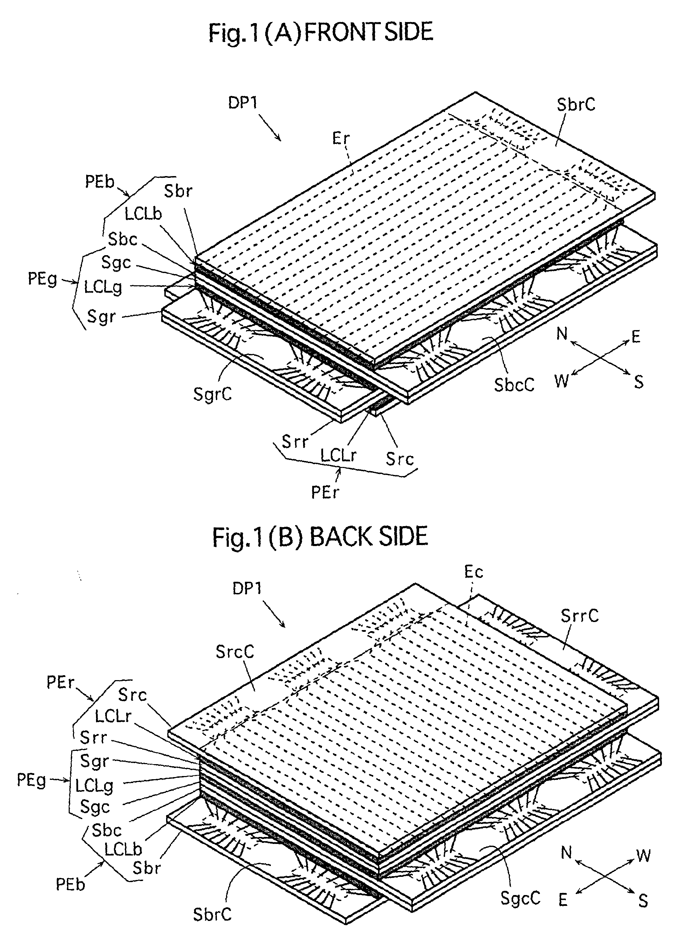

[4-1] Figs. 1(A) and 1(B) are schematic perspective views of an example of the multi-layer display panel, i.e., a multi-layer liquid crystal display panel (multi-layer LCD panel) DP1. Fig. 1(A) shows the display panel DP1 viewed from the observation side (front side), and Fig. 1(B) shows the display panel DP1 viewed from the back side, which is opposite side of the observation side.

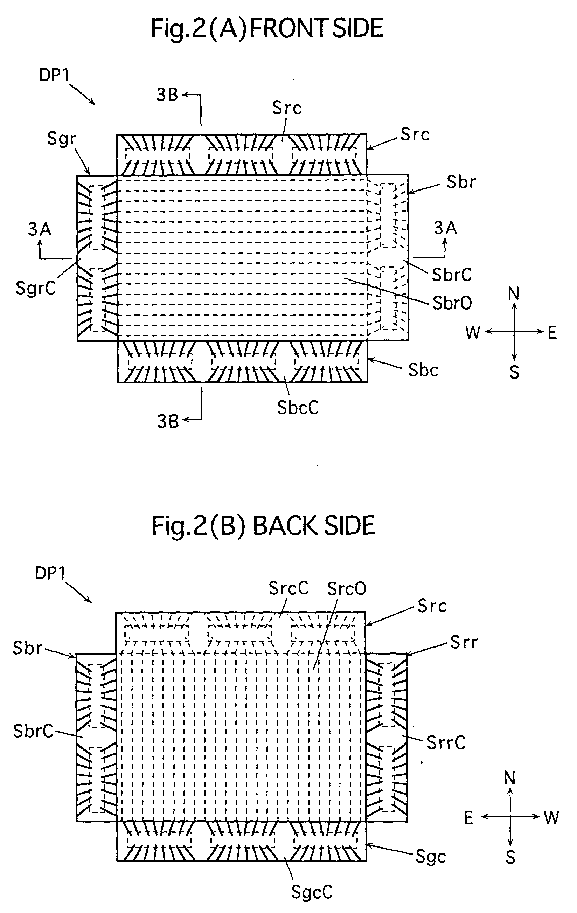

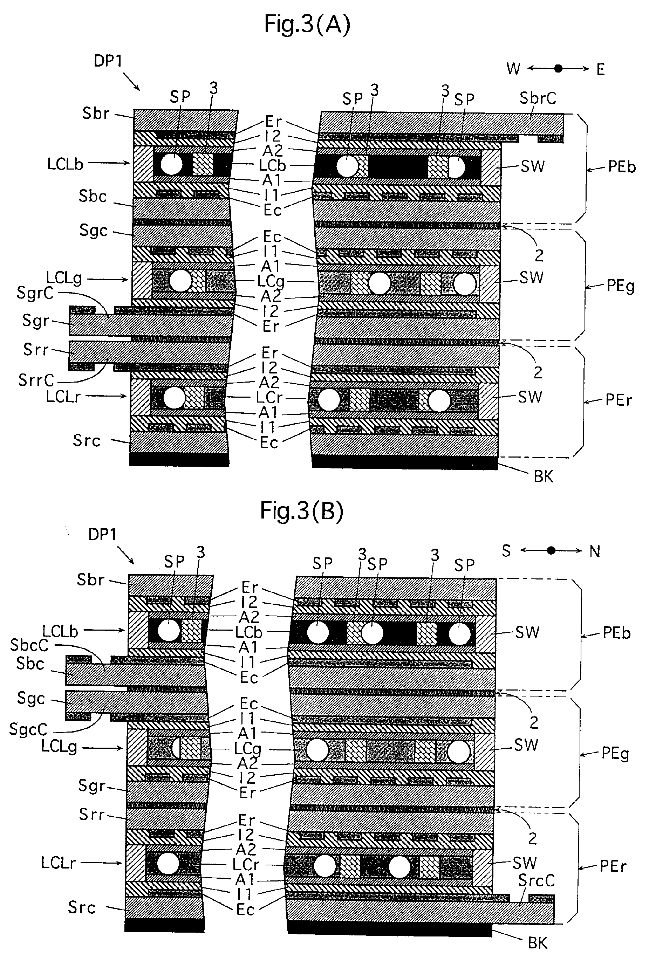

Figs. 2(A) and 2(B) are plans showing the front side and the back side of the multi-layer LCD panel DP1, respectively. Figs. 3(A) and 3(B) show schematic cross sections of the display panel DP1 taken along lines 3A-3A and 3B-3B in Fig. 2(A), respectively.

The multi-layer LCD panel DP1 is a liquid crystal display panel of a reflection type.

The multi-layer LCD panel DP1 has three panel elements PEb, PEg and PEr layered together as shown in Fig. 3(A) and others.

Each of the panel elements PEb, PEg and PEr is of the reflection type. The panel elements PEb, PEg and PEr are provided for display in blue, green and red, respectively. As will be described later in greater detail, the panel elements PEb, PEg and PEr include liquid crystal having selective reflection wavelengths in blue, green and red ranges, respectively.

The display by the multi-layer LCD panel DP1 is viewed from the side of the panel element PEb (i.e., upper side in Fig. 3(A)). The panel element PEb is located nearest to the observation side, and the panel element PEr is located remotest from the observation side.

In the following description, the side viewed from the observation side may be referred to as front side, and the side remote from the observation side may be referred to as back side. In Fig. 2(A), the upper, lower, left and right sides of the multi-layer LCD panel DP1 and the parts (e.g., the panel elements) thereof may be referred to as north (N), south (S), west (W) and east (E) sides, respectively.

A black light absorber layer BK is arranged on the back side of the panel element PEr located remotest from the observation side as shown in Figs. 3(A) and 3(B). In the figures other than Figs. 3(A) and 3(B), the light absorber layer BK is not shown.

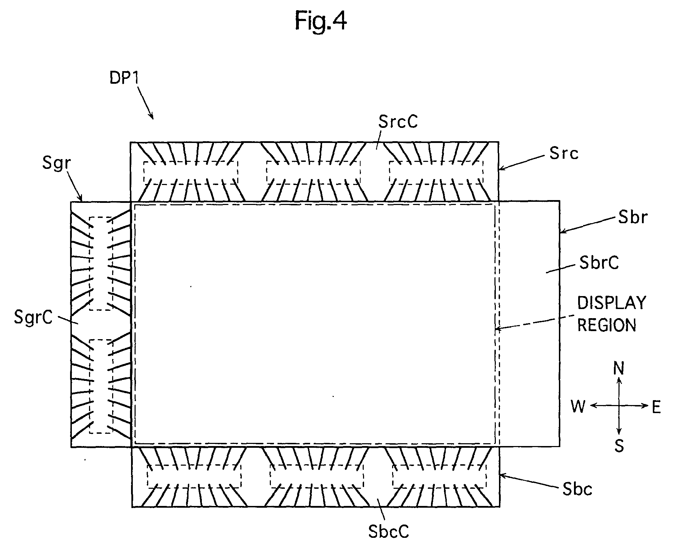

The multi-layer LCD panel DP1 has a lap-over portion where the panel elements PEb, PEg and PEr are overlapping with each other. In the multi-layer LCD panel DP1, a central portion of the lap-over portion is utilized as a display region, as shown in Fig. 4. The display region is rectangular. Fig. 4 is a plan of the display panel DP1 viewed from the front side.

The neighboring panel elements are adhered together by an adhesive 2 as shown in Figs. 3(A) and 3(B). In the figures other than Figs. 3(A) and 3(B), the adhesive 2 is not shown. In this example, an adhesive film is employed as the adhesive 2. Instead of the adhesive film, double-faced tape or liquid adhesive may be used as the adhesive. The double-faced tape may include, e.g., acrylic adhesive. The liquid adhesive may be ultraviolet-curing resin or thermosetting silicone-containing adhesive. The liquid adhesive may be solidified by appropriate processing (e.g., irradiation with ultraviolet light or heating) depending on the adhesive after overlaying the panel elements. Since the adhesive film does not have a base film in contrast to the double-faced tape, the whole transparency of the display panel DP1 can be increased.

Each of the panel elements has a pair of substrates, between which a layer of the liquid crystal is held. In each panel element, each of the substrate is provided with an electrode for performing simple matrix driving of the panel element.

[4-2] Basic structures of the blue panel element PEb will now be described.

The panel element PEb has a pair of substrates Sbr and Sbc spaced by a predetermined distance from each other.

The substrates Sbr and Sbc in this example are formed of polycarbonate (PC) film. The substrates Sbr and Sbc have different sizes, but both are rectangular.

A column electrode Ec, an insulating film I1 and an orientation film A1 are successively formed on the substrate Sbc as shown in Figs. 3(A) and 3(B). The substrate Sbc provided with the column electrode Ec may be referred to as column substrate hereinafter.

A row electrode Er, an insulating film I2 and an orientation film A2 are successively formed on the substrate Sbr. The substrate Sbr provided with the row electrode Er may be referred to as row substrate in the following description.

The column electrode Ec and row electrode Er in this example are both made of ITO.

The column electrode Ec includes a plurality of parallel belt-like electrodes arranged with predetermined pitches in the display region. Likewise, the row electrode Er includes a plurality of parallel belt-like electrodes arranged with predetermined pitches in the display region. The column and row electrodes Ec and Er extend perpendicularly to each other in the display region.

The column electrode Ec and others are formed on a surface, opposed to the row substrate Sbr, of the substrate Sbc. Likewise, the row electrode Er and others are formed on a surface, opposed to the column substrate Sbc, of the substrate Sbr. The surface, on which the electrode is formed, of the substrate may be referred as electrode formation surface hereinafter.

A liquid crystal layer LCLb is held between the substrate Sbc provided with the column electrode Ec and the substrate Sbr provided with the row electrode Er.

The liquid crystal layer LCLb contains the liquid crystal LCb having the selective reflection wavelength in the blue range. The liquid crystal LCb in this example is a chiral nematic liquid crystal exhibiting a cholesteric phase in a room temperature. The liquid crystal layer LCLb includes, in addition to the liquid crystal LCb, spacers SP and columnar resin structures 3.

The spacer SP is arranged between the substrates Sbc and Sbr for controlling a thickness of the liquid crystal layer LCLb (thickness of liquid crystal LCb).

The columnar resin structure 3 is adhered to both the orientation films A1 and A2 on the substrates Sbc and Sbr. Thereby, the substrates Sbc and Sbr are adhered together. The columnar resin structure 3 increases the whole strength of the panel element PEb.

A seal wall SW made of resin is arranged at a peripheral portion of the liquid crystal layer LCLb between the substrates Sbc and Sbr for preventing leakage of the liquid crystal held between the substrates Sbc and Sbr.

[4-3] The basic structure of the blue panel element PEb has been described. The green and red panel elements PEg and PEr have the basic structures similar to that of the blue panel element PEb. The basic structures of the green and red panel elements PEg and PEr will be briefly described below.

The green panel element PEg has a column substrate Sgc provided with a column electrode Ec and a row substrate Sgr provided with a row electrode Er. In addition to the column electrode, the column substrate Sgc is also provided with an insulating film I1 and an orientation film A1. In addition to the row electrode, the row substrate Sgr is further provided with an insulating film I2 and an orientation film A2. In the green panel element PEg, a liquid crystal layer LCLg is arranged between the substrates Sgc and Sgr. The liquid crystal layer LCLg includes a liquid crystal LCg having the selective reflection wavelength in the green range.

The red panel element PEr has a column substrate Src provided with a column electrode Ec and a row substrate Srr provided with a row electrode Er. In addition to the column electrode, the column substrate Src is also provided with an insulating film I1 and an orientation film A1. In addition to the row electrode, the row substrate Srr is further provided with an insulating film 12 and an orientation film A2. In the red panel element PEr, a liquid crystal layer LCLr is arranged between the substrates Src and Srr. The liquid crystal layer LCLr includes a liquid crystal LCr having the selective reflection wavelength in the red range.

[4-4] As described above, each panel element is provided with the column and row electrodes for performing the simple matrix drive.

When performing the simple matrix drive of each panel element, the column electrode of each panel element is used as a scanning electrode in this example, and the row electrode of each panel element is used as a signal electrode (data electrode).

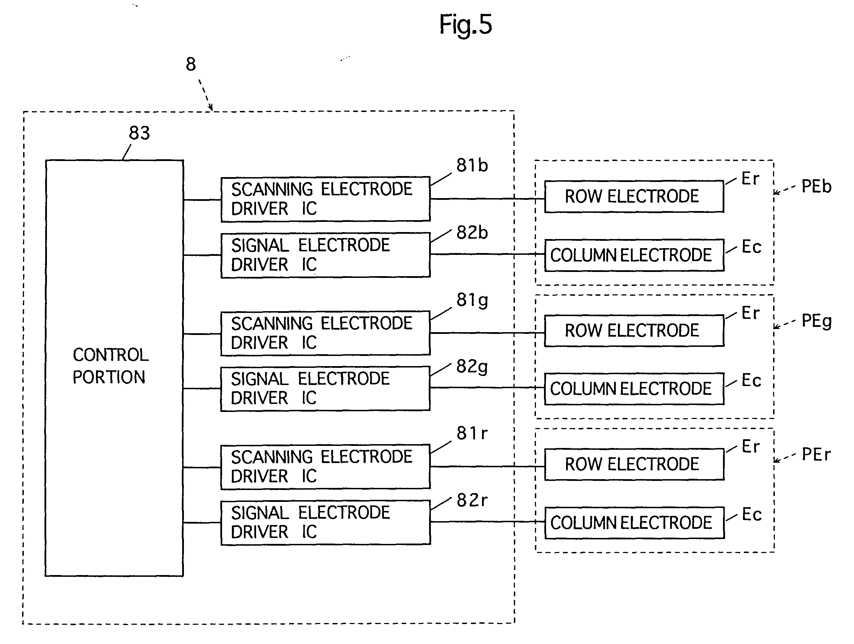

Fig. 5 is a schematic block diagram showing an example (driver device 8) of a driver device of the multi-layer LCD panel DPI for performing the full color display by performing the simple matrix driving of the respective panel elements.

The driver device 8 has scanning electrode driver ICs 81b, 81g and 81r for driving the row electrodes (scanning electrodes) Er of the panel elements PEb, PEg and PEr. The driver device 8 further has signal electrode driver ICs 82b, 82g and 82r for driving the column electrodes (signal electrodes) Ec of the panel elements PEb, PEg and PEr.

These driver ICs are controlled by a control portion (control unit) 83. The control portion 83 applies a voltage across the column and row electrodes of each panel element via the driver ICs for driving each panel element to perform image display. The manner of driving each panel element by the driver device 8 will be described later in greater detail.

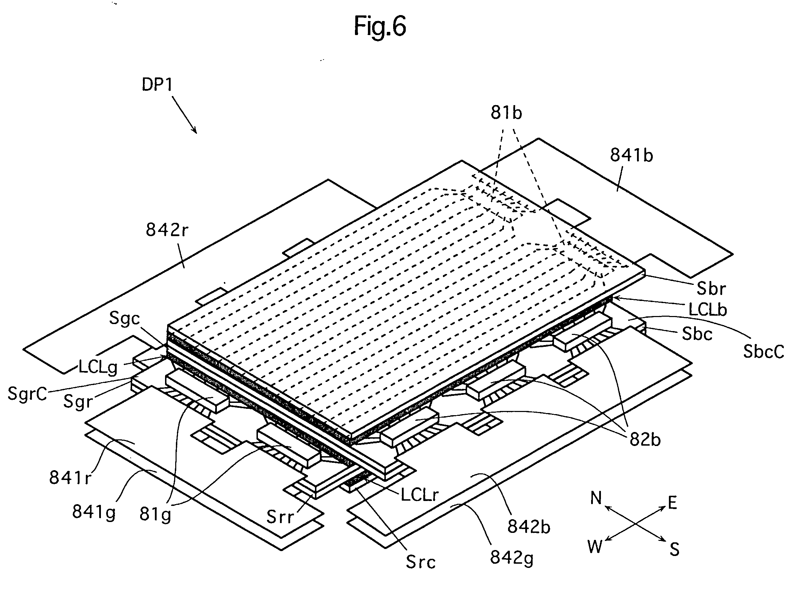

[4-5] In the multi-layer LCD panel DP1, each of the scanning electrode driver ICs and the signal electrode driver ICs is directly mounted on the corresponding substrate of the panel element, as shown in Fig. 6. More specifically, a so-called COF (Chip On Film) structure is employed in the multi-layer LCD panel DP1.

Fig. 1(A) and others show the display panel DP1 not carrying the driver ICs, and the positions for mounting the driver ICs are indicated by dotted line.

By directly mounting the driver IC on the substrate of the panel element, the electrode formed on the substrate is connected to the driver IC mounted on the same substrate.

Each driver IC mounted on the substrate of the panel element is connected to the control portion 83 via a junction substrate connected to each substrate.

In the blue panel element PEb, junction substrates 841b and 842b are connected to the substrates Sbr carrying the driver IC 81b and the substrate Sbc carrying the driver IC 82b, respectively.

In the green panel element PEg, junction substrates 841g and 842g are connected to the substrate Sgr carrying the driver IC 81g and the substrate Sgc carrying the driver IC 82g, respectively.

In the red panel element PEr, junction substrates 841r and 842r are connected to the substrate Srr carrying the driver IC 81r and the substrate Src carrying the driver IC 82r, respectively.

[4-6] In the multi-layer LCD panel DP1, the respective substrates of the panel elements overlap with each other in the following fashion for mounting the driver ICs directly on each substrate and other purposes. The three panel elements PEb, PEg and PEr overlap as follows.

In each panel element, the rectangular column substrate and the rectangular row substrate overlap with each other to form an L-shaped form with the liquid crystal layer therebetween.

The liquid crystal layer is located between the portion of the column substrate overlapping with the row substrate and the portion of the row substrate overlapping with the column substrate.

The three panel elements PEb, PEg and PEr overlap with each other such that the overlapping portions of the column and row substrates in each panel element overlap with the other overlapping portions of the other panel elements. In this example, all the overlapping portions of the column and row substrates in the respective panel elements have the same sizes, and the three panel elements overlap not to cause shifting between these portions.

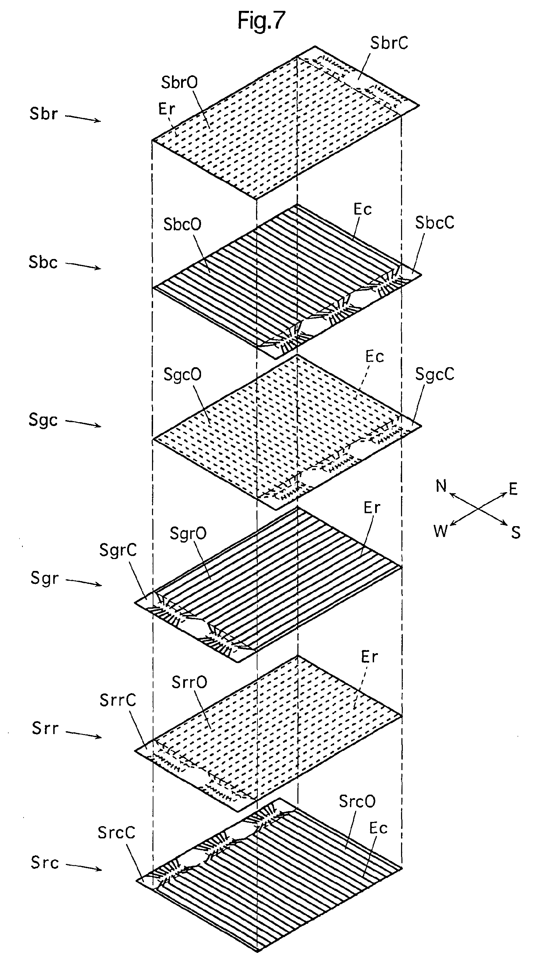

Owing to the above structures, each substrate of each panel element has the following portions. Description will now be given with reference to Fig. 7 showing an exploded view of the multi-layer LCD panel DP1. Fig. 7 shows only the substrates of each panel element, and does not show the liquid crystal layers and others.

The row substrate Sbr of the blue panel element PEb has an overlap portion SbrO overlapping with all the other five substrates Sbc, Sgc, Sgr, Srr and Src, and a connection portion SbrC for connecting the row electrode Er on the substrate Sbr to the driver IC.

Likewise, the column substrate Sbc of the blue panel element PEb has an overlap portion SbcO overlapping with all the other five substrates, and a connection portion SbcC for connecting the column electrode Ec on the substrate Sbc to the driver IC.

The column substrate Sgc of the green panel element PEg has an overlap portion SgcO overlapping with all the other five substrates, and a connection portion SgcC for connecting the column electrode Ec on the substrate Sgc to the driver IC.

The row substrate Sgr of the green panel element PEg has an overlap portion SgrO overlapping with all the other five substrates, and a connection portion SgrC for connecting the row electrode Er on the substrate Sgr to the driver IC.

The row substrate Srr of the red panel element PEr has an overlap portion SrrO overlapping with all the other five substrates, and a connection portion SrrC for connecting the row electrode Er on the substrate Srr to the driver IC.

The column substrate Src of the red panel element PEr has an overlap portion SrcO overlapping with all the other five substrates, and a connection portion SrcC for connecting the column electrode Ec on the substrate Src to the driver IC.

The connection portion SbrC of the row substrate Sbr of the blue panel element PEb extends from the overlap portion SbrO in the same direction as the row electrode Er on the row substrate Sbr extending in the display region. The connection portion SbrC is a substrate portion for mounting the scanning electrode driver IC 81b and for connecting the junction substrate 841b. The connection portion SbrC is provided with an electrode pattern for connecting the row electrode Er to an output lead of the driver IC 81b. More specifically, the connection portion SbrC is provided with an electrode pattern for transforming the pitch of the row electrode Er in the display region to an output lead pitch of the driver IC 81b. The connection portion SbrC is also provided with an electrode pattern for connecting an input lead of the driver IC 81b to the junction substrate 841b. The above is also true with respect to the connection portions of the other substrates.

In the blue panel element PEb, the extending direction of the connection portion SbrC of the row substrate Sbr and the extending direction of the connection portion SbcC of the column substrate Sbc, with respect to a center defined by the overlap portions of the row and column substrates Sbr and Sbc, form an angle of 90 degrees. This is true also with respect to the other panel elements.

The connection portion of each substrate is a substrate projected portion projecting outward from the lap-over portion, where three panel elements (six panel element substrates) are overlapping to each other, when viewing the whole display panel DP1 (see Fig. 1(A) and others).

The substrates of the respective panel elements are layered in the following order. From the observation side,
the row substrate Sbr of blue panel element PEb,
the column substrate Sbc of blue panel element PEb,
the column substrate Sgc of green panel element PEg,
the row substrate Sgr of green panel element PEg,
the row substrate Srr of red panel element PEr and
the column substrate Src of red panel element PEr are layered in this order.

In the multi-layer LCD panel DP1, the neighboring two substrates of the neighboring two panel elements are both the column substrates or the row substrates.

In the multi-layer LCD panel DP1, the connection portions of the neighboring two substrates of the neighboring two panel elements extend in the same direction.

More specifically, the extending direction of the connection portion SbcC of the column substrate Sbc of the blue panel element PEb is the same as the extending direction of the connection portion SgcC of the column substrate Sgc, neighboring to the column substrate Sbc, of the green panel element PEg. These connection portions SbcC and SgcC extending in the same direction have the same width in their extending direction. The width of these connection portions is determined to be equal to a minimum value, which is required for mounting the driver IC and connecting the junction substrate. The widths of the other connection portions of the substrates are determined in the same manner.

The extending direction of the connection portion SgrC of the row substrate Sgr of the green panel element PEg is the same as the extending direction of the connection portion SrrC of the row substrate Srr, neighboring to the row substrate Sgr, of the red panel element PEr. These connection portions SgrC and SrrC extending in the same direction have the same width in their extending direction.

In the multi-layer LCD panel DP1, the extending directions of the connection portions of the respective substrates are angularly shifted by 90 degrees as follows.

The extending directions are shifted by 90 degrees in the order of:
(1) the extending direction of the connection portion SbrC of row substrate Sbr of blue panel element PEb
   (= east direction),
(2) the extending direction of the connection portion SbcC of column substrate Sbc of blue panel element PEb
   (= the extending direction of the connection portion SgcC of column substrate Sgc of green panel element PEg
   = south direction),
(3) the extending direction of the connection portion SgrC of row substrate Sgr of green panel element PEg
   (= the extending direction of the connection portion SrrC of row substrate Srr of red panel element PEr
   = west direction), and
(4) the extending direction of the connection portion SrcC of column substrate Src of red panel element PEr
   (= north direction).

Owing to the above, the multi-layer LCD panel DP1 is configured such that the electrode formation surface (driver IC mounting surface) of each substrate connection portion is not hidden by the other substrates, and is exposed.

As shown in Fig. 2(A), the electrode formation surfaces of the connection portion SbcC of column substrate Sbc of blue panel element PEb, the connection portion SgrC of row substrate Sgr of green panel element PEg and the connection portion SrcC of column substrate Src of red panel element PEr are exposed on the front side.

As shown in Fig. 2(B), the electrode formation surfaces of the connection portion SrrC of row substrate Srr of red panel element PEr, the connection portion SgcC of column substrate Sgc of green panel element PEg and the connection portion SbrC of row substrate Sbr of blue panel element PEb are exposed on the back side.

On the east side, the connection portion other than the connection portion SbrC of row substrate Sbr of blue panel element PEb does not project, and therefore the electrode formation surface of this connection portion SbrC is exposed.

Likewise, on the north side, the connection portion other than the connection portion SrcC of column substrate Src of red panel element PEr does not project, and therefore the electrode formation surface of this connection portion SrcC is exposed.

On the south side, the two connection portions SbcC and SgcC of the column substrates Sbc and Sgc of the blue and green panel elements PEb and PEg project, but the electrode formation surfaces of these connection portions are located on the front and rear sides, respectively, so that these two electrode formation surfaces are exposed. Although these two connection portions have the same width, the electrode formation surfaces of these two connection portions are exposed.

Likewise, on the west side, the two connection portions SgrC and SrrC of the row substrates Sgr and Srr of green and red panel elements PEg and PEr project, but the electrode formation surfaces of these connection portions are exposed for the similar reason. Although these two connection portions have the same width, the electrode formation surfaces of these two connection portions are exposed.

Accordingly, when manufacturing the multi-layer LCD panel DP1, the driver ICs can be connected to the respective substrates after overlaying the respective panel elements, as will be described later in connection with the manufacturing method. Also, the junction substrates can be connected to the respective substrates after overlaying the panel elements. This facilitates the manufacturing of the multi-layer LCD panel DP1.

In the multi-layer LCD panel DP1, the row substrates Sbr, Sgr and Srr of the respective panel elements have the same form and size, and carry the row electrodes of the same pattern. Likewise, the column substrates Sbc, Sgc and Src of the respective panel elements have the same form and size, and carry the column electrodes of the same pattern. Accordingly, parts (substrates and others) required for producing the display panel DP1 can be small in number. This improves the manufacturing efficiency.

After mounting the driver ICs on the respective connection portions, and connecting the junction substrate to the respective connection portions as shown in Fig. 6, for reducing the frame width and size of the multi-layer LCD panel DP1, each of the junction substrates may be folded toward the back side of the multi-layer LCD panel DP1 as shown in Fig. 5, more specifically, each of the junction substrates may be folded such that an end portion, opposite to an end portion connecting to the panel element substrate, of the junction substrate is located at the back side. For example, a flexible substrate may be employed as the junction substrate for allowing the above folding.

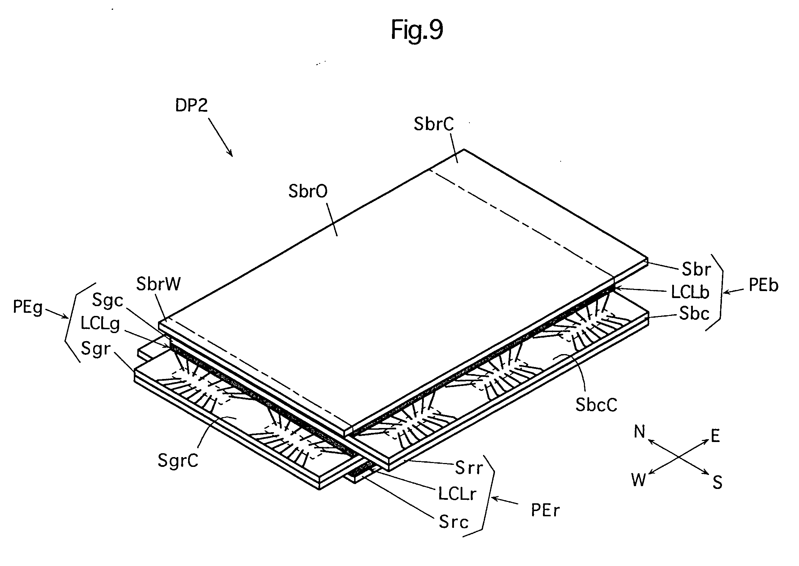

[5] Each substrate of each panel element may be provided with an extending portion, which extends from the overlap portion overlapping with all the other substrates, and is not used as a connection portion for connecting the electrode on the substrate to a driver element (e.g., driver IC). The multi-layer LCD panel having such an extending portion is shown in Fig. 9.

A multi-layer LCD panel DP2 shown in Fig. 9 is different from the multi-layer LCD panel DPI in Fig. 1(A) except for the following.

In the multi-layer LCD panel DP2, the row substrate Sbr of the blue panel element PEb has the overlap portion SbrO overlapping with all the other substrates and the connection portion SbrC extending toward the east side and used for mounting the driver IC, and further has an extending portion SbrW extended toward the west side.

The extending portion SbrW extends in the same direction as the extending portion SgrC of the substrate Sgr, but only has a width, which does not impede the mounting of the driver IC on the connection portion SgrC and the connection of the junction substrate to the connection portion SgrC. Therefore, operation such as mounting of the driver IC on the connection portion SgrC is not impeded.

In view of circumstances or the like when producing the multi-layer LCD panel DP2, the substrate of the panel element may have the extending portion not used as the connection portion, if it does not impede the operation such as mounting of the driver IC, as described above.

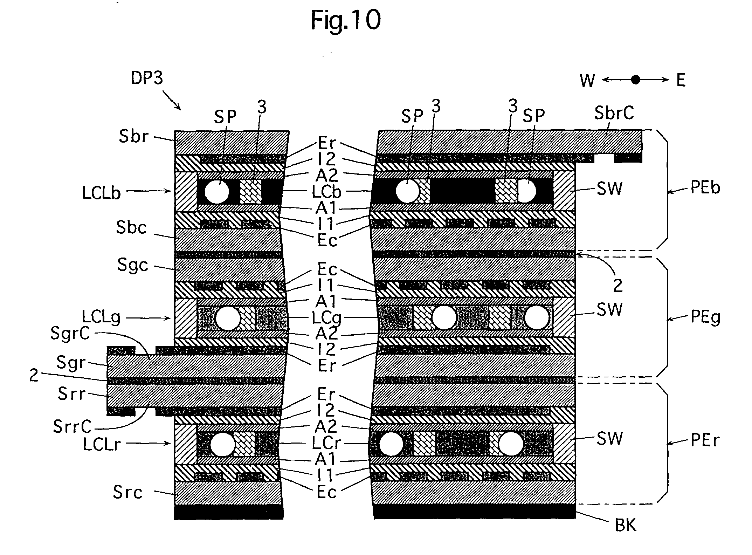

[6] In the multi-layer LCD panel DPI shown in Fig. 1(A) and others, the neighboring substrates of the neighboring panel elements are adhered together only at their overlap portions by the adhesive 2. However, the neighboring substrates of the neighboring panel elements may be adhered together by the adhesive at their connection portions extending in the same direction in addition to their overlap portions, as is done in a multi-layer LCD panel DP3 shown in Fig. 10.

In Fig. 10, the connection portion SgrC of the substrate Sgr and the connection portion SrrC of the substrate Srr are adhered together by the adhesive 2. The connection portions of the same extending direction, which are not shown, are likewise adhered by the adhesive.

By adhering the connection portions of the same extending direction, the strength of these connection portions can be increased. Thereby, damages to the electrodes on these connection portions can be suppressed. Also, operations such as mounting of the driver ICs on the two connection portions of the same extending direction can be performed easily, as will be described in greater detail with respect to the manufacturing method.

[7] In the multi-layer LCD panel DP1 shown in Fig. 6, the driver IC is directly mounted on each substrate for connecting the electrode on the substrate to the driver IC. However, a driver IC carrier substrate carrying the driver IC may be connected to the substrate of the panel element for connecting the electrode on the panel element substrate to the driver IC.

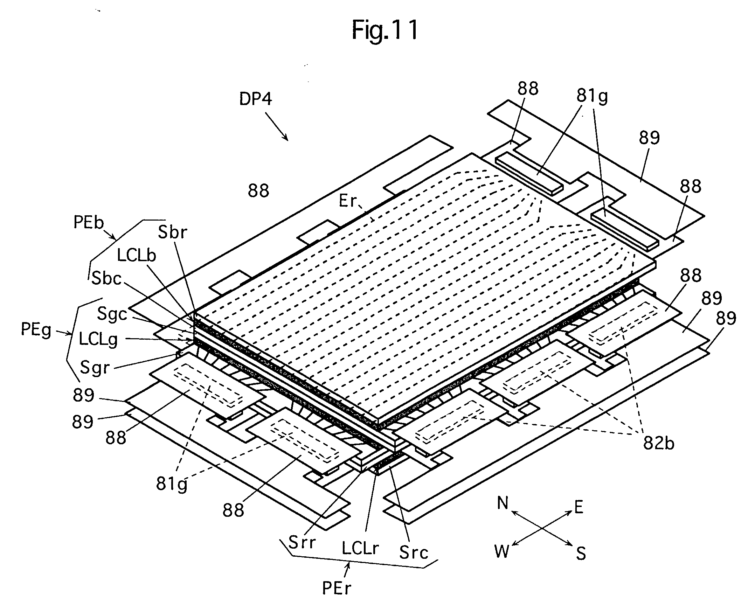

Fig. 11 shows a multi-layer LCD panel having such a structure.

In a multi-layer LCD panel DP4 shown in Fig. 11, a driver IC carrier substrate 88 carrying the driver IC is connected to each substrate of each panel element. Each driver IC carrier substrate 88 is so called a TCP (Tape Carrier Package). The driver IC carrier substrate 88 is a flexible substrate.

A junction substrate 89 is connected to each driver IC carrier substrate 88. This junction substrate 89 is provided for connecting the driver IC on the driver IC carrier substrate 88 to the control portion 83 of the driver device 8.

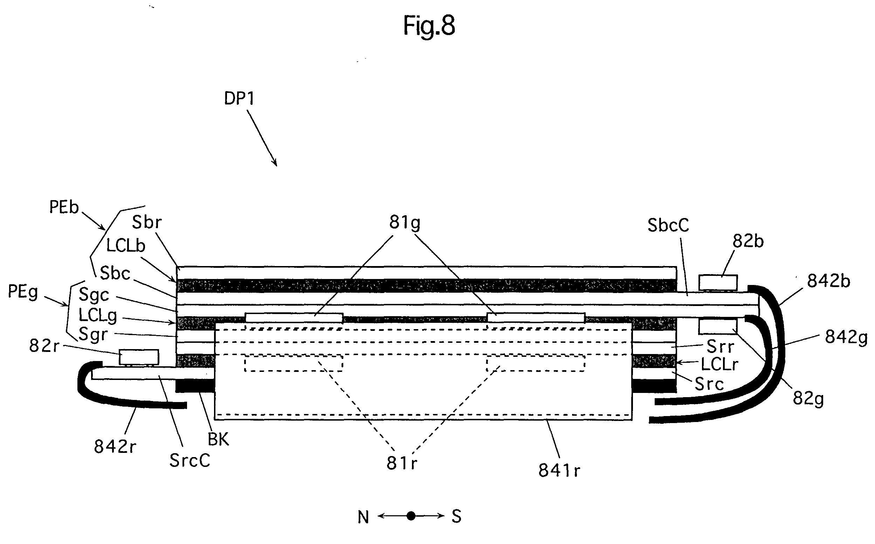

Each driver IC carrier substrate 88 or each junction substrate 89 may be folded toward the back side of the multi-layer LCD panel DP4, similarly to the junction substrate shown in Fig. 8, whereby the frame width of the multi-layer LCD panel DP4 can be reduced.

In the multi-layer LCD panel DP4, it is merely required to connect only the driver IC carrier substrate 88 to the connection portion of each panel element substrate. Therefore, the width of each connection portion can be reduced, and therefore the frame width can be reduced, as compared with the multi-layer LCD panel DP1 shown in Fig. 6.

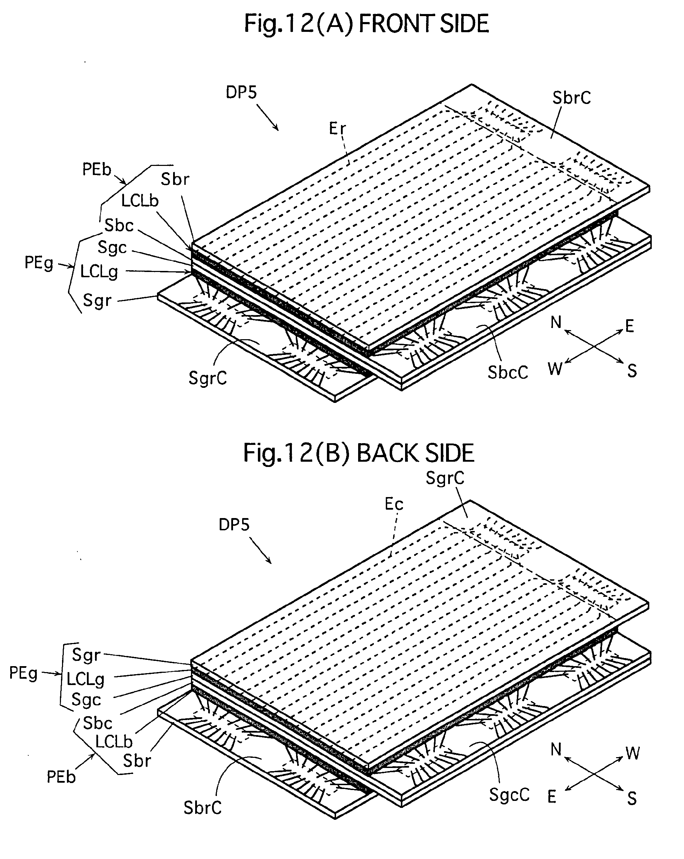

[8] Figs. 12(A) and 12(B) are schematic perspective views of still another example of the multi-layer LCD panel.

A multi-layer LCD panel DP5 shown in Figs. 12(A) and 12(B) has two liquid crystal panel elements PEb and PEg layered together.

The panel elements PEb and PEg of the display panel DP5 have the same basic structures as the panel element of the display panel DP1 shown in Fig. 1(A).

In the multi-layer LCD panel DP5, the row substrate Sbr of blue panel element PEb, the column substrate Sbc of blue panel element PEb, the column substrate Sgc of green panel element PEg and the row substrate Sgr of green panel element PEg are layered in this order from the observation side.

That is, in the multi-layer LCD panel DP5, the inner substrate Sbc of blue panel element PEb and the inner substrate Sgc of green panel element PEg are the column substrates, respectively.

In the multi-layer LCD panel DP5, the connection portions of the neighboring two substrates of the neighboring two panel elements extend in the same direction. That is, the connection portions of the inner substrates extend in the same direction.

In the multi-layer LCD panel DP5, the extending directions of the connection portions of the substrates are angularly shifted by 90 degrees in the following order:
(1) the extending direction of the connection portion SbrC of row substrate Sbr of blue panel element PEb,
(2) the extending direction of the connection portion SbcC of column substrate Sbc of blue panel element PEb
   (= the extending direction of the connection portion SgcC of column substrate Sgc of green panel element PEg), and
(3) the extending direction of the connection portion SgrC of row substrate Sgr of green panel element PEg.

Owing to the above structure, all the electrode formation surfaces of the substrate connection portions are exposed in the multi-layer LCD panel DP5, similarly to the display panel DP1 in Fig. 1(A).

In the process of producing the multi-layer LCD panel DP5, therefore, the driver IC can be mounted onto each substrate after overlaying the panel elements together. Further, the junction substrate can be connected to each panel element substrate after overlaying the panel elements. Thereby, the multi-layer LCD panel DP5 can be easily produced.

In the multi-layer LCD panel DP5 having two panel elements layered together, the connection portions extend in three directions so that the frame width can be smaller than those in display panels DP6 and DP7, each of which has two panel elements layered together as will be described later.

The multi-layer LCD panel DP5 has the same structure as the multi-layer LCD panel DP1 shown in Fig. 1(A) except that the panel element PEr, located in the position remotest from the observation side, is eliminated in the multi-layer LCD panel DP5.

Also in a multi-layer LCD panel (not shown) having two layered panel elements, and having the same structure as the display panel DP1 shown in Fig. 1(A) except that the panel element PEb, located nearest to the observation side, is removed, each of the electrode formation surfaces of the connection portions can be exposed, and the four connection portions can extend only in three directions, similar to the display panel DP5.

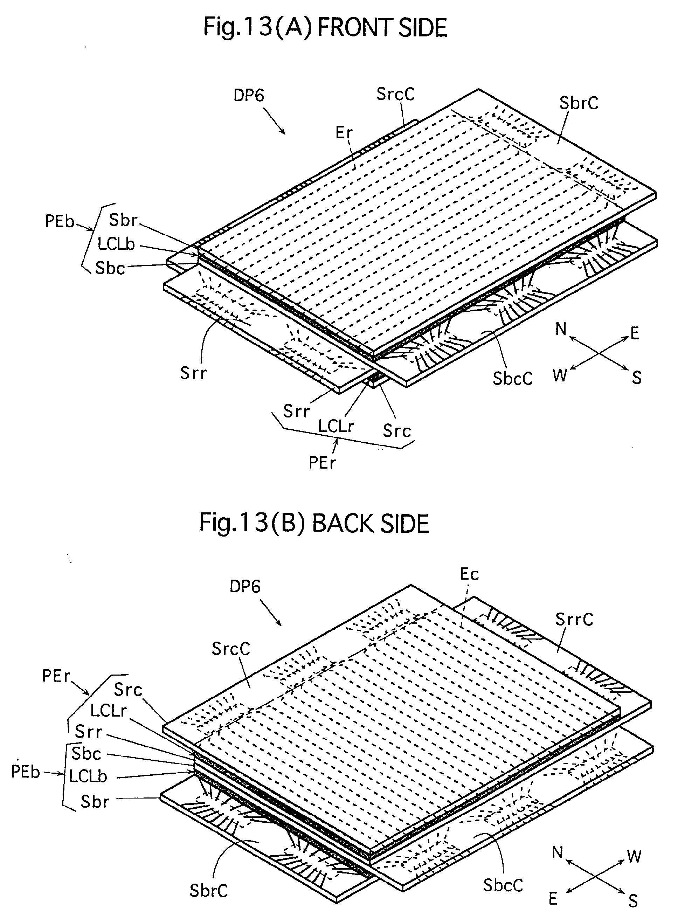

[9] Figs. 13(A) and 13(B) are schematic perspective views showing further another example of the multi-layer LCD panel.

The multi-layer LCD panel DP6 shown in Figs. 13(A) and 13(B) has two liquid crystal panel elements PEb and PEr layered together.

The basic structures of the panel elements PEb and PEr of the display panel DP6 are the same as those of the panel elements of the display panel DP1 shown in Fig. 1(A).

The substrates of the respective panel elements are layered in the following order.

From the observation side, the row substrate Sbr of blue panel element PEb, the column substrate Sbc of blue panel element PEb, the row substrate Srr of red panel element PEr and the column substrate Src of red panel element PEr are layered in this order.

In the multi-layer LCD panel DP6, the extending directions of the respective connection portions of the substrates are different, and are shifted by 90 degrees in a predetermined order.

More specifically, the extending directions of the connection portions are shifted by 90 degrees in the following order:
(1) The extending direction of the connection portion Sbrc of row substrate Sbr of blue panel element PEb,
(2) the extending direction of the connection portion SbcC of column substrate Sbc of blue panel element PEb,
(3) the extending direction of the connection portion SrrC of row substrate Srr of red panel element PEr, and
(4) the extending direction of the connection portion SrcC of column substrate Src of red panel element PEr.

Owing to the above structure, all the electrode formation surfaces of the substrate connection portions are exposed in the multi-layer LCD panel DP6, similarly to the display panel DP1 in Fig. 1(A).

In the process of producing the multi-layer LCD panel DP6, therefore, the driver IC can be mounted onto each substrate after overlaying the panel elements together. Further, the junction substrate can be connected to each substrate after overlaying the panel elements. Thereby, the multi-layer LCD panel DP6 can be easily produced.

The multi-layer LCD panel DP6 has the same structure as the multi-layer LCD panel DP1 in Fig. 1(A) except that the panel element PEg in the middle position is eliminated in the multi-layer LCD panel DP6.

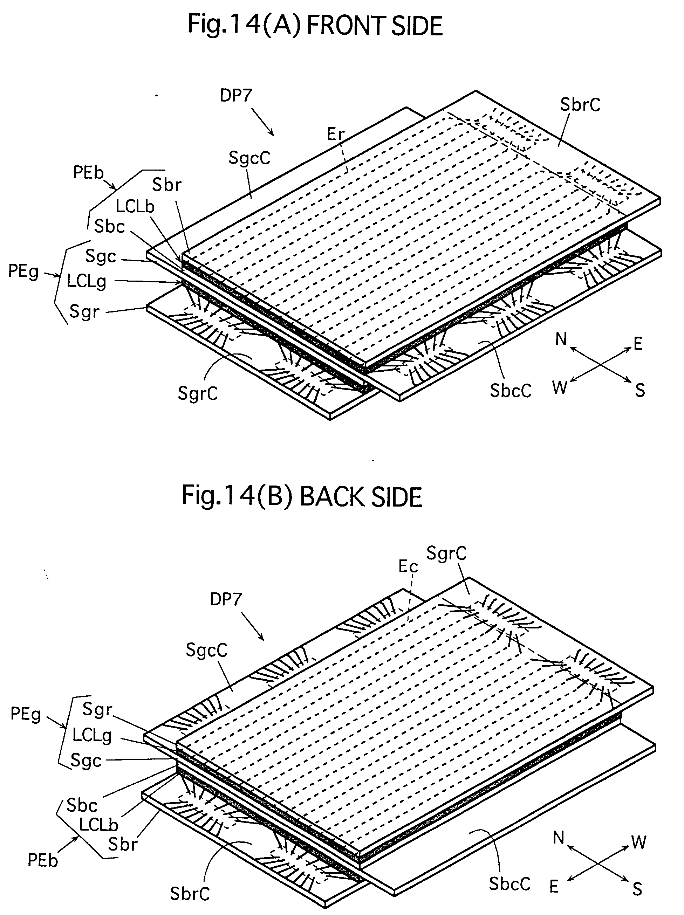

[10] Figs. 14(A) and 14(B) are schematic perspective views of further another example of the multi-layer LCD panel.

A multi-layer LCD panel DP7 shown in Figs. 14(A) and 14(B) has two layered liquid crystal panel elements PEb and PEg, similarly to the display panel DP5 in Figs. 12(A) and 12(B).

The basic structures of the panel elements PEb and PEg of the display panel DP5 are the same as those of the display panel DP1 in Fig. 1(A).

In the multi-layer LCD panel DP7, the row substrate Sbr of blue panel element PEb, the column substrate Sbc of blue panel element PEb, the column substrate Sgc of green panel element PEg and row substrate Sgr of green panel element PEg are layered in this order from the observation side.

The layering order of the substrates in the multi-layer LCD panel DP7 of Figs. 14(A) and 14(B) is the same as that in the display panel DP5 of Figs. 12(A) and 12(B).

The display panel DP7 is different from multi-layer LCD panel DP5 in that the extending directions of the respective connection portions of the substrates are angularly shifted by 90 degrees in the following order.

The extending directions of the respective connection portions of the substrates in the display panel DP7 are shifted by 90 degrees in the order of:
(1) the extending direction of the connection portion SbrC of row substrate Sbr of blue panel element PEb,
(2) the extending direction of the connection portion SbcC of column substrate Sbc of blue panel element PEb,
(3) the extending direction of the connection portion SgrC of row substrate Sgr of green panel element PEg, and
(4) the extending direction of the connection portion SgcC of column substrate Sgc of green panel element PEg.

Owing to the above structure, all the electrode formation surfaces of the substrate connection portions are exposed in the multi-layer LCD panel DP7, similarly to the display panel DP1 in Fig. 1(A).

In the process of producing the multi-layer LCD panel DP7, therefore, the driver IC can be mounted onto each substrate after overlaying the panel elements together. Further, the junction substrate can be connected to each substrate after overlaying the panel elements. Thereby, the multi-layer LCD panel DP7 can be easily produced.

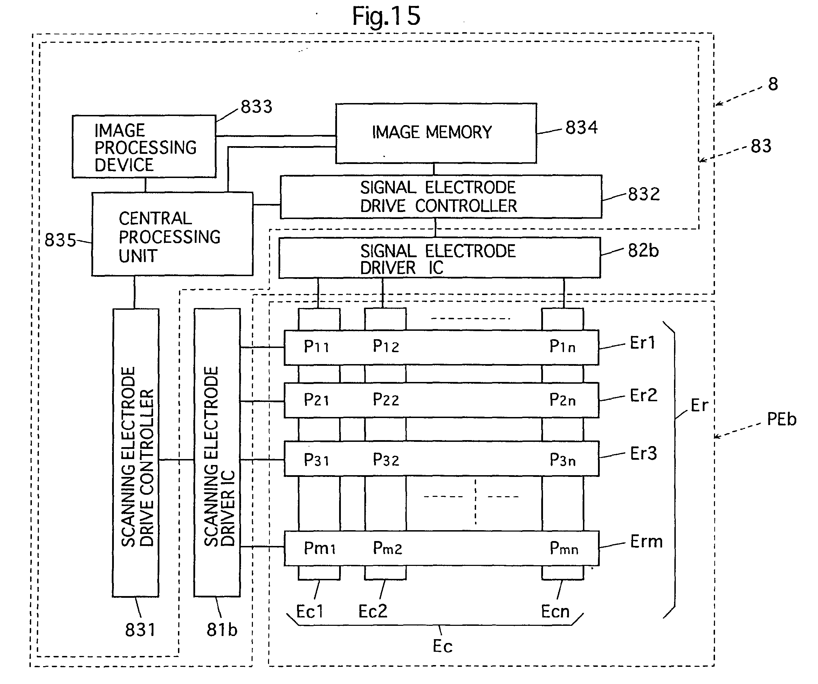

[11] Description will now be given on the method of performing the simple matrix driving of the multi-layer liquid crystal display panel DP1 shown in Fig. 1(A) with reference to Fig. 15.

Fig. 15 shows the driver device 8 for the display panel DPI together with the column electrode Ec and row electrode Er of the blue panel element PEb. Although Fig. 15 does not show the electrodes of the green and red panel elements PEg and PEr, these panel elements are driven in a manner similar to the following manner of driving the blue panel element.

The column electrode (signal electrode) Ec is formed of the plurality of belt-like electrodes as described before, and the belt-like electrodes forming the column electrode Ec correspond to electrodes Ec1 - Ecn (n: natural number) in Fig. 15, respectively.

Likewise, the row electrode (scanning electrode) Er is formed of the plurality of belt-like electrodes as described before, and the belt-like electrodes forming the row electrode Er correspond to electrodes Er1 - Erm (m: natural number) in Fig. 15, respectively.

In the blue panel element PEb, the orientation of the liquid crystal can be changed in each unit formed of a region, where one scanning electrode and one signal electrode cross each other, and its neighboring region. In the blue panel element PEb, the region, where one scanning electrode and one signal electrode cross each other, and its neighboring region form one pixel. The pixel in the position, where the scanning and signal electrodes Erp and Ecq cross each other, is represented as the pixel Ppq, where p is a natural number satisfying a relationship of 1≤p≤m, and q is a natural number satisfying a relationship of 1≤q≤n.

In blue panel element PEb, an image corresponding to the image data can be displayed in the following manner based on the image data, which is written into an image memory 834 by an image processing device 833 and a central processing unit 835.

The scanning electrode driver IC 81b issues a select signal to a predetermined scanning electrode among the scanning electrodes Er1 - Erm for setting the scanning electrode to a selected state, and issues an non-selection signal to the other scanning electrodes for setting the other scanning electrodes to unselected states. The scanning electrode driver IC 81b switches the scanning electrodes to be set to the selected state at predetermined time intervals, and each scanning electrode is successively set to the selected state. The above control is performed by a scanning electrode drive controller 831.

The signal electrode driver IC 82b issues signal voltages for rewriting the respective pixels on the scanning electrode in the selected state, and more specifically, issues simultaneously the signal voltages corresponding to the image data of the these drive target pixels to the respective signal electrodes so that the orientation of the liquid crystal of these drive target pixels change in accordance with the image data. For example, when the scanning electrode Er1 is selected, the orientations of the liquid crystal of the pixels P11 - P1n on the scanning electrode Er1 change in accordance with the image data of these drive target pixels. The voltage difference, which is produced between the voltage applied to the scanning electrode of the drive target pixel, and the voltage applied to the signal electrode and corresponding to the image data, is applied to the liquid crystal of the drive target pixel. Therefore, the orientation of the liquid crystal of the drive target pixel changes in accordance with the image data.

Every time the selected scanning electrode is changed, the signal electrode driver IC 82b changes the orientations of the liquid crystal of the drive target pixels in accordance with the image data. This control is performed by the signal electrode drive controller 832 in parallel with the operation of reading image data from the image memory 834.

As described above, the liquid crystal of the drive target pixel is supplied with the voltage corresponding to the image data (tone data) of the drive target pixel. Therefore, in accordance with the image data of the drive target pixel, the liquid crystal of the drive target pixel can be set to a planar state, a focal conic state or a state where these states are mixed at a ratio corresponding to the display tone. Accordingly, gradation display corresponding to the image data can be performed.

The green and red panel elements PEg and PEr can be driven in accordance with the image data in a similar manner as described above, and thereby can perform the gradation display. By driving the three panel elements PEb, PEg and PEr in accordance with the image data, the full color display can be performed.

The controllers 831 and 832, image processing device 833, image memory 834 and central processing unit 835 in Fig. 15 correspond to the control portion 83 in the driver device 8 shown in Fig. 5.

The other multi-layer LCD panels can be driven in the simple matrix driving manner similar to the above.

[12] Description will now be given below on the method of manufacturing the multi-layer display panel. In the following description, the method of manufacturing the multi-layer LCD panel DP1 shown in Fig. 6 is presented.

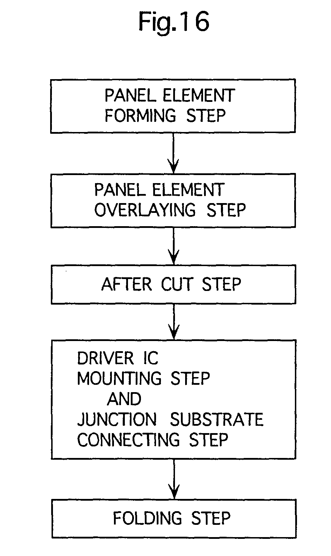

First, the methods of manufacturing the multi-layer LCD panel DPI is briefly given with reference to a flow chart shown in Fig. 16.

In a panel element forming step, the blue, green and red panel elements PEb, PEg and PEr are respectively formed. In this panel element forming step, each panel element is formed using resin substrates, each on which the electrode and others are formed.

In an overlaying step (panel element overlaying step), the panel elements thus formed are overlaid in a predetermined order. The positions are aligned before overlaying the panel elements. The neighboring panel elements are adhered together by an adhesive.

In an after cut step, an unnecessary portion (portion to be cut) is removed from each of the substrates of the overlaid panel elements. The portion to be cut (unnecessary portion) of each panel element will be described later. The portion to be cut depend on the substrate configurations and others used in the panel element forming step. Typically, the unnecessary portion (portion to be cut for exposing the electrode formation surface of the connection portion of the other substrate) is removed from each substrate so that the electrode formation surface of the connection portion for connecting the driver element is exposed in each substrate. Naturally, this after cut step is not necessary if each substrate does not have a portion to be cut.

When the after cut step is completed, the multi-layer LCD panel DP1 has the configuration, structure and others shown in Fig. 1(A) and others in this example. In the following description, the configuration of the substrate of the panel element at the time of completion of the after cut step, and in other words, the configuration of the substrate of the panel element at the start of the subsequent driver IC mounting step and the junction substrate connecting step may be referred to as final configuration of the substrate.

In the driver IC mounting step, the driver IC is mounted on the connection portion of each substrate. In the junction substrate connecting step, the junction substrate is connected to the connection portion of each substrate. Either of the driver IC mounting step and the junction substrate connecting step may be performed prior to the other, and these steps may be performed in a mixed manner. For example, the mounting of the driver IC and the connection of the junction substrate to the same substrate connection portion may be performed at the same timing, and thereafter the mounting and others for the next connection portion may be performed. In any one of the above cases, the mounting of driver IC and the connection of junction substrate may be performed such an order that these operation can be easily and efficiently performed.

The multi-layer LCD panel DP1 has the configuration and structure shown in Fig. 6 when the driver IC mounting step and the junction substrate connecting step are completed.

In a folding step, the junction substrate (flexible junction substrate) connected to each substrate is folded toward the back side for reducing the frame width.

Operation check (functional check) of the panel element may be performed at one or more predetermined times, e.g., after the panel element forming step. By performing the operation check of the panel element during the production, the multi-layer LCD panel DP1 can be produced with a higher yield. Naturally, the operation check of the whole display panel DP1 may be performed after the folding step.

Description will now be given on several examples of the method of manufacturing the multi-layer LCD panel DP1 having the configuration and structure shown in Fig. 1(A) and others, and particularly several examples of the method of manufacturing the multi-layer LCD panel DP1 before the mounting of driver IC. Several methods may be employed depending on the configuration and others of the substrate used in the panel element forming step.

[13] Description will now be given on the method of manufacturing the multi-layer LCD panel DP1 shown in Fig. 1(A), using the structures each having a full form described below in the panel element forming step.

### [13-1] Panel Element Forming Step

In the panel element forming step, the three panel elements, i.e., blue, green and red panel elements PEb, PEg and PEr are formed.

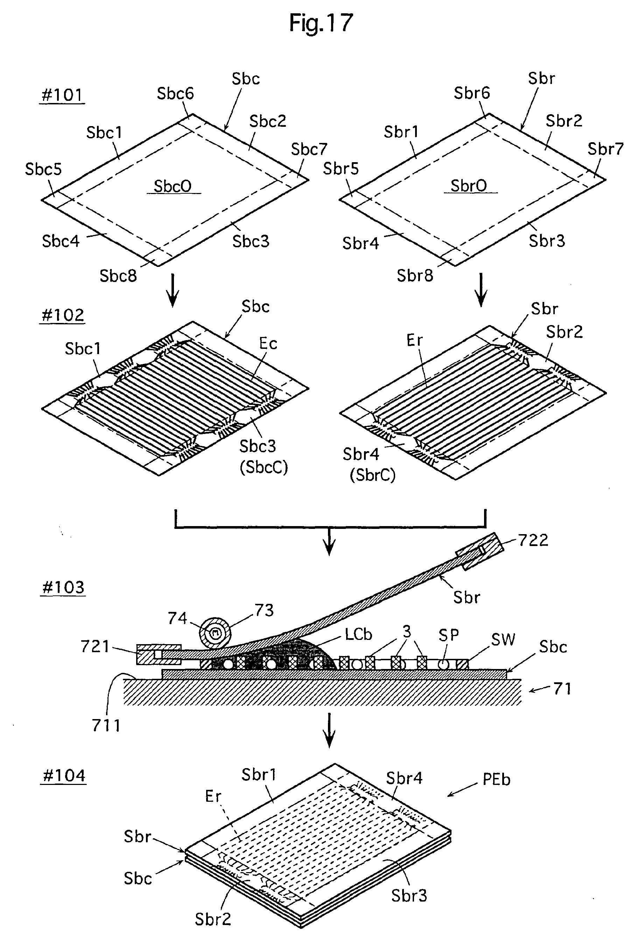

Referring to Fig. 17, description will be primarily given on the process of producing the blue panel element PEb. The green and red panel elements PEg and PEr can be produced similarly to the blue panel element PEb except for the kind of liquid crystal disposed between the substrates.

### [13-1-1] Preparing Step

First, the resin substrate Sbc for forming the column electrode and others as well as the resin substrate Sbr for forming the row electrode and others are prepared (#101). In this example, polycarbonate films are used as the substrates Sbr and Sbc.

At this stage in the process of producing the multi-layer LCD panel DP1, the substrates Sbc and Sbr have the configurations and sizes different from the final configuration and sizes, and have the following portions.

The column substrate Sbc at this stage has the overlap portion SbcO which finally overlaps with the other five substrates, the four extending portions Sbc1, Sbc2, Sbc3 and Sbc4 which extend from the overlap portion in the four directions angularly spaced by 90 degrees, and corner portions Sbc5, Sbc6, Sbc7 and Sbc8. That is, the column substrate Sbc at this stage has the overlap portion SbcO and an annular portion surrounding the overlap portion SbcO. At this stage, the column substrate Sbc is rectangular. This column substrate Sbc having above configuration is referred to as the column substrate of the full form (or of full configuration).

Likewise, the row substrate Sbr at this stage has the overlap portion SbrO which finally overlaps with the other five substrates, the four extending portions Sbr1, Sbr2, Sbr3 and Sbr4 which extend from the overlap portion in the four directions angularly spaced by 90 degrees, and corner portions Sbr5, Sbr6, Sbr7 and Sbr8. That is, the row substrate Sbr at this stage has the overlap portion SbrO and an annular portion surrounding the overlap portion SbrO. At this stage, the row substrate Sbr is rectangular. This row substrate Sbr having above configuration is referred to as the row substrate Sbr of the full form (or of full configuration).

The column and row substrates for forming the other panel elements have similar structures.

At this stage, the column and row substrates Sbr and Sbc of the blue panel element have the same sizes, and are not different to each other. Further the column substrates of each panel element and the row substrates of each panel element have the same sizes, and are not different to each other. Accordingly, commonality of parts for producing the multi-layer LCD panel DP1 can be achieved.

In the blue panel element PEb, the extending portion Sbc3 of column substrate Sbc is used as the connection portion SbcC for mounting the driver IC and others. The extending portion Sbr4 of row substrate Sbr is used as the connection portion SbrC. The extending portions, which are not used as the connection portions of the substrates, as well as the corner portions will be removed in the later cut step.

### [13-1-2] Electrode Forming Step

Then, the column electrode Ec is formed on the column substrate Sbc of blue panel element PEb, and the row electrode Er is formed on the row substrate Sbr (#102). The column and row electrodes are likewise formed on the column and row substrates of the other panel elements, respectively.

The column electrode Ec may be formed, e.g., on the column substrate Sbc of the blue panel element PEb in the following manner. First, a conductive film (ITO film in this example) is uniformly formed on the column substrate Sbc. Etching is effected, while utilizing photolithography method, on this conductive film to form a predetermined configuration so that a predetermined electrode pattern including a pattern of the column electrode Ec is formed. For example, photosensitive resist film is uniformly formed on the conductive film, and then is exposed via a mask having apertures of the pattern (positive pattern) corresponding to the electrode pattern to be formed. The resist film portion other than the exposed resist film portion is removed, and the etching is effected on the conductive film portion not covered with the resist film so that a predetermined electrode pattern is formed.

More specifically, a pattern of a plurality of belt-like electrodes, which are arranged parallel to each other with predetermined pitches, is formed on the overlap portion SbcO.

An electrode pattern for connecting the column electrode Ec on the overlap portion SbcO to the output lead of the driver IC is formed on the extending portion Sbc3 used as the connection portion SbcC. More specifically, the electrode pattern for transforming the electrode pitch on the overlap portion SbcO to the output lead pitch of the driver IC is formed on the extending portion Sbc3. An electrode pattern for connecting the input lead of the driver IC to the junction substrate is also formed on the extending portion Sbc3.

In this example, electrode patterns are formed on the extending portion Sbc1, which is opposite to the extending portion Sbc3 used as the connection portion SbcC. More specifically, the electrode pattern which can be used for connecting the column electrode Ec on the overlap portion SbcO to the output lead of the driver IC as well as the electrode pattern which can be used for connecting the input lead of the driver IC to the junction substrate are formed on the extending portion Sbc1.

By forming the electrode patterns on the extending portion opposite to the extending portion to be used as the connection portion, the following advantages can be achieved. The column substrate, which is prepared for the column substrate Sbr of the blue panel element PEb, can be used as the column substrate of the other panel element. More specifically, the column substrate provided with the electrode patterns described above can be used for producing the panel element having the extending portion Sbc1 to be used as the connection portion. Accordingly, the electrode patterns can be formed on the column substrates of the respective panel elements by the same procedure and with the same mask. This improves the efficiency of the column electrode formation. Further, commonality of parts of the multi-layer LCD panel DP1 can be achieved.

Alignment marks (registration marks, target marks) to be used for the positioning in later steps are formed on the column substrate Sbc, in addition to the foregoing electrode patterns. The alignment marks are formed simultaneously with the foregoing electrode patterns, using the electrode material (ITO in this example).

The alignment marks for the following positioning or alignment are formed on the column substrate Sbc.

When the blue panel element PEb is formed by overlaying the column substrate Sbc and row substrate Sbr together with the liquid crystal therebetween, the alignment marks are used for alignment of these substrates. In the overlaying step for overlaying the panel elements together, the alignment marks are used for aligning the respective panel elements. When the driver IC is to be mounted on the substrate connection portion of the panel element, the alignment marks are used for positioning the mounting position of the driver IC. When connecting the junction substrate to the substrate connection portion of the panel element, the alignment marks are used for aligning the connection position of the junction substrate.

The alignment mark(s) to be used for overlaying the column and row substrates together may be the same as those used for overlaying the panel elements together. These alignment marks may be formed on the overlap portion SbcO of the column substrate Sbc or the connection portion SbcC, and also may be formed on the extending portion or corner portion, which will be finally removed.

The alignment mark used for the mounting of the driver IC may be formed, e.g., within the mounting region, at which the driver IC is mounted, of the substrate. The alignment mark used for the connection of the junction substrate may be formed, e.g., within the connection region, at which the junction substrate is connected, of the panel element substrate.

On the row substrate Sbr, the row electrode Er is formed in a similar manner as described above. That is, a pattern of the plurality of belt-like electrodes, which are arranged parallel to each other with predetermined pitches, is formed on the overlap portion SbrO of the row substrate Sbr. An electrode pattern for connecting the row electrode Er on the overlap portion SbrO to the output lead of the driver IC as well as an electrode pattern for connecting the input lead of the driver IC to the junction substrate are formed on the extending portion Sbr4 used as the connection portion SbrC. An electrode pattern, which can be used as the connection portion electrode pattern, is formed on the extending portion Sbc2 opposite to the extending portion Sbc4 used as the connection portion SbrC. Alignment marks similar to those on the column substrate Sbc are formed on the row substrate Sbr.

### [13-1-3] Step of Forming Insulating Film and Orientation Film

The insulating film I1 and the orientation film A1 are successively formed on the column electrode Ec of the column substrate Sbc. Also, the insulating film I2 and the orientation film A2 are successively formed on the row electrode Er of the row substrate Sbr.

### [13-1-4] Step of Forming Columnar Resin Structure

The columnar resin structures 3 are formed on one of the column and row substrates Sbc and Sbr. In this example, the resin structures are formed on the orientation film of the column substrate Sbc.

The resin structure may be made of a material which can be softened when heated, and can be solidified by cooling. An organic material which does not chemically react with the liquid crystal material, and has an appropriate elasticity is suitable for the material of the resin structures. The material of the resin structure may be a thermoplastic polymer material. The thermoplastic polymer material may be, e.g., polyvinyl dichloride resin, polyvinylidene chloride resin, polyvinyl acetate resin, methacrylate ester resin, polyacrylate ester resin, polystyrene resin, polyamide resin, polyethylene resin, polypropylene resin, fluororesin, polyurethane resin, polyacrylonitrile resin, polyvinyl ether resin, polyvinyl ketone resin, polyester resin, polyvinyl pyrolidone resin, saturated polyester resin, polycarbonate resin, chlorinated polyether resin or the like. The resin structure may be made of one or more of the above materials.

The resin structure can be formed, e.g., by a printing method, in which a paste containing resin (e.g., resin dissolved in solvent) is discharged onto the substrate by a squeeze through a screen or metal mask. The resin structure can be formed also by discharging the resin from nozzles onto the substrate in a dispenser method or an ink jet method. The resin structure can be formed in a transfer method in which the resin is supplied onto a flat plate or a roller, and then the resin is transferred onto the substrate. At this stage, the height of the resin structure is preferably larger than the intended thickness of the liquid crystal layer in view of the adhesion of the two substrates by this resin structure.

### [13-1-5] Spacer Dispersing Step

The spacers SP are dispersed on one of the column and row substrates Sbc and Sbr. In this example, spacers SP are dispersed on orientation film of the column substrate Sbc.

The spacers may be preferably formed of particles, which are made of a hard material having a sufficient deformation resistance against heat and pressure. The spacer may be made of, e.g., an inorganic material such as finely divided glass fibers, silicate glass in the ball-like form or alumina powder, or spheric particles of an organic material such as divinylbenzene-contained cross-linked polymer or polystyrene-contained cross-linked polymer.

The spacers may be dispersed onto the substrate, e.g., by wet dispersing method or a dry dispersing method.

### [13-1-6] Seal Wall Forming Step

The seal wall SW is formed on one of the column substrate Sbc and the row substrate Sbr. In this example, the seal wall SW is formed on the column substrate Sbc.

The seal wall SW is formed on the overlap portion SbcO of the column substrate Sbc to have an annular form.

The seal wall SW may be made of, e.g., resin such as ultraviolet-curing resin or thermosetting resin.

The resin seal wall can be formed by discharging the resin from the nozzles onto the substrate, e.g., by the dispenser method or ink jet method. The resin seal wall can also be formed by a printing method using a screen or a metal mask. The resin seal wall can also be formed in a transfer method in which the resin is supplied onto a flat plate or a roller, and then the resin is transferred onto the substrate.

The resin structure forming step, the spacer dispersing step and the seal wall forming step may be performed in any order.

### [13-1-7] Substrate Adhering Step

Then, droplets of the liquid crystal LCb are applied onto the region of column substrate Sbc surrounded by the seal wall SW, and the column substrate Sbc and the row substrate Sbr are adhered together with the liquid crystal LCb therebetween (#103).

More specifically, the column substrate Sbc is laid on a plane 711 of a holding member 71. For preventing shifting of the position of the column substrate Sbc on the plane 711, air suction may be effected for sucking the substrate Sbc toward the plane 711.

Then, droplets of the liquid crystal LCb having the selective reflection wavelength in the blue range are applied to the end portion of the foregoing region of the column substrate Sbc.

Then, only one end of the row substrate Sbr is overlaid on the column substrate Sbc with the liquid crystal LCb therebetween. At this stage, the substrate Sbr is curved so that the other end of the row substrate Sbr is not overlaid on the column substrate Sbc. By holding the opposite ends of the row substrate Sbr by holding members 721 and 722, the row substrate Sbr can be disposed as described above. Since the row substrate Sbr is provided with the extending portions located on the opposite sides of the overlap portion SbrO, the holding members 721 and 722 can hold the portions other than the overlap portion SbrO.

Then, a roller 73, internally provided with a heater 74, pushes the row substrate Sbr toward the column substrate Sbc while moving the pushed position from one end of the substrate toward the other end. The roller 73 may be moved. Alternatively, the substrates may be moved.

In this manner, the column and row substrates Sbc and Sbr are overlaid together with the liquid crystal therebetween while spreading the liquid crystal LCb. By the heat of the heater 74, the resin structures 3 and the seal wall SW are welded to both the column and row substrates Sbc and Sbr for adhering them together. By overlaying the substrates from one end toward the other end while spreading the liquid crystal LCb, it is possible to suppress mixing of bubbles into the liquid crystal. The thickness of the liquid crystal is adjusted to a predetermined thickness by the spacers SP. Instead of dispersing the spacers on the substrate, the spacers may be dispersed in the liquid crystal, which will be applied onto the substrate.

Since the extending portions other than the overlap portion SbrO are held by the holding members 721 and 722 as described above, the roller 73 can successively apply the pressure throughout the overlap portion SbrO so that the two substrates can be adhered fully and precisely. If the holding member were holding the overlap portion SbrO, the holding member would impede the relative movement of the roller 73 so that it would be difficult to apply the pressure throughout the overlap portion SbrO.

In this adhering step, the column substrate Sbc and the row substrate Sbr are adhered together such that both the column and row electrodes Ec and Er are located inside of the substrates. These substrates are adhered such that the column and row electrodes Ec and Er form a matrix structure. These substrates are adhered together after aligning these substrates with alignment marks formed thereon.

Thereby, the blue panel element PEb is obtained (#104). The other panel elements can be produced in a similar manner as described above.

Since the substrates of the full form are employed, the same panel element manufacturing apparatus can be used for forming the respective panel elements only by changing the liquid crystal to be applied onto the substrate.

The panel element may be formed by supplying the liquid crystal through an inlet, which is formed in the seal wall and will be closed later, in a vacuum-supply method after adhering the column and row substrates together with the spacers and others therebetween.

### [13-2] Panel Element Overlaying Step

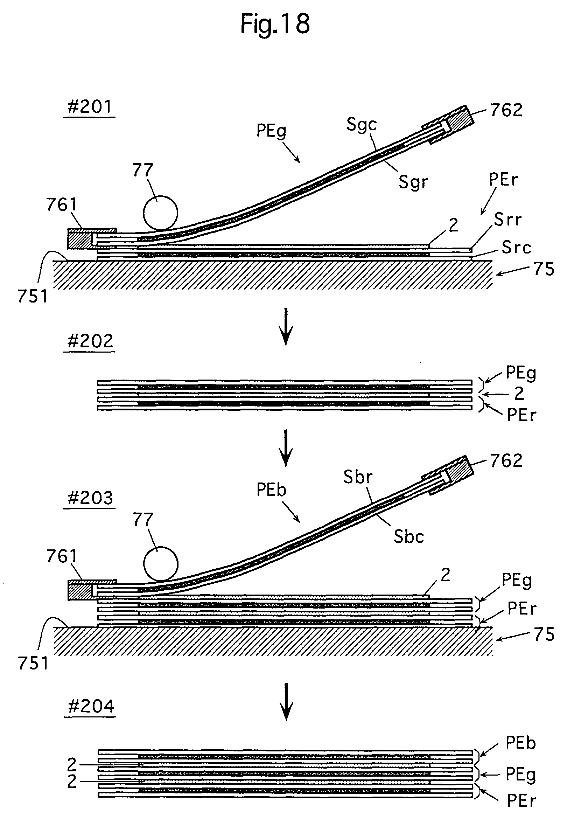

The three panel elements PEb, PEg and PEr thus formed are successively overlaid in the overlaying step, which will be described below with reference to Fig. 18.

First, the red and green panel elements PEr and PEg are overlaid, and are adhered by the adhesive 2 (#201). In this example, the adhesive film is used as the adhesive 2.

More specifically, the red panel element PEr is laid on a plane 751 of a holding member 75. For preventing shifting of the position of the panel element PEr on the plane 751, air suction may be performed for sucking the panel element PEr toward the plane 751.

Then, the adhesive film 2 is adhered to the overlap portion SrrO of the row substrate Srr of the red panel element PEr. Thus, the adhesive film 2 is applied to an adhesion surface, to be adhered to the green panel element PEg, of the red panel element PEr.

Then, only one end portion of the green panel element PEg is overlaid on the red panel element PEr with the adhesive film 2 therebetween. The green panel element PEg is curved so that the other end portion of the green panel element PEg is not overlaid on the red panel element PEr. The opposite ends of the green panel element PEg are held by holding members 761 and 762, whereby the green panel element PEg can be disposed as described above. Since each of the column and row substrates Sgc and Sgr of the green panel element PEg is provided with the extending portions located on the opposite sides of the overlap portion, the holding members 761 and 762 can hold the portions other than the overlap portions SgcO and SgrO. Thus, the substrate portion other than the adhesion surface can be held. The green panel element PEg may be held by holding only one of the column and row substrates Sgc and Sgr.

Then, a roller 77 pushes the green panel element PEg toward the red panel element PEr with the adhesive film 2 therebetween while moving the pushed position from one end portion of the panel element toward the other end portion. The roller 77 may be move. Alternatively, the panel elements may be moved. Thereby, the overlap portion SrrO of the row substrate Srr of the red panel element PEr is adhered to the overlap portion SgrO of the row substrate Sgr of the green panel element PEg. By adhering the panel elements PEg and PEr from one end portion to the other end portion, it is possible to suppress remaining of bubbles between the panel elements.

Since neither the driver IC nor the junction substrate is mounted on any one of the connection portions of the green panel element PEg, the green panel element PEg can be curved uniformly so that remaining of the bubbles between the panel elements can be suppressed.

Since the substrate portions of the green panel element PEg other than the overlap portion are held by the holding members 761 and 762 as described above, the roller 77 can successively apply the pressure throughout the overlap portion (adhesion portion) so that the two panel elements PEg and PEr can be adhered fully and precisely. If a holding member were holding the overlap portion, the holding member would impede the relative movement of the roller 77 so that it would be difficult to apply the pressure throughout the overlap portion.

In the above manner, the red and green panel elements PEr and PEg adhered together by the adhesion film 2 are obtained (#202).

Then, the blue panel element PEb is adhered onto the green panel element PEg by the adhesion film 2 (#203) in the similar manner as described above.

Thereby, the multi-layer LCD panel DP1, including the blue, green and red panel elements PEb, PEg and PEr layered together, is obtained (#204).

In the above panel element overlaying step, the panel elements are aligned by utilizing the foregoing alignment marks, and then are adhered together.

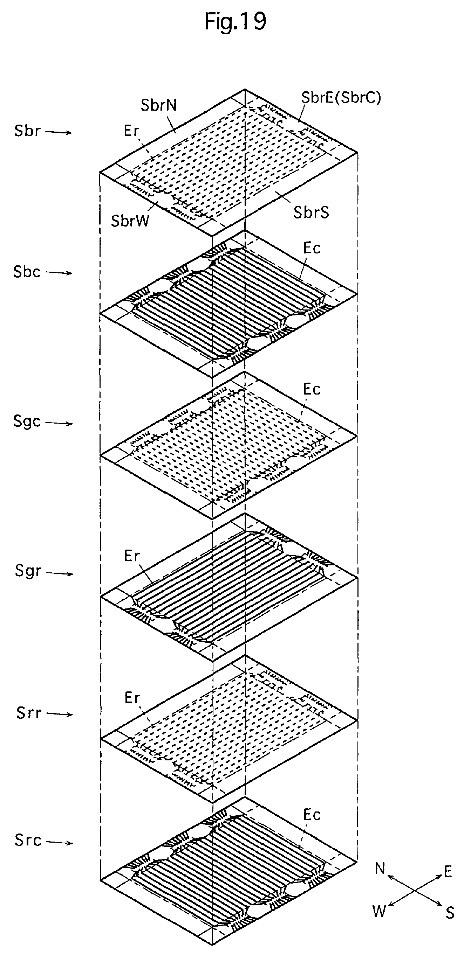

The three panel elements are overlaid such that the substrates of the panel elements are aligned in the order shown in Fig. 19. The layering order of the substrates shown in Fig. 19 is the same as the foregoing layering order of the substrates shown in Fig. 7.

Further, the three panel elements are overlaid such that the extending directions of the extending portions used as the connection portions of the substrates of the panel elements are shifted by 90 degrees in accordance with a predetermined order, as already described. In this example, the full-form substrates are employed, and the extending portions, which can be used as the connection portions, are arranged on the opposite sides of the overlap portion. Thereby, if the substrate is turned by 180 degrees from the position shown in Fig. 19, this turned substrate can have the extending portion, which can be used as the connection portion extending in the foregoing extending direction. Thereby, the panel elements can be overlaid with less error.

### [13-3] After Cut Step

In the after cut step, unnecessary portions (portions to be cut off) are removed from the substrates of layered panel elements.

In the stage before removing the unnecessary portions, each electrode formation surface of the extending portion, which is used as the connection portion, of the substrate are overlapping with the extending portions of the other substrates, and thus is not exposed. Therefore, this after cut step is performed for exposing the electrode formation surface of the extending portion to be used as the connection portion of each substrate. More specifically, the three extending portions, which will not be used as the connection portions, among the four extending portions as well as the four corner portions are removed from each substrate.

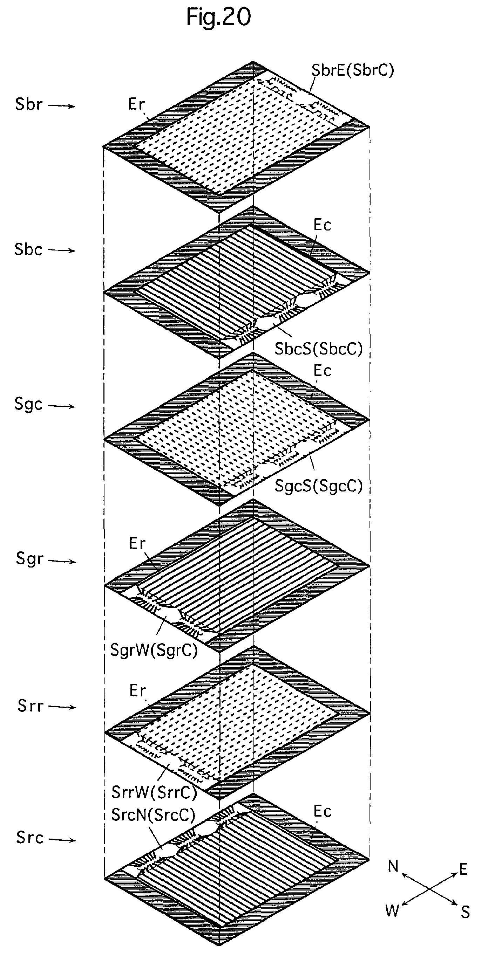

The portions to be removed from each substrate are shown in Fig. 20. In Fig. 20, the portions to be removed from each substrate are hatched.

By removing the portions to be cut off from each substrate, all the electrode formation surfaces of the connection portions are exposed in the multi-layer LCD panel DP1 as shown in Fig. 1(A).

Due to a cut mechanism of a cutter device for performing the cutting as well as an accuracy thereof and others, the cutting may not be effected accurately on the boundary between the overlap portion and the extending portion, which is not to be used as the connection portion and thus is to be removed from the substrate. In this case, the extending portion not to be used as the connection portion may be partially left to an extent, which does not impede the operation such as mounting of the driver IC on the connection portion of the other substrate. For example, the extending portion, which is not to be used as the connection portion, such as the west extending portion SbrW of row substrate Sbr of blue panel element PEb in Fig. 9 may be left.

That is, after performing the cutting in the after cut step, the extending portion not to be used as the connection portion may be partially left to an extent not impeding the operation such as mounting of the driver IC on the connection portion of the other substrate.

For the purpose of, e.g., facilitating the cutting, half cut may be effected in advance on the boundary between the substrate portion to be removed and the substrate portion to be left. This half cut step is naturally performed before the after cut step for removing the unnecessary portions of the substrates, and may be performed, e.g., before the panel element adhering step and during the panel element forming step. By performing the half cut step, e.g., before the substrate overlaying step (e.g., before or after the electrode forming step) in the panel element forming step, the half cut step itself can be performed easily.

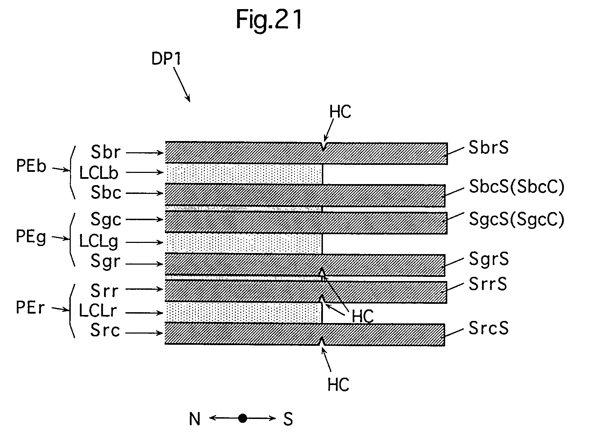

This half cut may be effected on an exposure surface of the substrate to be exposed as shown in Fig. 21 in the stage of performing the after cut step and thus when the panel elements are in the overlaid state.

Fig. 21 shows the south extending portions of the multi-layer LCD panel DP1 before performing the after cut step. In Fig. 21, a groove HC is formed on the exposure surface, to be exposed, of the substrate for the half cut. In the structure where the two or more substrate portions overlaid together, the exposure substrate surface to be exposed is a surface, which will be exposed after removing the substrate portion already exposed.

More specifically, the exposure surfaces of the outermost substrates Sbr and Src are the surfaces not provided with the electrodes, respectively.

The exposure surface of the substrate Srr is the electrode formation surface, which will be exposed after removing the south extending portion SrcS of the substrate Src. The exposure surface of the substrate Sgr is the surface, which is not provided with the electrode and is to be exposed after removing the south extending portion SrrS of the substrate Srr.

By effecting the half cut on each substrate in this manner, the after cut step can be efficiently performed.

### [13-4] Driver IC Mounting Step and Junction Substrate Connecting Step

After producing the multi-layer LCD panel DP1 in the above manner, the driver IC is mounted on the exposed electrode formation surface of the connection portion of each substrate, and the junction substrate is connected to the connection portion of each substrate.

By mounting the driver ICs and connecting the junction substrates, the multi-layer LCD panel DP1 shown in Fig. 6 is completed. The steps of mounting the driver IC and connecting the junction substrate will be described later in greater detail.

[14] Another method of manufacturing the multi-layer LCD panel DPI shown in Fig. 1(A) will now be described.

As already described in the above item [13], the extending portions (including the extending portion to be used as the connection portion) of each substrate can be utilized for holding the substrate in the substrate adhering step of the panel element forming step. Also, the extending portions of each substrate can be utilized for holding the panel element in the step of overlaying the panel elements. The substrate extending portion, which is utilized for holding the substrate and/or the panel element, are referred to as holding portions.

The four extending portions of the full form substrate contain the extending portion, which is used as neither the connection portion nor the holding portion.

Accordingly, in the stage of forming each panel element, the substrate not provided with the extending portion, which is to be used as neither the connection portion nor the holding portion, may be used for producing the multi-layer LCD panel DP1, similarly to the foregoing method.

More specifically, in the panel element forming step, each of the three panel elements may be formed, in the similar manner as described above, using the substrates, each of which includes the overlap portion, the extending portion extending from the overlap portion for use as the connection portion and the extending portion(s) extending from the overlap portion for use as the holding portion(s). Thereafter, the multi-layer LCD panel DP1 may be produced by overlaying three panel elements thus formed.

The substrate used in the panel element forming step may have the foregoing corner portion. The substrate used in the panel element forming step may have one or two extending portion(s) to be used as the holding portions. The substrate used in the panel element forming step may have the extending portion, which is to be used as the holding portion, and also used as the connection portion.

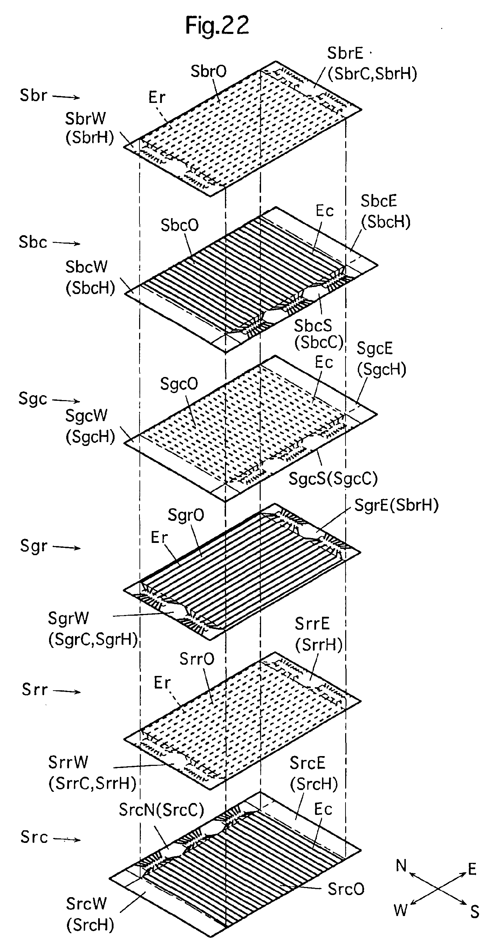

For example, six substrates of configurations shown in Fig. 22 may be employed in the panel element forming step, and the panel elements formed with such substrates may be overlaid to form the multi-layer LCD panel DP1.

In this example, the west and east extending portions are utilized as the holding portions. Therefore, each substrate has at least the west and east extending portions. More specifically, each substrate is as follows.

The row substrate Sbr of the blue panel element PEb has the overlap portion SbrO, the east extending portion SbrE to be used as the connection portion SbrC and also used as the holding portion SbrH, and the west extending portion SbrW to be used as the holding portion SbrH.

The column substrate Sbc of the blue panel element PEb has the overlap portion SbcO, the south extending portion SbcS to be used as the connection portion, the east and west extending portions SbcE and SbcW to be used as the holding portion SbcH, and the corner portions.

The column substrate Sgc of the green panel element PEg has the overlap portion SgcO, the south extending portion SgcS to be used as the connection portion SgcC, the east and west extending portions SgcE and SgcW to be used as the holding portion SgcH, and the corner portions.

The row substrate Sgr of the green panel element PEg has the overlap portion SgrO, the west extending portion SgrW to be used as the connection portion SgrC and also used as the holding portion SgrH, and the east extending portion SgrE to be used as the holding portion SgrH.

The row substrate Srr of the red panel element PEr has the overlap portion SrrO, the west extending portion SrrW to be used as the connection portion SrrC and also used as the holding portion SrrH, and the east extending portion SrrE to be used as the holding portion SrrH.

The column substrate Src of the red panel element PEr has the overlap portion SrcO, the north extending portion SrcN to be used as the connection portion SrcC, the east and west extending portions SrcE and SrcW to be used as the holding portion SrcH, and the corner portions.

Even in the case where the foregoing substrates are used in the panel element forming step, the multi-layer LCD panel DP1 in Fig. 1(A) can be produced by removing the extending portions not to be used as the connection portion and the corner portions in the after cut step after the panel element overlaying step. Also in this case, the half cut may be performed in advance.

[15] Description will be given on further another method of producing the multi-layer LCD panel DP1 shown in Fig. 1(A).

In the step of forming the panel element, the substrates of the full form described in the above item [13] are used to form each panel element.

Then, the extending portion to be used as neither the connection portion nor the holding portion is removed from each substrate before overlaying the panel elements. By this precutting, each substrate has the form already described in the foregoing item [14] and shown, e.g., in Fig. 22 before overlaying the panel elements.

Thereafter, the panel elements are overlaid together, and then the extending portions and the corner portions, which are not used as the connection portions, are removed, as already described in the item [14].

In this manner, the multi-layer LCD panel DP1 shown in Fig. 1(A) can likewise be produced.

### [16] STEP OF MOUNTING DRIVER IC AND STEP OF CONNECTING JUNCTION SUBSTRATE

After manufacturing the multi-layer LCD panel DP1 as shown in Fig. 1(A), and thus after the panel element overlaying step, the steps of mounting the driver IC and connecting the junction substrate are performed.

Since the electrode formation surfaces (the driver IC mounting surface and the junction substrate connecting surface) of the connection portions of the substrates are all exposed, the operation such as mounting of the driver IC can be performed after overlaying the panel elements.

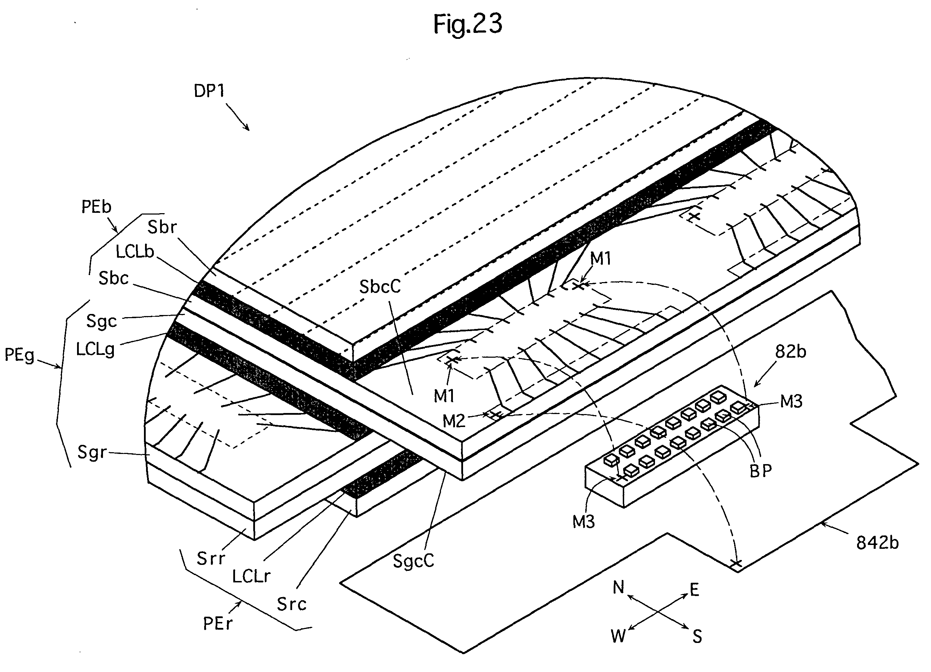

[17] Description will now be primarily given, with reference to Fig. 23, on the manner of mounting the driver ICs onto the south connection portions (i.e. the connection portion SbcC of column substrate Sbc of blue panel element PEb and the connection portion SgcC of column substrate Sgc of green panel element PEg) of the multi-layer LCD panel DP1 as well as the manner of connecting the junction substrates to the south connection portions. The operation such as mounting of the driver IC, which is effected on the other substrate connection portion, is performed in a similar manner as described below.

As shown in Fig. 23, two alignment marks (registration marks, target marks) M1 are formed at a mounting region, onto which the driver IC 82b is to be mounted, of the connection portion SbcC of column substrate Sbc. The mounting region is indicated by alternate long and short dash line in the figure.

Alignment marks M2 are formed at a connection region, to which the junction substrate 842b is to be connected, of the connection portion SbcC. The connection region is indicated by alternate long and short dash line. Although Fig. 23 shows only one of two alignment marks M2, the connection portion SbcC is provided with the two alignment marks M2.

The alignment marks M1 on the substrate connection portion and the alignment marks M3 provided on the driver IC 82b are used for alignment or positioning so that the driver IC 82b is mounted on the predetermined region of the connection portion. Thereby, the output leads of the driver IC 82b are connected to the belt-like electrodes forming the column electrode Ec on the substrate Sbc, respectively.

The alignment marks M1 and M3 for driver element mounting are read by a reading device (not shown) such as a CCD camera or a microscope. Based on the alignment marks read by the reading device, positioning of the driver IC 82b is performed employing a known manner such as image processing manner.

The alignment marks M1 on the connection portion SbcC of the substrate Sbc is read from the front side. When reading the alignment mark M1, the alignment mark M1 on the connection portion SbcC may be viewed near the alignment mark (not shown) on the connection portion SgcC, which extends in the same direction as the connection portion SbcC, of the substrate Sgc. In this case, by increasing the magnification or lens stops (diaphragm, iris) of the reading device such as a CCD camera or a microscope to reduce the depth of field, only the alignment mark M1, to be read out, on the connection portion SbcC can be put into focus of the reading device. Thereby, the driver IC 82b can be mounted on the correct position.

Connection of the junction substrate 842b is performed similarly to the mounting of the driver IC. The junction substrate 842b is connected to the predetermined position of the substrate connection portion SbcC by performing the positioning in a similar manner using the alignment marks M2 on the connection portion SbcC and the alignment marks provided on the junction substrate 842b. Thereby, the electrode pattern of the junction substrate 842b is connected to the electrode pattern leading to the input leads of the driver IC 82b.

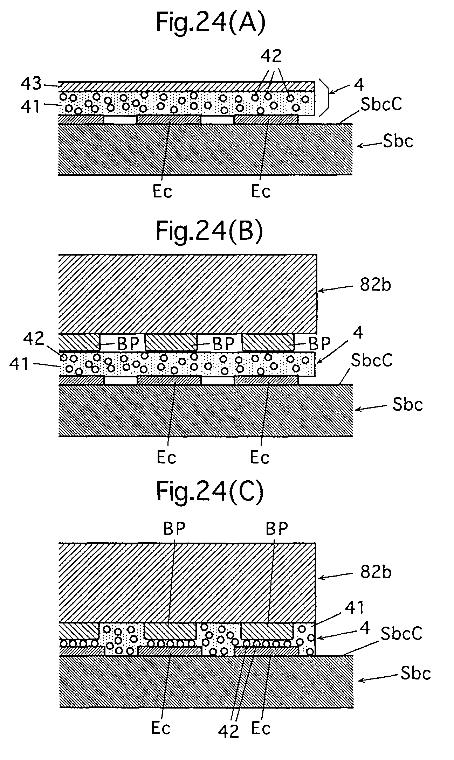

[18] The mounting of the driver IC 82b in this example is performed using the ACF (anisotropic conductive film). This will now be described with reference to Figs. 24(A) to 24(C).

First, a separator is removed from one side of an ACF 4, and the ACF 4 thus prepared is provisionally adhered onto the electrode Ec to be connected to bumps BP of the driver IC 82b (see Fig. 24(A)). The ACF 4 has a binder resin 41 made of thermosetting or thermoplastic resin, and also has electrically conductive particles 42 dispersed in binder resin 41. Owing to a tack of the binder resin 41, the ACF 4 can be provisionally adhered to the electrode Ec. The provisional adhesion can be performed by applying a heat and a pressure lower than those for complete adhesion, whereby the provisional adhesion can be performed more reliably.

Then, a separator 43 is removed from the other side of the ACF 4.

Then, the driver IC 82b is positioned, and the bump BP of the driver IC 82b is laid on the ACF 4 (see Fig. 24(B)).

Thereafter, the driver IC 82b is pushed toward the substrate Sbc, and a heat is applied to the ACF 4. Thereby, each bump BP of the driver IC 82b is connected to the respective belt-like electrodes forming the column electrode Ec via the conductive particles 42 (see Fig. 24(C)). If the binder resin 41 is the thermosetting resin, the binder resin is hardened by the heat for adhering the driver IC 82b to the substrate Sbc. If the binder resin 41 is thermoplastic resin, the binder resin is cooled after heating so that the driver IC 82b is adhered to the substrate Sbc.

In the case where the driver IC is to be mounted by the ACF subjected to the heat and pressure for bonding as described above, a predetermined pressure and a predetermined heat (temperature) may be applied for a predetermined time corresponding to a kind of the ACF.

The connection of the junction substrate 842b is performed with the ACF, similarly to the above manner.

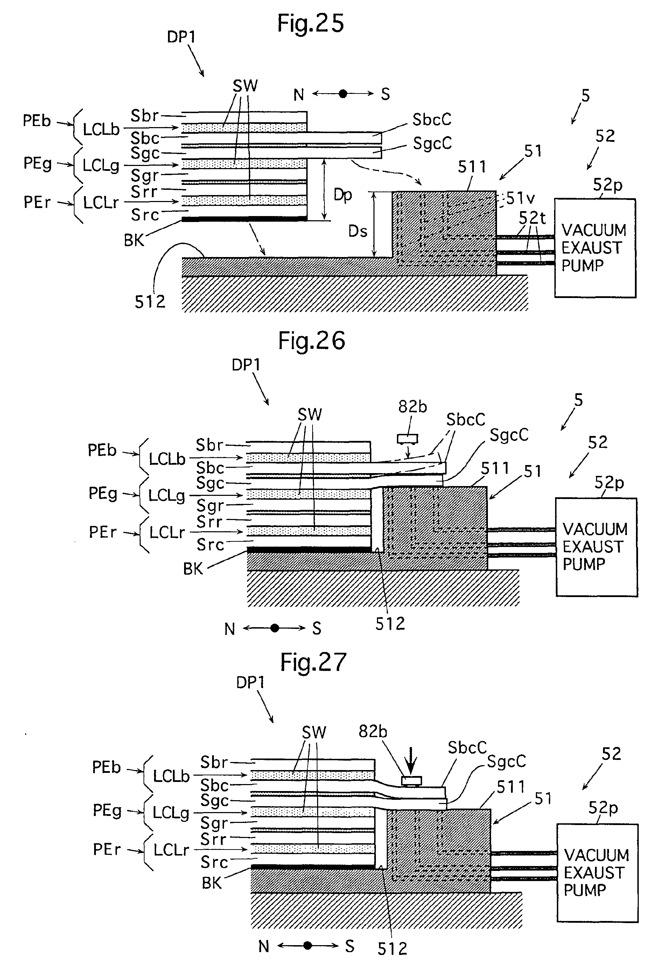

[19] The mounting of the driver IC as well as the connection of the junction substrate may be performed while holding the multi-layer LCD panel DPI with, e.g., a holding device 5 shown in Fig. 25.

The holding device 5 has a holding jig 51 and a suction device 52. This holding jig 51 is used for mounting the driver IC on the substrate Sbc and for connecting the junction substrate to the substrate Sbc.

The holding jig 51 has a first surface 511 for carrying the connection portion SbcC of the substrate Sbc, which is subjected to the mounting of the driver IC and others, and a second surface 512 for carrying the lap-over portion where the three panel elements are overlapping to each other. The first surface 511 of the holding jig 51 can also be used as a pressure-bonding base member for receiving or sustaining the pressure when performing the thermal pressure-bonding (compression bonding) of the driver IC with the ACF for mounting of the driver IC, and when performing the thermal pressure-bonding of the junction substrate with the ACF for connection of the junction substrate.

The first surface 511 of the holding jig 51 carries the connection portion SbcC via the connection portion SgcC, which extends in the same direction as the connection portion SbcC, of the substrate Sgc.

There is a stepped portion of a height Ds between the first and second surfaces 511 and 512 of the holding jig 51.

The stepped portion height Ds is substantially equal to a height Dp from the surface of the display panel DPI to be laid directly on the first surface 511 (i.e., the back surface of the connection portion SgcC), to the surface of the display panel DPI to be laid directly on the second surface 512 (i.e., back surface of the light absorber layer BK).

The stepped portion height Ds may be equal to or larger than the maximum value of the height Dp including a manufacturing error. The stepped portion height Ds in this example is equal to the maximum value of the height Dp including a manufacturing error. Due to the manufacturing error in the height of the seal wall SW and other, variations occur in the height Dp, and the possible maximum value thereof is selected as the stepped portion height Ds.

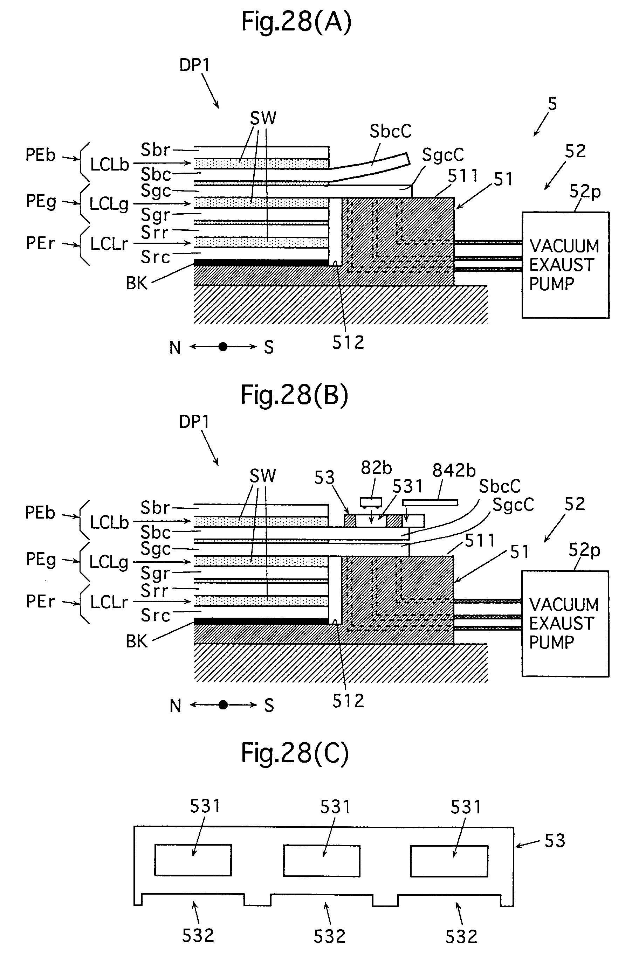

Thereby, when the holding jig 51 holds the multi-layer LCD panel DP1 as shown in Figs. 26, 28(A) and 28(B), the first surface 511 is located at the level slightly higher than or equal to the back surface of the connection portion SgcC directly laid on the first surface 511.

If the stepped portion height Ds is smaller than the height Dp, the first surface 511 of the holding jig is located at the level lower than the back surface of the connection portion SgcC as shown in Fig. 27. In this case, when the driver IC 82b is pushed toward the connection portion SbcC for mounting the driver IC 82b onto the connection portion SbcC of the substrate Sbc, the substrate Sbc deforms to a large extent, which is liable to damage the electrode (ITO electrode in this example) on the substrate Sbc. If the positioning of the driver IC is performed before deformation of the connection portion SbcC, the position of the connection portion SbcC may change to a large extent due to deformation of the connection portion SbcC during the pressure-bonding of the driver IC.

If the stepped portion height Ds is equal to or larger than the height Dp, the deformation of the substrate Sbc can be smaller than that in the case where the stepped height Ds is smaller than the height Dp, and the breakage (e.g., cracking) of the electrode on the substrate Sbc can be suppressed.

The suction device 52 is provided for sucking the connection portion laid on the first surface 511 of the holding jig to the first surface 511 by air suction.

The suction device 52 has a vacuum exhaust pump 52p. The pump 52p is connected, via tubes 52t, to vents 51v which extend from the first surface 511 of the holding jig 51 to the side surface. By the operation of the pump 52p, the connection portion SgcC can be sucked toward the first surface 511 by air suction.

By the air suction of the connection portion SgcC toward the first surface 511, it is possible to suppress the shifting of position of the connection portion SgcC, and thus the shifting of position of the connection portion SbcC at the time of mounting the driver IC and connecting the junction substrate. Thereby, the operation such as mounting of the driver IC and others can be performed easily and precisely.

The substrate may be deformed as indicated by alternate long and short dash line in Fig. 26 due to the structure where the height Ds is larger than Dp, or the resin film substrates Sbc and Sgc may be curved, as shown in Fig. 28(A), due to the curling property caused by the winding in storage of the resin film. In these cases or other cases, a pushing member 53 shown in Figs. 28(B) and 28(C) may be used to push the connection portion SbcC toward the first surface 511. By pushing the connection portion SbcC toward the first surface 511 via the connection portion SgcC with the pushing member 53, the connection portion SbcC can be kept flat, and the operation such as mounting of the driver IC can be performed easily. By performing operation such as positioning of the driver IC after pushing the connection portion SbcC by the pushing member 53, the shifting of position of the driver IC or others can be suppressed.

The pushing member 53 is provided with windows 531 for exposing the driver IC mounting region of the connection portion SbcC as shown in Fig. 28(C). The pushing member 53 is also provided with windows (recesses) 532 for exposing the junction substrate connecting region of the connection portion SbcC. Thereby, pushing of the connection portion SbcC by the pushing member 53 does not impede the mounting of the driver IC and others.

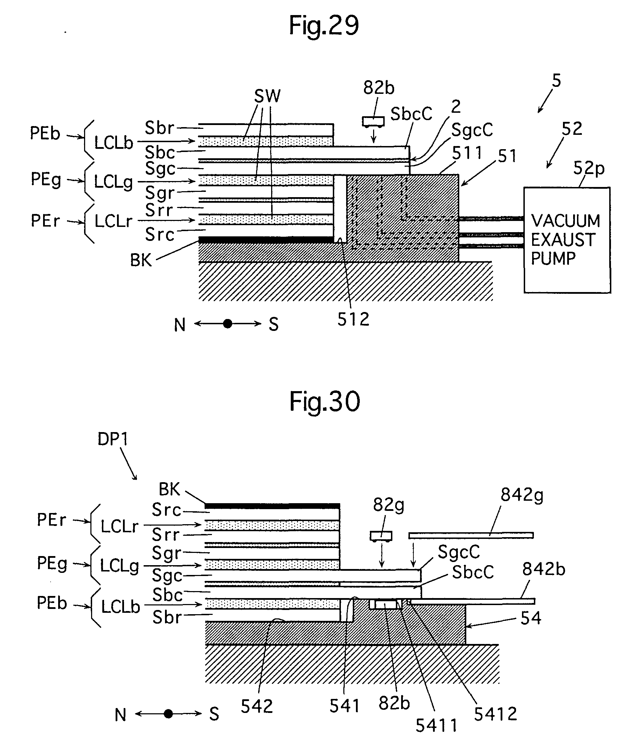

In the panel element overlaying step described before, the connection portions SbcC and SgcC of the same extending direction may be adhered by the adhesive 2 together with the overlap portions, as shown in Fig. 29, whereby the connection portion SbcC can be kept flat or plane even if the pushing member 53 is not employed. By operating the suction device 52 to effect the air-suction on the connection portion SgcC, the concentration SbcC is also sucked toward the first surface 511 so that the connection portion SbcC can be kept flat even in the case of Ds>Dp. Thereby, the operation such as mounting of the driver IC can be performed easily.

After the mounting of the driver IC on the connection portion SbcC and/or after the connection of the junction substrate to the connection portion SbcC, the operation such as mounting of the driver IC may be effected on the connection portion Sgc of the same extending direction as the connection portion SbcC, using a holding jig 54 shown in Fig. 30.

The holding jig 54 has a stepped portion, which is defined between first and second surfaces 541 and 542, and has a height similar to the stepped portion height Ds of the holding jig 51.

The first surface 541 of the holding jig 54 carries the connection portion SgcC via the connection portion SbcC, on which mounting of the driver IC 82b and others are already effected.

The first surface 541 is provided with a concave portion 5411 for fitting thereinto the driver IC 82b which is already mounted on the connection portion SbcC, and a concave portion 5412 for fitting the junction substrate 842b which is already connected to the connection portion SbcC. This structure facilitates the operation such as mounting of the driver IC on the connection portion SgcC.

[20] For suppressing the breakage (cracking or the like) of the electrode on the panel element substrate when mounting the driver IC, the following may be employed.

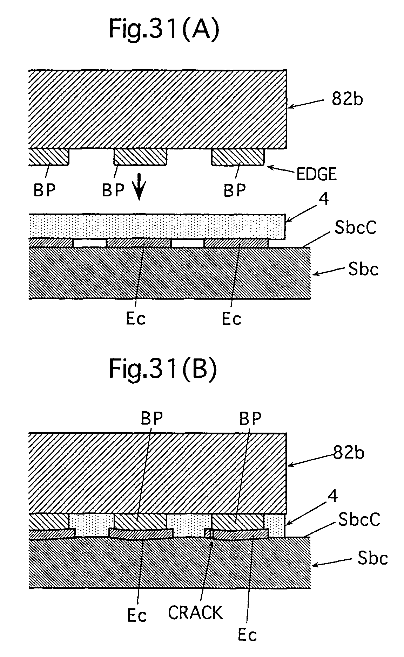

[20-1] If an edge is present at the peripheral portion of the electrode connection surface of the bump BP of the driver IC 82b as shown in Fig. 31(A), damages such as cracking are liable to occur on the electrode Ec, as shown in Fig. 31(B). When pushing the driver IC 82b toward the substrate Sbc for mounting, the edge of the bump BP is liable to apply a local stress to the electrode and thus break the electrode.

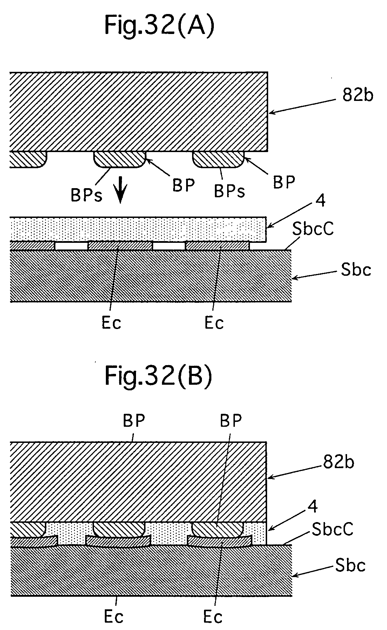

In view of this, the peripheral portion of the electrode connection surface BPs of the bump BP of the driver IC may be rounded as shown in Fig. 32(A), whereby the local stress applied to the electrode can be suppressed. Thereby, it is possible to mount the driver IC while suppressing the breakage of the electrode, as shown in Fig. 32(B).

Naturally, the step of rounding the bump BP of the driver IC may be performed before mounting the driver IC.

For example, chemical etching or mechanical polishing may be performed for rounding the bump BP.

Naturally, the driver IC having the bump which is already rounded may be employed.

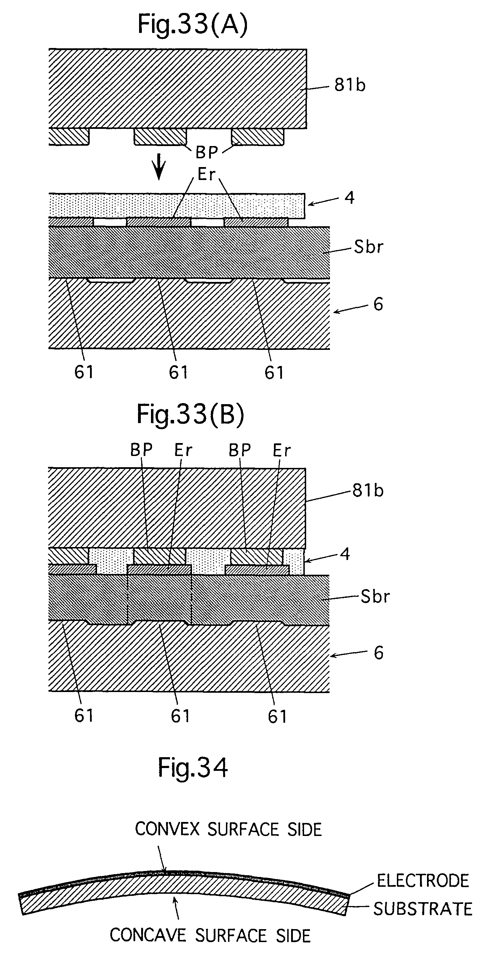

[20-2] As shown in Fig. 33(A), the mounting of the driver IC may be performed with a pressure-bonding base member 6, which is arranged at the side opposite to the mounting surface of the substrate Sbr.

The pressure-bonding base member 6 is provided with raised portions 61, which are located at positions to be opposed to the bumps of the driver IC 81b, respectively. The raised portion 61 can keep a balance in deformation of the substrate Sbr between the mounting surface and the opposite surface when mounting the driver IC 81b, as shown in Fig. 33(B). Thereby, breakage of the electrode on the substrate can be suppressed.

As shown in Fig. 33(B), the outer periphery of the raised portion 61 may be smaller than the outer periphery of the bump BP of the driver IC 81b, whereby the breakage of the electrode can be further suppressed.

[20-3] As shown in Fig. 34, the electrode may be formed on the convex surface side of the resin film substrate Sbc. The convex surface of the resin film substrate Sbc is formed when the resin film substrate Sbc is curved by its curling property. Thereby, breakage of the electrode can be suppressed when mounting the driver IC.

By forming the electrode on the convex surface side of the substrate, a compression pressure is applied to the electrode (ITO electrode in this example) when the substrate is flat. Even if the electrode, pushed by the bump of the driver IC, deforms when mounting the driver IC onto the connection portion of the substrate, this deformation acts to release or reduce the compression stress. Thereby, the breakage of the electrode can be suppressed.

[21] The driver ICs may be mounted on the neighboring two connection portions of the same extending direction, for example, such that the driver IC mounted on one of the connection portions overlap with the driver IC mounted on the other connection portion.

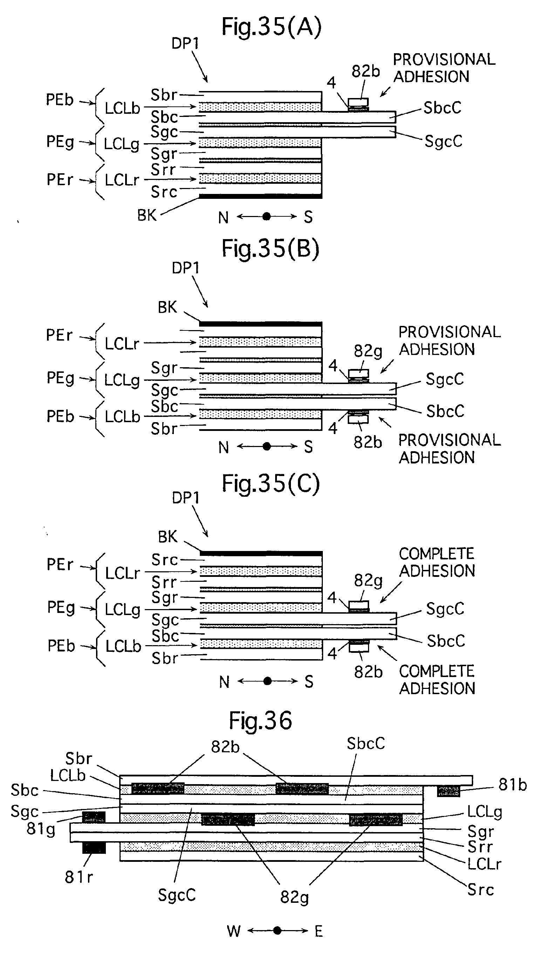

This mounting of the driver ICs in the overlapping positions may be performed as follows. Referring to Figs. 35(A) to 35(C), description will be given on the manner of mounting the driver ICs on the connection portions SbcC and SgcC of the same extending direction.

First, the ACF 4 is provisionally adhered to the electrode on the connection portion SbcC, and the driver IC 82b is provisionally adhered thereto (see Fig. 35(A)). The provisional adhesion of the driver IC 82b may be performed by applying a heat and a pressure smaller than those applied for the complete or full adhesion. The provisional adhesion of the driver IC may be performed with a heat at about 80±10°C and a pressure of about 1 MPa for 5 seconds, although these values depend on the kind of used ACF.

Then, the ACF 4 is provisionally adhered onto the electrode on the other connection portion SgcC, and the driver IC 82g is provisionally adhered thereto (see Fig. 35(B)). The provisional adhesion of the driver IC 82g may be performed similarly to the above.

After performing the provisional adhesion of the driver IC to each connection portion, the driver ICs 82b and 82g on these connection portions are completely adhered at the same time (see Fig. 35(C)). This complete adhesion is performed, for example, by applying a heat of about 150±10°C and a pressure of about 2 MPa for 10 seconds.

By the above manner, the driver ICs can be efficiently mounted.

[22] For mounting the driver ICs at the overlapping positions on the two extending portions of the same extending direction, the driver IC may be completely adhered to one of the connection portions (first complete adhesion), and thereafter the driver IC may be completely adhered to the other connection portion (second complete adhesion), in which case the following disadvantages sometimes arise.

Since the two driver ICs are mounted at the overlapping positions, the heat and pressure applied for the second complete adhesion are sometimes applied to the driver IC and the ACF of the first complete adhesion.

As a result, the pressure may be applied to the conductive particles of the ACF, which was used for the first complete adhesion, for an excessively long time so that the conductive particles may collapse. If the conductive particles collapse, electrical connection failure (conduction failure) is liable to occur.

Further, the heat applied for the second complete adhesion may change the state of the ACF between the substrate and the driver IC of the first complete adhesion so that the position of the driver IC of the first complete adhesion may change.

In particular, the above disadvantage is liable to occur if the binder resin of the ACF is the thermoplastic resin.

The above disadvantage can be prevented by simultaneously performing complete adhesion of the driver ICs at the overlapping positions, as already described in the above item [21].

[23] For precisely mounting the driver IC with the ACF, it is extremely preferable to keep precisely the parallelism between a pressure-bonding head and the pressure-bonding base member to be arranged on the side opposite to the mounting surface of the substrate connection portion.

It may be difficult to keep the intended parallelism between the pressure-bonding head and the pressure-bonding base member if, as described in the foregoing item [21], the driver ICs are mounted at the overlapping positions on the two connection portions of the same extending direction. If the mounting of the driver IC is performed while the parallelism is not kept between the pressure-bonding head and the pressure-bonding base member, conduction failure and/or electrode breakage are liable to occur.

For suppressing the above disadvantages, the driver elements may be mounted at the positions, which do not overlap with each other, on the two extending portions of the same extending direction, as shown in Fig. 36.

In Fig. 36, the driver IC 82b mounted on the connection portion SbcC is disposed at the position not overlapping with the driver IC 82g on the connection portion SgcC extending in the same extending direction as the connection portion SbcC. Therefore, mounting of the driver IC on each connection portion can be performed without interposing the ACF and the driver IC which are already mounted, and each driver IC can be precisely mounted.

For mounting the driver IC at the non-overlapping positions, the electrode patterns for the respective connection portions may be appropriately formed for allowing such mounting.

[24] The following disadvantage may occur if the mounting of the driver IC and the connection of the junction substrate are performed after forming each panel element and before overlaying the panel elements.

If the driver IC and/or the junction substrate are mounted or connected before overlaying the panel elements, it is difficult to overlay the panel elements while uniformly curving the panel element as shown in Fig. 18. In this case, bubbles are liable to remain between the panel elements, resulting in deterioration of the display quality.

If performing mounting of the driver IC and connecting of the junction substrate after the overlaying step, the driver IC and the junction substrate are not connected to each panel element during the overlaying of the panel elements so that the panel elements can be adhered while uniformly curving the panel element. Thereby, the panel elements can be overlaid while suppressing remaining of bubbles between the panel elements as already described.

[25] In the multi-layer LCD panel DPI shown in Fig. 6, mounting of the driver ICs to the respective connection portions and the connection of the junction substrates to the respective connection portions may be performed in any order.

The step of folding the junction substrate toward the back side of the multi-layer display panel may be performed, e.g., after the mounting of the driver IC and the connection of the junction substrate. The junction substrate may be folded toward the back side every time the junction substrate is connected.

[26] In the multi-layer LCD panel DP4 shown in Fig. 11, the connection of the driver IC carrier substrate to the panel element substrate may be performed similarly to the connection of the junction substrate described above.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A multi-layer display panel comprising:
first, second and third panel elements layered together, wherein
each of the first, second and third panel elements has first and second substrates opposed to each other;
a column electrode is formed on an electrode formation surface of the first substrate of each of the first, second and third panel elements, the electrode formation surface of the first substrate of the panel element being opposed to the second substrate of the same panel element;
a row electrode is formed on an electrode formation surface of the second substrate of each of the first, second and third panel elements, the electrode formation surface of the second substrate of the panel element being opposed to the first substrate of the same panel element;
the first substrate of each of the first, second and third panel elements has an overlap portion overlapping with the other five substrates, and a connection portion extending from the overlap portion and used for connecting the column electrode on the first substrate to a driver element;
the second substrate of each of the first, second and third panel elements has an overlap portion overlapping with the other five substrates, and a connection portion extending from the overlap portion and used for connecting the row electrode on the second substrate to a driver element;
the first, second and third panel elements are overlaid together to locate
the first substrate of the first panel element,
the second substrate of the first panel element,
the second substrate of the second panel element,
the first substrate of the second panel element,
the first substrate of the third panel element and
the second substrate of the third panel element in this order;
an extending direction of the connection portion of the second substrate of the first panel element is same as an extending direction of the connection portion of the second substrate of the second panel element, with respect to a center defined by a lap-over portion where the first, second and third panel elements are overlapping to each other;
an extending direction of the connection portion of the first substrate of the second panel element is same as an extending direction of the connection portion of the first substrate of the third panel element, with respect to the center defined by the lap-over portion;
with respect to the center defined by the lap-over portion,
an extending direction of the connection portion of the first substrate of the first panel element,
the extending direction of the connection portion of the second substrate of the first panel element,
the extending direction of the connection portion of the first substrate of the second panel element and
an extending direction of the connection portion of the second substrate of the third panel element are angularly shifted in this order by 90 degrees.

2. A multi-layer display panel comprising:
first and second panel elements layered together, wherein
each of the first and second panel elements has first and second substrates opposed to each other;
a column electrode is formed on an electrode formation surface of the first substrate of each of the first and second panel elements, the electrode formation surface of the first substrate of the panel element being opposed to the second substrate of the same panel element;
a row electrode is formed on an electrode formation surface of the second substrate of each of the first and second panel elements, the electrode formation surface of the second substrate of the panel element being opposed to the first substrate of the same panel element;
the first substrate of each of the first and second panel elements has an overlap portion overlapping with the other three substrates, and a connection portion extending from the overlap portion and used for connecting the column electrode on the first substrate to a driver element;
the second substrate of each of the first and second panel elements has an overlap portion overlapping with the other three substrates, and a connection portion extending from the overlap portion and used for connecting the row electrode on the second substrate to a driver element;
each of the substrate, arranged at inner side, of the first panel element and the substrate, arranged at inner side, of the second panel element is the first substrate provided with the column electrode, or is the second substrate provided with the row electrode;
an extending direction of the connection portion of the substrate, arranged at inner side, of the first panel element is same as an extending direction of the connection portion of the substrate, arranged at inner side, of the second panel element, with respect to a center defined by a lap-over portion where the first and second panel elements are overlapping to each other; and
with respect to the center defined by the lap-over portion,
an extending direction of the connection portion of the substrate, arranged at outer side, of the first panel element,
the extending direction of the connection portion of the substrate, arranged at inner side, of the first panel element, and
an extending direction of the connection portion of the substrate, arranged at outer side, of the second panel element are angularly shifted in this order by 90 degrees.

3. A multi-layer display panel comprising:
first and second panel elements layered together, wherein
each of the first and second panel elements has first and second substrates opposed to each other;
a column electrode is formed on an electrode formation surface of the first substrate of each of the first and second panel elements, the electrode formation surface of the first substrate of the panel element being opposed to the second substrate of the same panel element;
a row electrode is formed on an electrode formation surface of the second substrate of each of the first and second panel elements, the electrode formation surface of the second substrate of the panel element being opposed to the first substrate of the same panel element;
the first substrate of each of the first and second panel elements has an overlap portion overlapping with the other three substrates, and a connection portion extending from the overlap portion and used for connecting the column electrode on the first substrate to a driver element;
the second substrate of each of the first and second panel elements has an overlap portion overlapping with the other three substrates, and a connection portion extending from the overlap portion and used for connecting the row electrode on the second substrate to a driver element; and
with respect to a center defined by a lap-over portion where the first and second panel elements are overlapping to each other,
an extending direction of the connection portion of the first substrate of the first panel element,
an extending direction of the connection portion of the second substrate of the first panel element,
an extending direction of the connection portion of the first substrate of the second panel element and
an extending direction of the connection portion of the second substrate of the second panel element are angularly shifted by 90 degrees in a predetermined order.

4. The multi-layer display panel according to any one of claims 1 to 3, wherein
at least a portion of the electrode formation surface of the connection portion of each of the first and second substrates of each of the panel elements is exposed.

5. The multi-layer display panel according to claim 1 or 2, wherein
the connection portions, extending in the same extending direction, of the neighboring two substrates of the neighboring two panel elements have same width in the extending direction thereof.

6. The multi-layer display panel according to any one of claims 1 to 5, wherein
at least the overlap portions of the neighboring two substrates of the neighboring two panel elements are adhered together.

7. The multi-layer display panel according to claim 1 or 2, wherein
the overlap portions of the neighboring two substrates of the neighboring two panel elements are adhered together, and
the connection portions, extending in the same extending direction, of the neighboring two substrates of the neighboring two panel elements are adhered together.

8. The multi-layer display panel according to any one of claims 1 to 7, wherein
the first substrate is a resin film substrate having a curling property, and the column electrode is formed on a convex surface side of the resin film substrate as the first substrate, the convex surface side of the resin film substrate as the first substrate being formed when the resin film substrate as the first substrate is curved by the curling property; and
the second substrate is a resin film substrate having a curling property, and the row electrode is formed on a convex surface side of the resin film substrate as the second substrate, the convex surface side of the resin film substrate as the second substrate being formed when the resin film substrate as the second substrate is curved by the curling property.

9. The multi-layer display panel according to any one of claims 1 to 8, wherein
the driver element is mounted on the connection portion of at least one of the substrates, respectively.

10. The multi-layer display panel according to claim 1 or 2, wherein
the driver element is mounted on each of the connection portions, extending in the same extending direction, of the neighboring two substrates of the neighboring two panel elements, and
the driver element mounted on one of the connection portions, extending in the same extending direction, of the neighboring two substrates of the neighboring two panel elements is located in a position not overlapping with the driver element mounted on the other connection portion.

11. The multi-layer display panel according to claim 1 or 2, wherein
the driver element is mounted on each of the connection portions, extending in the same extending direction, of the neighboring two substrates of the neighboring two panel elements, and
the driver element mounted on one of the connection portions, extending in the same extending direction, of the neighboring two substrates of the neighboring two panel elements is located in a position overlapping with the driver element mounted on the other connection portion.

12. The multi-layer display panel according to any one of claims 1 to 11, wherein
a junction substrate is connected to the connection portion of at least one of the substrates of at least one of the panel elements for connecting the driver element to a control portion of a driver device, respectively.

13. The multi-layer display panel according to claim 12, wherein
the junction substrate is a flexible substrate, and is folded toward a back side, opposite to an observation side, of the multi-layer display panel.

14. The multi-layer display panel according to any one of claims 1 to 8, wherein
a driver element carrier substrate carrying the driver element is connected to the connection portion of at least one of the substrates of at least one of the panel elements, respectively.

15. The multi-layer display panel according to claim 14, wherein
the driver element carrier substrate is a flexible substrate, and is folded toward a back side, opposite to an observation side, of the multi-layer display panel.

16. A method of manufacturing a multi-layer display panel, comprising:
a preparing step of preparing a layered body including a plurality of panel elements layered together,
each of the panel elements of the layered body prepared in the preparing step being including
a display region portion and
at least one connection portion extending from the display region portion and having an external connection electrode formation surface provided with an external connection electrode,
the display region portions of the respective panel elements being overlapping with each other in the layered body prepared in the preparing step,
the external connection electrode formation surface of the connection portion of each panel element not being hidden by any the other connection portion in the layered body prepared in the preparing step; and
a connecting step of connecting a wiring substrate provided with an electrode to the connection portion of each of the panel elements, respectively, for connecting the electrode of the wiring substrate to the external connection electrode of the connection portion of the panel element, the connecting step being performed after the preparing step.

17. The method of manufacturing the multi-layer display panel according to claim 16, wherein
the connecting step includes:
a holding step of holding at least one of the connection portions from a back side, opposite to the external connection electrode formation surface, of the connection portion; and
a step of pushing the wiring substrate toward the held connection portion.

18. The method of manufacturing the multi-layer display panel according to claim 17, wherein
holding of the connection portion in the holding step of the connecting step is performed by sucking the back side of the connection portion toward a holding member.

19. The method of manufacturing the multi-layer display panel according to any one of claims 16 to 18, wherein
the connecting step includes:
a step of performing positioning between the external connection electrode of the connection portion and the electrode of the wiring substrate by adjusting a positional relationship between a mark formed on the connection portion and a mark formed on the wiring substrate; and
a step of connecting the external connection electrode of the positioned connection portion to the electrode of the positioned wiring substrate.

20. The method of manufacturing the multi-layer display panel according to any one of claims 16 to 19, wherein
the electrode of the wiring substrate is connected to the external connection electrode of the connection portion of the panel element with an anisotropic conductive film in the connecting step.

21. The method of manufacturing the multi-layer display panel according to any one of claims 16 to 20, further comprising:
an attaching step performed after the preparing step for attaching a driver IC to the external connection electrode of the connection portion of each of the panel elements, respectively.

22. The method of manufacturing the multi-layer display panel according to claim 21, wherein
the attaching step includes:
a holding step of holding at least one of the connection portions from a back side, opposite to the external connection electrode formation surface, of the connection portion; and
a step of pushing the driver IC toward the held connection portion.

23. The method of manufacturing the multi-layer display panel according to claim 22, wherein
holding of the connection portion in the holding step of the attaching step is performed by sucking the back side of the connection portion toward a holding member.

24. The method of manufacturing the multi-layer display panel according to any one of claims 21 to 23, wherein
the attaching step includes:
a step of performing positioning between the external connection electrode of the connection portion and the driver IC by adjusting a positional relationship between a mark formed on the connection portion and a mark formed on the driver IC; and
a step of attaching the positioned the driver IC to the external connection electrode of the positioned connection portion.

25. The method of manufacturing the multi-layer display panel according to any one of claims 21 to 24, wherein
the driver IC is attached to the external connection electrode of the connection portion of the panel element with an anisotropic conductive film in the attaching step.

26. A method of manufacturing a multi-layer display panel including a plurality of panel elements layered together, comprising:
a panel element forming step of forming each of the panel elements using a first substrate provided with a column electrode at an electrode formation surface and a second substrate provided with a row electrode at an electrode formation surface;
an overlaying step of overlaying the panel elements formed in the panel element forming step; and
an after cut step of removing at least one unnecessary portion from each of the first and second substrates of each of the overlaid panel elements, wherein
in the panel element forming step, as each of the first substrates, a substrate having an overlap portion finally overlapping with the other substrates, and four extending portions extending from the overlap portion in four directions angularly shifted by 90 degrees is used for forming the panel element,
in the panel element forming step, as each of the second substrates, a substrate having an overlap portion finally overlapping with the other substrates, and four extending portions extending from the overlap portion in four directions angularly shifted by 90 degrees is used for forming the panel element,
the after cut step is executed to remove at least one extending portion, as the unnecessary portion, among the four extending portions of the first substrate except for the extending portion to be used as a connection portion used for connecting the column electrode on the first substrate to a driver element, and
the after cut step is also executed to remove at least one extending portion, as the unnecessary portion, among the four extending portions of the second substrate except for the extending portion to be used as a connection portion used for connecting the row electrode on the second substrate to a driver element.

27. The method of manufacturing the multi-layer display panel according to claim 26, wherein
the overlaying step is executed to overlay the two or three panel elements, each formed in the panel element forming step, together, and
the after cut step is executed to expose the electrode formation surface of the connection portion of each the substrate of each the panel element.

28. The method of manufacturing the multi-layer display panel according to claim 26 or 27, further comprising:
a half cut step, performed before the after cut step, for effecting a half cut along a boundary between a portion, to be removed in the after cut step, of the substrate and a portion, to be left in the after cut step, of the substrate.

29. The method of manufacturing the multi-layer display panel according to claim 28, wherein
the half cut step is performed before the overlaying step.

30. The method of manufacturing the multi-layer display panel according to claim 28 or 29, wherein
the half cut in the half cut step is effected on an exposure surface, to be exposed, of the substrate.

31. The method of manufacturing the multi-layer display panel according to any one of claims 26 to 30, wherein
each of the first substrates used in the panel element forming step is configured such that the extending portion, spaced from the extending portion used as the connection portion with the overlap portion therebetween, can be also utilized as a connection portion used for connecting the column electrode on the first substrate to a driver element, and
each of the second substrates used in the panel element forming step is configured such that the extending portion, spaced from the extending portion used as the connection portion with the overlap portion therebetween, can be also utilized as a connection portion for connecting the row electrode on the second substrate to a driver element.

32. The method of manufacturing the multi-layer display panel according to claim 31, wherein
all the first and second substrates used in the panel element forming step are rectangular and have same sizes.

33. The method of manufacturing the multi-layer display panel according to claim 32, wherein
all the first substrates used in the panel element forming step are provided with the column electrodes of same pattern, and
all the second substrates used in the panel element forming step are provided with the row electrodes of same pattern.

34. The method of manufacturing the multi-layer display panel according to any one of claims 26 to 33, further comprising:
a mounting step of mounting the driver element onto the connection portion of the substrate for connecting the driver element to the electrode on the substrate.

35. The method of manufacturing the multi-layer display panel according to claim 34, wherein
the mounting step is performed after the overlaying step.

36. The method of manufacturing the multi-layer display panel according to any one of claims 26 to 35, further comprising:
a junction substrate connecting step of connecting a junction substrate to the connection portion of the substrate for connecting the driver element to a control portion of a driver device.

37. The method of manufacturing the multi-layer display panel according to claim 36, wherein
the junction substrate connecting step is performed after the overlaying step.

38. The method of manufacturing the multi-layer display panel according to any one of claims 26 to 33, further comprising:
a driver element carrier substrate connecting step of connecting a driver element carrier substrate carrying the driver element to the connection portion of the substrate of the panel element.

39. The method of manufacturing the multi-layer display panel according to claim 38, wherein
the driver element carrier substrate connecting step is performed after the overlaying step.

40. A holding device for holding a multi-layer display panel including a plurality of panel elements layered together,
each of the panel elements having a pair of substrates,
the multi-layer display panel having a lap-over portion where the panel elements are overlapping to each other and a projected portion, projected from the lap-over portion, of the substrate of the panel element,
the holding device used when mounting a driver element onto the projected portion of the substrate of the panel element or when connecting a third substrate to the projected portion of the substrate of the panel element,
the holding device comprising:
a holding jig having a first surface for laying the projected portion of the substrate of the panel element thereon, a second surface for laying the lap-over portion of the multi-layer display panel thereon, and a stepped portion formed between the first and second surfaces; wherein
the stepped portion has a height equal to or larger than a maximum height, including a manufacturing error of the multi-layer display panel, between a surface, directly laid on the first surface of the holding jig, of the multi-layer display panel and a surface, directly laid on the second surface of the holding jig, of the multi-layer display panel.

41. The holding device according to claim 40, further comprising:
an suction device for sucking the surface, directly laid on the first surface of the holding jig, of the multi-layer display panel toward the first surface of the holding jig.

42. The holding device according to claim 40 or 41, further comprising:
a pushing member for pushing the projected portion, to be laid on the first surface of the holding jig, of the substrate toward the first surface of the holding jig.

43. The holding device according to claim 42, wherein
the pushing member is provided with a window for exposing a driver element mounting region, onto which the driver element is to be mounted, of the projected portion of the substrate of the panel element to be laid on the first surface of the holding jig.

44. The holding device according to claim 42 or 43, wherein
the pushing member is provided with a window for exposing a connection region, to which the third substrate is to be connected, of the projected portion of the substrate of the panel element to be laid on the first surface of the holding jig.

45. A pressure-bonding jig to be used for mounting a driver element having a bump onto a substrate, comprising:
a pressure-bonding base member to be disposed at a back side of the substrate, the back side being opposite to a side, onto which the driver element is to be mounted, of the substrate, wherein
the pressure-bonding base member has a raised portion in a position to be opposed to the bump of the driver element.

46. The pressure-bonding jig according to claim 45, wherein
an outer periphery of the raised portion of the pressure-bonding base member is smaller than an outer periphery of the bump of the driver element.

47. A method of mounting driver elements in overlapping positions on two substrate surfaces, respectively, comprising:
a provisional adhering step of provisionally adhering at least one of the driver elements to the substrate surface; and
a complete adhering step of simultaneously and completely adhering the two driver elements to the substrate surfaces.

48. The driver element mounting method according to claim 47, wherein
each of the provisional adhering step and the full adhering step is performed by disposing an anisotropic conductive adhesive between the driver element and the substrate surface, and applying a heat and a pressure to the anisotropic conductive adhesive, and
the heat and the pressure applied in the provisional adhering step are smaller than the heat and the pressure applied in the complete adhering step.
